# EUROPÄISCHE PATENTSCHRIFT

(11) **EP 2 720 108 B1**
(45) Veröffentlichungstag und Bekanntmachung des Hinweises auf die Patenterteilung: **21.11.2018**
(21) Anmeldenummer: 12796112.6
(22) Anmeldetag: 05.06.2012
(51) Int. Cl.: G05G 1/46, B60K 26/02, G05G 1/36, G05G 1/44, G05G 1/30

(54) **VORRICHTUNG ZUR BEHEBUNG VON BETRIEBSFEHLERN EINES BESCHLEUNIGUNGSPEDALS**
ACCELERATOR PEDAL OPERATION ERROR RESOLUTION DEVICE
DISPOSITIF DE RÉSOLUTION DE L'ERREUR DE MAN UVRE DE LA PÉDALE D'ACCÉLÉRATEUR

(30) Priorität: 10.06.2011 JP 2011130715
(43) Veröffentlichungstag der Anmeldung: 16.04.2014
(73) Patentinhaber: Nanki Kogyo Kabushiki Gaisya, Saitama 3320002 (JP)
(72) Erfinder: Minami, Heiji, Saitama 334-0062 (JP)
(74) Vertreter: Patentanwälte Walther Hinz Bayer PartGmbB
(86) Internationale Anmeldenummer: PCT/JP2012/064421
(87) Internationale Veröffentlichungsnummer: WO 2012/169477

(56) Entgegenhaltungen:
- WO-A1-2005/058631
- JP-A- H05 185 862
- JP-A- 2002 178 782
- JP-A- 2002 287 839
- JP-A- 2003 195 962
- JP-A- 2004 210 100

## Beschreibung

### Technisches Gebiet

Die Erfindung betrifft eine Einrichtung mit der Bremsfunktion zusätzlich am Gaspedal, mit der kein Unfall trotz eines Betriebsfehlers beim Fahren eines Fahrzeugs und des verursachten falschen Tretens der Bremse und des Gaspedals passieren wird, insbesondere eine Einrichtung zur Lösung einer fehlerhaften Betätigung des Gaspedals, die nur mit dem Gaspedal auch funktionieren und den Unfall wegen eines falschen Betriebs beseitigen kann.

### Stand der Technik

Beim Fahren eines Fahrzeugs erfolgt das Fahren durch abwechselndes Treten des Gaspedals und des Bremspedals, aber beim falschen Treten des Pedals wird ein schwerer Unfall passieren, wonach ist ein Fahren ohne falsches Treten des Pedals benötigt.

Jedoch ist die Situation vorhanden, dass der Fahrer aus Überraschungen wegen falschen Betriebs des falschen Tretens des Gaspedals das Gaspedal weiter tritt, wonach wird eine Einrichtung zur Lösung vom verschiedenen falschen Treten des Gaspedals wegen fehlerhaften Betriebs bereitgestellt. Die bestehenden Einrichtungen zur Lösung einer fehlerhaften Betätigung des Gaspedals haben eine Struktur wie im Patentdokument 1 dargestellt.
Patentdokument 1: Japanische Offenlegungsschrift Nr. 5-185862 (Seite 4 bis 5, Figur 1 bis 2)

Die Einrichtung zur Lösung einer fehlerhaften Betätigung des Gaspedals gemäß dem Patentdokument 1 weist auf: eine Übertragungskomponente für Tretkraft des Gaspedals, die am vorderen Endabschnitt des Stange, an der das Gaspedal angeordnet ist, angeordnet ist, wobei an der Übertragungskomponente für Tretkraft des Gaspedals ein Koordinierungsmechanismus des Gaspedals angeordnet ist, der mit der den Gaspedaldraht verriegelnden Drahttreibplatte koordiniert oder die Koordinierung löst; einen Bremsarm, wobei ein Bremspedal an einem Endabschnitt des Bremsarms geklebt ist, und wobei eine Achse am anderen Endabschnitt montiert ist, und wobei der Bremsvorgang durch eine Drehbewegung vorgenommen wird; einen Koordinierungsmechanismus des Pedals, der einerseits den Bremsarm und die Übertragungskomponente für Tretkraft des Gaspedals verbindet und andererseits ab der Lösung der Übertragung der Tretkraft die weitere Tretkraft des Gaspedals ins Treten des Bremspedals umwandelt.

Der Koordinierungsmechanismus des Pedals der bestehenden Einrichtung zur Lösung einer fehlerhaften Betätigung des Gaspedals weist einen Umwandlungsmechanismus der Bewegungen, der die Schwenkbewegungen des Gaspedals ungefähr an der zentralen Position der Gaspedalstange in die Drehbewegung umwandelt, einen Mechanismus, der vom Umwandlungsmechanismus der Bewegungen bei größerer Menge des Tretens als die an der festgelegten Position des Gaspedals betrieben wird, und einen Bremsarm auf, der mit dem Mechanismus verbunden ist.

Wenn das Gaspedal bei der bestehenden Einrichtung zur Lösung einer fehlerhaften Betätigung des Gaspedals bis zur größeren Position als der festgelegten Position getreten wird, wird der Koordinierungsmechanismus des Gaspedals gelöst und wird somit das Ziehen für den Gaspedaldraht gelöst, und durch den Umwandlungsmechanismus der Bewegungen wird das Bremspedal gering getreten.

Wonach hat die bestehende Einrichtung zur Lösung einer fehlerhaften Betätigung des Gaspedals folgende Effekte: wenn das Gaspedal weiter als festgelegte Position getreten wird, ist keine Betätigung nach dem ursprünglichen Zustand des Tretens des Gaspedals benötigt, und dadurch wird das Gaspedal zurück zum Zustand der Drehung niedriger Geschwindigkeit zurückkehren, und der Bremswirkung wird erreicht.

### Inhalt der vorliegenden Erfindung

### Das zu lösende Problem der vorliegenden Erfindung:

Jedoch bei der bestehenden Einrichtung zur Lösung einer fehlerhaften Betätigung des Gaspedals wird das Bremspedal durch die Bewegung der Betätigungsstange, die an generell zentraler Position der den Umwandlungsmechanismus der Bewegungen ausbildenden Gaspedalstange befestigt ist, und die Funktion des am Bremsarm angeordneten Antriebsrings sich bewegen, deshalb ist die Bewegungsstrecke der Betätigungsstange relativ kurz, und der Bremswirkung ist sehr gering.

Nämlich ist die bestehende Einrichtung zur Lösung einer fehlerhaften Betätigung des Gaspedals nur eine Struktur, die in extrem anfänglicher Stufe des Passierens der fehlerhaften Betätigung des Gaspedals die fehlerhafte Betätigung vermeidet, die Struktur konzentriert sich auf die falsche Betätigung des Gaspedals, und bei der Vermeidung der fehlerhaften Betätigung wird die anfängliche Bremsbetätigung auch vorgenommen, dann durch die ursprüngliche Bremsbetätigung wird der Bremsvorgang vorgenommen.

Die Verzögerung und die Bremsung können somit nicht vollständig vorgenommen werden, wenn der Fahrer aus großer Überraschung das Bremspedal nicht abwechselnd treten kann.

Die vorliegende Erfindung wird bereitgestellt, um die obigen Probleme der bestehenden Einrichtung zur Lösung einer fehlerhaften Betätigung des Gaspedals zu lösen, der Zweck der vorliegenden Erfindung ist, eine Einrichtung zur Lösung einer fehlerhaften Betätigung des Gaspedals bereitzustellen, mit der Einrichtung zur Lösung einer fehlerhaften Betätigung des Gaspedals kann die Bremsung durch Treten des Gaspedals auch erreicht werden und die Bremskontrolle kann zuverlässig vorgenommen werden, auch wenn der Fahrer aus großer Überraschung das Bremspedal nicht abwechselnd treten kann.

Darüber hinaus ist der Zweck der vorliegenden Erfindung, eine Einrichtung zur Lösung einer fehlerhaften Betätigung des Gaspedals bereitzustellen, nur mit der Tretbetätigung des Gaspedals kann die vorliegende Einrichtung zur Lösung einer fehlerhaften Betätigung des Gaspedals auch die Fahrbetätigung des Fahrzeugs vornehmen, ohne abwechselnde Betätigung kann die übliche ehemalige Betätigung auch vorgenommen werden. Wenn durch Treten des Gaspedals der Start, die Beschleunigung, die Bremsung und der Stopp vorgenommen werden, können die Bremsung oder der Stopp durch die Beschleunigung der Tretkraft gemäß dem Zweck des Fahrers durch weiteres Treten des Pedals vorgenommen werden. Bei der Lösung der Tretkraft kann das Gaspedal zum Ausgangszustand zurückkehren.

Darüber hinaus ist der andere Zweck der vorliegenden Erfindung, eine Einrichtung zur Lösung einer fehlerhaften Betätigung des Gaspedals bereitzustellen, wenn der Fahrer stoppen will, aber das Gaspedal falsch tritt, kann das Fahrzeug mit der vorliegenden Einrichtung zur Lösung einer fehlerhaften Betätigung des Gaspedals auch durch abwechselndes Treten des Bremspedals möglichst schnell und zuverlässig gestoppt werden.

### Technisches Programm zur Lösung der Probleme:

Um die obigen Probleme zu lösen, weist die Einrichtung zur Lösung einer fehlerhaften Betätigung des Gaspedals gemäß der vorliegenden Erfindung auf: einen Bremsarm, wobei ein Bremspedal an einem Endabschnitt des Bremsarms geklebt ist, und wobei der andere Endabschnitt an der Achse montiert ist, und wobei der Bremsvorgang durch eine Drehbewegung vorgenommen wird; eine Übertragungskomponente für Tretkraft des Gaspedals, wobei das Gaspedal an einem Endabschnitt der Übertragungskomponente geklebt ist, wobei ein Schwenkpunktstift lose in den Mittenabschnitt gesteckt ist, und wobei ein Gaspedaldraht am anderen Endabschnitt verriegelt ist; einen Koordinierungsmechanismus des Gaspedals, der einen Teil der Übertragungskomponente für Tretkraft des Gaspedals ausbildet, um die Tretkraft an den Gaspedaldraht zu übertragen oder die Übertragung zu lösen; einen Koordinierungsmechanismus des Pedals, der ab der Lösung der Übertragung der Tretkraft die weitere Tretkraft des Gaspedals ins Treten des Bremspedals umwandelt. Die Einrichtung zur Lösung einer fehlerhaften Betätigung des Gaspedals ist dadurch gekennzeichnet, dass der Bremsarm aufweist: einen Metallbeschlag für Montage, der sich von dem gekrümmten Abschnitt zur Seite der Übertragungskomponente für Tretkraft des Gaspedals erstreckt; eine Tragstruktur, die am Metallbeschlag für Montage befestigt ist, und wobei ein hängender Stift querend am Oberteil der Tragstruktur montiert ist; eine Hängestruktur für Umwandlung der Tretkraft, die drehbar am hängenden Stift aufgehängt werden kann, wobei ein Schwenkpunktstift am vorstehenden Abschnitt der Pedalseite am unteren Ende der Hängestruktur querend angeordnet ist; wobei die Übertragungskomponente für Tretkraft des Gaspedals aufweist: ein erstes aufrechtes Element, das drehbar am Schwenkpunktstift montiert werden kann, wobei eine Rückstellfeder am ersten aufrechten Element angeordnet ist, mit der das Gaspedal bei der Befreiung des Gaspedals zurück zur Ausgangsposition zurückkehren kann; ein zweites aufrechtes Element, dessen Basisende drehbar auf der zum Pedal gegenteiligen Seite des unteren Endabschnittes der Hängestruktur für Umwandlung der Tretkraft montiert werden kann, wobei das Gaspedaldraht am oberen Ende des zweiten aufrechten Elements verriegelt ist; und wobei der Koordinierungsmechanismus des Gaspedals aufweist: ein Koordinierungselement des Gaspedals, das im Mittenabschnitt des zweiten aufrechten Elements angeordnet ist; ein bewegliches Element, das am ersten aufrechten Element angeordnet ist, das dem Drehwinkel des ersten aufrechten Elements entsprechend ins Koordinierungselement des Gaspedals greift oder vom Koordinierungselement gelöst wird; und wobei der Koordinierungsmechanismus des Pedals aufweist: ein Führungselement, das die Hängestruktur für Umwandlung der Tretkraft durchsteckt, wobei ein Ende des Führungselements mit der Wandstruktur berührend verbunden ist; ein koordinierendes Verbindungselement, das mit dem hängenden Stift und dem Oberteil des ersten aufrechten Elements verbunden ist, damit die beiden dem Drehwinkel des ersten aufrechten Elements entsprechend ineinander greifen; einen umwandelnden Metallbeschlag, der auf dem Lager des Mittenabschnittes der Hängestruktur für Umwandlung der Tretkraft stützt; ein Drehelement für umwandelnden Metallbeschlag, der berührend bei der Drehung des koordinierenden Verbindungselements mit dem umwandelnden Metallbeschlag verbunden ist, so dass der umwandelnden Metallbeschlag dreht; einen verriegelnden Metallbeschlag, der drehbar am Umwandlungsmetallelement aufhängen kann, wobei der untere Klemmabschnitt des verriegelnden Metallbeschlags in den Kerbenabschnitt des Führungselementes greift oder vom Kerbenabschnitt gelöst wird.

Der Metallbeschlag für Montage und die Tragstruktur stützen alle Elemente auf der Seite der Übertragungskomponente für Tretkraft des Gaspedals. Die Hängestruktur für Umwandlung der Tretkraft und die Tragstruktur sind nebeneinander angeordnet, und die Seitenfläche ist im Wesentlichen umgekehrt T-förmig oder umgekehrt L-förmig, der Schwenkpunktstift ist im losen Greifen in den vorstehenden Abschnitt auf der Seite des Pedals am unteren Ende der Hängestruktur gesteckt, und auf der zum Pedal gegenseitigen Seite ist ein Angelpunktstift des Gaspedals, der auf dem Basisende des zweiten aufrechten Elementes vorstehend angeordnet ist, im losen Greifen gesteckt.

Das erste aufrechte Element ist ein Teil des Schwenkelements, wobei am Endabschnitt des Schwenkelements das Gaspedal geklebt ist und die Seitenfläche des Schwenkelements eine Form von " 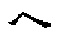 " hat, mit dem Schwenkpunktstift kann der gekrümmte Abschnitt des Schwenkelements drehend geklemmt werden. Wenn das Führungselement und der mit ihm berührend verbundene verriegelnde Metallbeschlag am Kerbenabschnitt einander greifen, werden die Bewegungen des umwandelnden Metallbeschlags, der Hängestruktur für Umwandlung der Tretkraft und der Tragstruktur beim Treten des Gaspedals unterdrückt, und die Bewegung des Bremsarms wird auch unterdrückt. Ferner wenn der verriegelnde Metallbeschlag aus dem Kerbenabschnitt gelöst wird, können die Elemente bewegen. Der verriegelnde Metallbeschlag befindet sich auf der Seite der Wandstruktur auf der Rückseite der Hängestruktur für Umwandlung der Tretkraft.

Der umwandelnde Metallbeschlag ist an der Achse befestigt und kann um den Lagerabschnitt der Hängestruktur für Umwandlung der Tretkraft drehen. Beim Treten des Gaspedals sollte das erste aufrechte Element um den Schwenkpunktstift schwenken, aber da die Position des Schwenkpunktstiftes nicht fixiert ist, schiebt die Tretkraft durch den Schwenkpunktstift die Hängestruktur für Umwandlung der Tretkraft zur Seite der Wandstruktur, und die damit verbundene Tragstruktur und der Bremsarm sollten auch um die Achse drehen.

Andererseits ist die Hängestruktur für Umwandlung der Tretkraft mit dem umwandelnden Metallbeschlag und dem verriegelnden Metallbeschlag und dem Führungselement verbunden, die mit dem umwandelnden Metallbeschlag verbunden sind. Wenn das Gaspedal im Zustand, dass der verriegelnde Metallbeschlag und der Kerbenabschnitt des Führungselements einander klemmen, getreten wird, wird die Hängestruktur für Umwandlung der Tretkraft zur Seite der Wandstruktur geschoben und mit dem verriegelnden Metallbeschlag berührend verbunden. Der verriegelnde Metallbeschlag hat dann einen Zustand, dass er vom Kerbenabschnitt und der Hängestruktur für Umwandlung der Tretkraft geklemmt ist. Jetzt steht das Führungselement unter der Belastung in die Richtung der Wandstruktur, aber da das Führungselement mit der Wandstruktur berührend verbunden ist und nicht bewegen kann, wird die Bewegung des verriegelnden Metallbeschlags auch unterdrückt.

Wonach werden die Bewegungen des umwandelnden Metallbeschlags, der Hängestruktur für Umwandlung der Tretkraft, der Tragstruktur und des Bremsarms beim Treten des Gaspedals unterdrückt, die Position des Schwenkpunktstiftes der Struktur tritt in den befestigten Zustand, so dass die Schwenkung des ersten aufrechten Elements um den Schwenkpunktstift realisiert wird.

Durch das Koordinierungselement des Gaspedals und das bewegliche Element als den Koordinierungsmechanismus des Gaspedals dreht das zweite aufrechte Element beim Treten des Gaspedals synchron mit dem ersten aufrechten Element. Wenn die zwei Elemente voneinander gelöst werden, kehrt das zweite aufrechte Element unter der Zugkraft des Gaspedaldrahtes zur Ausgangsposition zurück, und die Energieversorgung hört auf. Darüber hinaus werden die zwei Elemente im üblichen Tretbereich des Gaspedals nicht gelöst, sie werden nur im Bereich nähe zum größten Treten gelöst. Jetzt kehrt der Gaspedaldraht zurück, deshalb können der schnelle Start und die schnelle Beschleunigung unterdrückt werden.

Wenn das Treten des Gaspedals unterbrochen ist, kehrt das das erste aufrechte Element unter der Auswirkung der Rückstellfeder zur Ausgangsposition zurück, jetzt nähern sich das Koordinierungselement des Gaspedals und das bewegliche Element zueinander und dann berühren einander. Wenn die Berührungskraft aufgenommen wird und das bewegliche Element sich bewegt, so dass die beiden ineinander greifen und sich zum Ausgangszustand bewegen.

Andererseits wenn das erste aufrechte Element und das zweite aufrechte Element gelöst werden, schwenkt das erste aufrechte Element beim weiteren Treten des Gaspedals weiter um den Schwenkpunktstift. Andererseits wenn das am oberen Ende des ersten aufrechten Elements angeordnete koordinierende Verbindungselement dreht, ist das Drehungselement des umwandelnden Metallbeschlags berührend mit dem umwandelnden Metallbeschlag verbunden, so dass der umwandelnde Metallbeschlag dreht. Der Zeitpunkt, wann die Drehung anfängt, ist der Zeitpunkt, wann das Koordinierungselement des Gaspedals und das bewegliche Element voneinander gelöst werden.

Wenn der umwandelnde Metallbeschlag und das erste aufrechte Element synchron schwenken, fängt der umwandelnde Metallbeschlag mit der Drehung um den Lagerabschnitt der Hängestruktur für Umwandlung der Tretkraft an, so dass der verriegelnde Metallbeschlag gehoben wird, der am unteren Ende des umwandelnden Metallbeschlags gehängt ist. Jetzt wird der untere Klemmabschnitt des verriegelnden Metallbeschlags vom Kerbenabschnitt des Führungselements gelöst wird. Zu diesem Zeitpunkt verschwindet die Belastung, die auf das Führungselement in die Richtung der Wandstruktur ausgeübt wird.

Wenn das Gaspedal weiter getreten wird, werden die hängenden Stifte synchron zur Drehung des koordinierenden Verbindungselements bewegt, das erste aufrechte Element, die Tragstruktur und der Bremsarm bewegen sich auf die Integrationsweise. Nämlich wird das Pedal weiter getreten, dann wird es die Situation, dass das Bremspedal getreten wird, so dass der Kraft beim Treten des Gaspedals entsprechend das Bremspedal getreten wird und die Bremsung zuverlässig vorgenommen wird.

Das Führungselement verhindert die Bewegungen des ersten aufrechten Elements, des umwandelnden Metallbeschlags, der Hängestruktur für Umwandlung der Tretkraft und der Tragstruktur nicht. Z.B. für die Form des Führungselements wird die Form verwendet, die der Spur der das erste aufrechte Element usw. umgebenden Achse entspricht, oder ein Ende des Führungselements kann der Bewegung vom ersten aufrechten Element usw. entsprechend auf der Oberfläche der Wandstruktur gleiten oder rollen.

Wenn das Treten des Gaspedals unterbrochen ist, kehrt das erste aufrechte Element zur Ausgangsposition zurück, und die Verbindung zwischen dem koordinierenden Verbindungselement und den hängenden Stiften sowie dem Drehungselement des umwandelnden Metallbeschlags wird gelöst, so dass der umwandelnde Metallbeschlag, die Hängestruktur für Umwandlung der Tretkraft, die Tragstruktur, der Bremsarm und der Bremspedal zur Ausgangsposition zurückkehren. Außerdem fällt der verriegelnde Metallbeschlag auch ab, und der untere Klemmabschnitt ist berührend mit dem Kerbenabschnitt des Führungselements verbunden, so dass die Bewegungen von der Hängestruktur für Umwandlung der Tretkraft usw. unterdrückt werden.

Einrichtung zur Lösung einer fehlerhaften Betätigung des Gaspedals nach Anspruch 2, dadurch gekennzeichnet, dass das Führungselement auf der Hängestruktur für Umwandlung der Tretkraft auf die Weise stützt, dass das Führungselement gegenüber der Hängestruktur für Umwandlung der Tretkraft sich bewegen kann, wobei eine Feder, die eine Kraft auf die Seite der Wandstruktur ausübt am Führungselement angeordnet ist, und wobei das Führungselement einen vorderen Endabschnitt aufweist, der berührend mit der Wandstruktur verbunden werden und gleichzeitig sich bewegen kann.

Das Führungselement ist vertikal zur Hängestruktur für Umwandlung der Tretkraft und ist mit Hilfe der elastischen Kraft immer berührend mit der Wandstruktur verbunden. Wenn der verriegelnde Metallbeschlag berührend mit dem Kerbenabschnitt verbunden ist, wird die Betätigung des Führungselements in die Zuwendungsrichtung unterdrückt, aber beim Lösen fängt die Hängestruktur für Umwandlung der Tretkraft mit der Drehung an, und das auf der Hängestruktur für Umwandlung der Tretkraft stützende Führungselement dreht auch, der vordere Endabschnitt des Führungselements kann sich entlang der Wandstruktur bewegen.

Wenn das Treten des Gaspedals unterbrochen wird, kehren die hängenden Stifte unter der Tretkraft zur Ausgangsposition zurück, das Führungselement kehrt auch zur Ausgangsposition zurück, so dass ein Verriegelungszustand gebildet wird.

Einrichtung zur Lösung einer fehlerhaften Betätigung des Gaspedals nach Anspruch 3, dadurch gekennzeichnet, dass der Koordinierungsmechanismus des Gaspedals aufweist: ein Koordinierungselement des Gaspedals, das eine Koordinierungsklaue aufweist, die zur Seite des ersten aufrechten Elements vorsteht; ein bewegliches Element, das einen Verriegelungsstift aufweist, wobei der Verriegelungsstift die in die Richtung der Koordinierungsklaue ausgeübte Kraft aufnimmt und somit der Koordinierungsklaue gegenüber herauskommen und hineingehen kann; einen Pressabschnitt des Verriegelungsstiftes, der dem Drehwinkel des ersten aufrechten Elements entsprechend den Verriegelungsstift drücken und bewegen kann.

Als Verriegelungsstift des beweglichen Elements dienend, hat der Klemmabschnitt des Koordinierungsklaue eine Form, so dass der Klemmabschnitt beim Greifen mit der Koordinierungsklaue und bei der Bewegung an festgelegter Position gelöst werden kann. Wenn der Pressabschnitt des Verriegelungsstiftes mit dem Verriegelungsstift oder dem am Verriegelungsstift befestigten Element berührend verbunden ist, wird der Verriegelungsstift gepresst und geschoben, und beim Lösen kehrt der Verriegelungsstift zur Ausgangsposition zurück.

Wenn das erste aufrechte Element zur Ausgangsposition zurückkehrt, ist der Verriegelungsstift berührend mit der Koordinierungsklaue verbunden, nach dem Untertauchen steht der Verriegelungsstift vor, dann entsteht der Verriegelungszustand.

Einrichtung zur Lösung einer fehlerhaften Betätigung des Gaspedals nach Anspruch 4, dadurch gekennzeichnet, dass der Koordinierungsmechanismus des Pedals aufweist: ein koordinierendes Verbindungselement, das ein ringförmiges Element aufweist, wobei ein Ende des ringförmigen Elements am Verriegelungsstift befestigt ist, und wobei ein Langloch auf der Seite des anderen Endes ausgebildet ist; einen umwandelnden Metallbeschlag, an dessen Oberteil ein Gabelabschnitt als Drehstopper angeordnet ist, wobei der Gabelabschnitt den hängenden Stift aufnimmt und zur Unterdrückung des Drehung des hängenden Stiftes um das Lager dient; ein Drehungselement des umwandelnden Metallbeschlags, mit dem der Bremsstift, der am Mittenabschnitt des umwandelnden Metallbeschlags vorstehend angeordnet ist, durch das Langloch durchgesteckt ist; und wobei das ringförmige Element den Pressabschnitt des Verriegelungsstiftes ausbildet.

Durch Treten des Gaspedal wird die Schwenkung des ersten aufrechten Elements um den Schwenkpunktstift realisiert, wenn das am oberen Ende des ersten aufrechten Elements angeordnete koordinierende Verbindungselement dreht, ist das ringförmige Element als Drehungselement des umwandelnden Metallbeschlags berührend mit dem Bremsstift verbunden, so dass der umwandelnde Metallbeschlag dreht. Wenn das erste aufrechte Element dreht und das Koordinierungselement des Gaspedals und das bewegliche Element gelöst werden, ist eine Innenoberfläche des Langlochs berührend mit dem Bremsstift verbunden. Wenn der berührend verbundene Zustand sich fortsetzt, tritt der Koordinierungsmechanismus des Pedals in Funktion, wenn der berührend verbundene Zustand gelöst wird und die Bremskraft abfällt, wird er danach gelöst.

Wenn der umwandelnde Metallbeschlag und das erste aufrechte Element synchron schwenken, fängt der umwandelnde Metallbeschlag mit der Drehung um den Lagerabschnitt der Hängestruktur für Umwandlung der Tretkraft an, so dass der verriegelnde Metallbeschlag gehoben wird sowie der untere Klemmabschnitt und der Kerbenabschnitt des Führungselements voneinander gelöst werden, und die Belastung, die auf das Führungselement in die Richtung der Wandstruktur ausgeübt wird, verschwindet.

Wenn das erste aufrechte Element und das zweite aufrechte Element gelöst werden, schwenkt das erste aufrechte Element beim weiteren Treten des Gaspedals weiter um den Schwenkpunktstift, und der umwandelnde Metallbeschlag schwenkt auch weiter um den Lagerabschnitt. Jetzt ist eine Seite des oberen Gabelabschnitts, der als Drehstopper dient, mit dem hängenden Stift berührend verbunden, so dass die Funktion des umwandelnden Metallbeschlags an die Hängestruktur für Umwandlung der Tretkraft übertragen wird. Nämlich funktionieren das erste aufrechte Element, der umwandelnde Metallbeschlag, die Hängestruktur für Umwandlung der Tretkraft, die Tragstruktur und der Bremsarm auf die Integrationsweise, das Pedal wird weiter getreten, dann wird die Zustand so geändert, dass das Bremspedal getreten wird, so dass der Kraft beim Treten des Gaspedals entsprechend das Bremspedal getreten und eine zuverlässige Bremsung vorgenommen wird.

Wenn das Treten des Gaspedals unterbrochen ist, kehrt das erste aufrechte Element zur Ausgangsposition zurück, somit wird die Verbindung zwischen dem koordinierenden Verbindungselement und den hängenden Stiften sowie dem Drehungselement des umwandelnden Metallbeschlags gelöst, so dass der umwandelnde Metallbeschlag, die Hängestruktur für Umwandlung der Tretkraft, die Tragstruktur, der Bremsarm und der Bremspedal zur Ausgangsposition zurückkehren. Außerdem fällt der verriegelnde Metallbeschlag auch ab, und der untere Klemmabschnitt ist berührend mit dem Kerbenabschnitt des Führungselements verbunden, somit entsteht der Verriegelungszustand, so dass die Bewegungen von der Hängestruktur für Umwandlung der Tretkraft usw. unterdrückt werden.

Einrichtung zur Lösung einer fehlerhaften Betätigung des Gaspedals nach Anspruch 5, dadurch gekennzeichnet, dass der Verrieglungsstift aus einem gekrümmten Abschnitt, der auf der Seite des freien Endes des ringförmigen Elementes ausgebildet ist, und einer oberen Innenoberfläche der Tragstruktur, die mit dem gekrümmten Abschnitt berührend verbunden ist, besteht.

Der gekrümmte Abschnitt des am Verriegelungsstift befestigten ringförmigen Elements ist in die Richtung der Seite der oberen Innenoberfläche der Tragstruktur gekrümmt, bei dem Treten des Gaspedals und der Schwenkung des ersten aufrechten Elements, sind die zwei berührend verbunden und der Verriegelungsstift wird geschoben. Wenn das erste aufrechte Element durch Aufhören des Tretens des Gaspedals zur Ausgangsposition zurückkehrt, sind die zwei voneinander gelöst und kehren zur Ausgangsposition zurück.

Einrichtung zur Lösung einer fehlerhaften Betätigung des Gaspedals nach Anspruch 6, dadurch gekennzeichnet, dass unterhalb der Tragstruktur eine Tragplatte vorstehend angeordnet ist, die einen horizontalen Abschnitt und einen schräg aufrechten Abschnitt aufweist; wobei der verriegelnde Metallbeschlag einen Fußabschnitt aufweist, und wobei der Fußabschnitt unterhalb des unteren Klemmabschnittes, der vom Unterteil des umwandelnden Metallbeschlags hängt, auf der Tragplatte rollen kann.

Wenn die Tragplatte und der Fußabschnitt des verriegelnden Metallbeschlags das Bremspedal treten, koordinieren sie mit den Betätigungen des Bremsarms und der Tragstruktur, so dass der verriegelnde Metallbeschlag, der umwandelnde Metallbeschlag, die Hängestruktur für Umwandlung der Tretkraft und das erste aufrechte Element gleichzeitig drehen. Die Tragplatte erstreckt sich zur jeweiligen Seite des Pedals, beim Treten des Bremspedals dreht die Tragstruktur und bewegt sich in die Richtung, wohin der schräg aufrechte Abschnitt der Tragplatte den Fußabschnitt des verriegelnden Metallbeschlags hochschiebt.

Da durch den verriegelnden Metallbeschlag der umwandelnde Metallbeschlag in gleicher Richtung dreht, so dass die Hängestruktur für Umwandlung der Tretkraft, das erste aufrechte Element und das zweite aufrechte Element auch in gleicher Richtung drehen. Das Gaspedal dreht auch, aber nicht um den Schwenkpunktstift, so dass der Gaspedaldraht nicht gezogen wird. Nämlich tritt nur die Bremskraft des Bremspedals in Funktion.

Jetzt drehen das Bremspedal und das Gaspedal synchron, daher ist deren relative Position im Wesentlichen gleich wie Ausgangszustand.

Einrichtung zur Lösung einer fehlerhaften Betätigung des Gaspedals nach Anspruch 7, dadurch gekennzeichnet, dass der Drehstopper eine Vorsprungsstruktur ist, die auf der Seite der Wandstruktur der Hängestruktur für Umwandlung der Tretkraft vorstehend angeordnet ist und mit der Seite der Wandstruktur des unteren vorstehenden Abschnittes des umwandelnden Metallbeschlags berührend verbunden werden kann.

Einrichtung zur Lösung einer fehlerhaften Betätigung des Gaspedals nach Anspruch 8, dadurch gekennzeichnet, dass der Koordinierungsmechanismus des Pedals aufweist: ein koordinierendes Verbindungselement, das ein erstes ringförmiges Element aufweist, wobei ein Ende des ersten ringförmigen Elements am Verriegelungsstift befestigt ist, und wobei ein Langloch auf der Seite des anderen Endes ausgebildet ist und der hängende Stift somit durchgesteckt ist; einen umwandelnden Metallbeschlag, wobei am vorderen Ende dessen horizontalen Abschnittes ein verriegelnder Metallbeschlag gehängt ist, und wobei am hinteren Ende dessen horizontalen Abschnittes ein blattförmiger aufrechter Abschnitt angeordnet ist, und wobei der horizontalen Abschnitt und der querende Abschnitt des blattförmigen aufrechten Abschnittes an der Welle befestigt sind, um eine Kraft in die Richtung des Kerbenabschnittes des Führungselementes in der axialen Richtung auszuüben; ein Drehungselement des umwandelnden Metallbeschlags, das ein blattförmiger Pressabschnitt aufweist, der am Unterteil des ersten ringförmigen Elements vorstehend angeordnet ist und mit dem vorderen Ende des blattförmigen aufrechten Abschnittes berührend verbunden werden kann; und wobei ein Pressabschnitt des Verriegelungsstiftes am ersten ringförmigen Elements angeordnet ist.

Durch Treten des Gaspedal wird die Schwenkung des ersten aufrechten Elements um den Schwenkpunktstift realisiert, wenn das am oberen Ende des ersten aufrechten Elements angeordnete koordinierende Verbindungselement dreht, ist der blattförmige Pressabschnitt, der am Unterteil vorstehend angeordnet ist und als Drehungselement des umwandelnden Metallbeschlags dient, berührend mit dem vorderen Ende des blattförmigen aufrechten Abschnitts des umwandelnden Metallbeschlags verbunden, so dass der umwandelnde Metallbeschlag dreht.

Wenn der umwandelnde Metallbeschlag und das erste aufrechte Element synchron schwenken, fängt der umwandelnde Metallbeschlag mit der Drehung um den Lagerabschnitt der Hängestruktur für Umwandlung der Tretkraft an, so dass der verriegelnde Metallbeschlag gehoben wird sowie der untere Klemmabschnitt und der Kerbenabschnitt des Führungselements voneinander gelöst werden, und die Belastung, die auf das Führungselement in die Richtung der Wandstruktur ausgeübt wird, verschwindet.

Wenn das erste aufrechte Element und das zweite aufrechte-Element gelöst werden, schwenkt das erste aufrechte Element beim weiteren Treten des Gaspedals weiter um den Schwenkpunktstift, und das erste ringförmige Element des koordinierenden Verbindungselements schwenkt auch weiter. Jetzt ist eine Innenoberfläche des Langlochs berührend mit dem hängenden Stift verbunden, wenn der berührend verbundene Zustand sich fortsetzt, tritt der Koordinierungsmechanismus des Pedals in Funktion, so dass das erste aufrechte Element, die Tragstruktur und der Bremsarm auf die Integrationsweise sich bewegen, das Pedal wird weiter getreten, dann wird die Zustand so geändert, dass das Bremspedal getreten wird, so dass der Kraft beim Treten des Gaspedals entsprechend das Bremspedal getreten und eine zuverlässige Bremsung vorgenommen wird.

Wenn das Treten des Gaspedals unterbrochen ist, kehrt das erste aufrechte Element zur Ausgangsposition zurück, somit wird die Verbindung zwischen dem koordinierenden Verbindungselement und den hängenden Stiften sowie dem Drehungselement des umwandelnden Metallbeschlags gelöst, so dass der umwandelnde Metallbeschlag, die Hängestruktur für Umwandlung der Tretkraft, die Tragstruktur, der Bremsarm und der Bremspedal zur Ausgangsposition zurückkehren, die Bremskraft fällt auch ab und wird gelöst. Außerdem fällt der verriegelnde Metallbeschlag auch ab, und der untere Klemmabschnitt ist berührend mit dem Kerbenabschnitt des Führungselements verbunden, so dass die Bewegungen von der Hängestruktur für Umwandlung der Tretkraft usw. unterdrückt werden.

Einrichtung zur Lösung einer fehlerhaften Betätigung des Gaspedals nach Anspruch 9, dadurch gekennzeichnet,
dass der Pressabschnitt des Verriegelungsstiftes einen oberen Pressabschnitt des Verriegelungsstiftes aufweist, der aus einem vorstehenden Abschnitt, der an der Seite des freien Endes des ersten ringförmigen Elements ausgebildet ist, und einer oberen Innenoberfläche der Hängestruktur für Umwandlung der Tretkraft, die mit dem vorstehenden Abschnitt berührend verbunden werden kann; wobei die auf dem Mittenabschnitt der Säulenstruktur vorstehende Wellenstruktur drehbar auf der Hängestruktur für Umwandlung der Tretkraft stützen kann, und wobei das untere Ende der Säulenstruktur auf einer seitlich vorstehenden Platte, die am Führungselement ausgebildet ist, rollen kann, und wobei das obere Ende der Säulenstruktur sich mit dem ersten ringförmigen Element verbindend bewegen kann; und wobei die Wellenstruktur einen inneren Pressabschnitt des Verriegelungsstiftes aufweist, und wobei am inneren Pressabschnitt des Verriegelungsstiftes eine elastische Struktur gewickelt ist, die eine Kraft auf das obere Ende nach Außen neigend ausübt.

Der vorstehende Abschnitt des am Verriegelungsstift befestigten ringförmigen Elements neigt zur Seite des oberen Innenoberfläche und erstreckt sich gleichzeitig darüber, bei dem Treten des Gaspedals und der Schwenkung des ersten aufrechten Elements, sind der obere Pressabschnitt des Verriegelungsstiftes und der vorstehende Abschnitt berührend verbunden und der Verriegelungsstift wird geschoben. Wenn das erste aufrechte Element durch Aufhören des Tretens des Gaspedals zur Ausgangsposition zurückkehrt, sind die zwei voneinander gelöst und der Verriegelungsstift kehrt zur Ausgangsposition zurück.

Das Element des Pressabschnitts des Verriegelungsstiftes, das im Wesentlichen eine T-Form hat und um die Wellenstruktur drehen kann, übt eine Kraft von der an der Wellenstruktur gewickelten elastischen Struktur auf das obere Ende der Säulenstruktur zur Außenseite drehend aus, und übt eine Kraft auf das untere Ende zur Innenseite drehend aus, und das rollende Element am unteren Ende berührt das Führungselement, das obere Ende berührt das erste ringförmige Element. Die relative Position des Elements, das im Wesentlichen eine T-Form hat, gegenüber dem Führungselement ändert sich, wenn die am Führungselement ausgebildete seitlich vorstehende Platte berührend mit dem unteren rollenden Element verbunden ist, dreht das obere Ende zur Innenseite, so dass das erste ringförmige Element geschoben wird. Daher wird der Verriegelungsstift geschoben, und das Lösen des ersten aufrechten Elements und des zweiten aufrechten Elements passiert.

Es besteht die Situation, dass der obere Pressabschnitt des Verriegelungsstiftes und der innere Pressabschnitt des Verriegelungsstiftes gleichzeitig in Funktion treten, aber es besteht auch die Situation, dass sie voneinander unabhängig funktionieren.

Einrichtung zur Lösung einer fehlerhaften Betätigung des Gaspedals nach Anspruch 10, dadurch gekennzeichnet,
dass der innere Pressabschnitt des Verriegelungsstiftes nebeneinander angeordnete L-förmige Strukturen aufweist, wobei das obere Ende der L-förmigen Strukturen und der querende Abschnitt des umwandelnden Metallbeschlags angrenzend an der Welle befestigt sind, und wobei eine konische vorstehende Fläche am unteren Ende ausgebildet ist; und wobei die konische vorstehende Fläche bei der Drehung der Wellen berührend mit dem unteren Ende der Säulenstruktur verbunden ist.

Außer dem oberen Pressabschnitt des Verriegelungsstiftes und dem inneren Pressabschnitt des Verriegelungsstiftes mit einer im Wesentlichen T-Form, weist der Pressabschnitt des Verriegelungsstiftes ferner einen inneren Pressabschnitt des Verriegelungsstiftes mit einer L-förmigen Form auf, dessen oberes Ende an der Welle des umwandelnden Metallbeschlag befestigt ist. Bei der Drehung des umwandelnden Metallbeschlags durch den inneren Pressabschnitt des Verriegelungsstiftes mit einer L-Form sind die konische vorstehende Fläche berührend mit dem rollenden Element am unteren Ende des inneren Pressabschnitts des Verriegelungsstiftes mit einer T-Form im Wesentlichen verbunden.

Nämlich durch die Drehung der L-förmigen Struktur des umwandelnden Metallbeschlags dreht die Säulenstruktur mit einer L-Form im Wesentlichen, so dass das erste ringförmige Element geschoben wird, durch das Schieben des Verriegelungsstifts werden das erste aufrechte Element und das zweite aufrechte Element voneinander gelöst.

Es besteht die Situation, dass der obere Pressabschnitt des Verriegelungsstiftes und der innere Pressabschnitt des Verriegelungsstiftes mit einer T-Form im Wesentlichen sowie der innere Pressabschnitt des Verriegelungsstiftes mit einer L-förmigen Struktur sich gleichzeitig bewegen und den Verriegelungsstift schiebt, aber es besteht auch die Situation, dass sie voneinander unabhängig funktionieren.

Einrichtung zur Lösung einer fehlerhaften Betätigung des Gaspedals nach Anspruch 11, dadurch gekennzeichnet,
dass ein stabförmiges Verbindungselement unterhalb der Tragstruktur angeordnet ist; wobei der umwandelnde Metallbeschlag nebeneinander angeordnete hängende Elemente aufweist, wobei das obere Ende des hängenden Elements und der querende Abschnitt angrenzend an der Welle befestigt sind, und wobei das untere Ende des hängenden Elements und das horizontale Element, das mit dem unteren Ende des hängenden Elements auf die Weise der Bewegung in der horizontalen Richtung verbunden werden kann, durch Stifte kombiniert sind, und wobei das horizontale Element und das Verbindungselement durch Stifte kombiniert sind.

Beim Treten des Bremspedals koordinieren das Verbindungselement und das horizontale Element sowie das hängende Element mit den Betätigungen des Bremsarms und der Tragstruktur, so dass der umwandelnde Metallbeschlag, die Hängestruktur für Umwandlung der Tretkraft und das erste aufrechte Element gleichzeitig drehen. Beim Treten des Bremspedals dreht die Tragstruktur, so dass das Verbindungselement und das horizontale Element herausgezogen werden, so dass die Hängestruktur schräg nach vorne dreht, dadurch wird der umwandelnde Metallbeschlag gedreht.

Wenn der umwandelnde Metallbeschlag dreht, wird der Beinabschnitt des verriegelnden Metallbeschlags gehoben, der untere Klemmabschnitt wird vom Kerbenabschnitt des Führungselements gelöst, und die Belastung, die auf das Führungselement in die Richtung der Wandstruktur ausgeübt wird, verschwindet. Wenn in diesem Zustand das Bremspedal getreten wird, dient die Drehung der Tragstruktur nicht nur dazu, das hängende Element zu ziehen, sondern auch dazu, die den umwandelnden Metallbeschlag befestigende Welle und das die Welle stützende Führungselement in die gleiche Richtung zu ziehen, wonach dreht das Führungselement in eine Richtung, wo eine Seite des Pedals nach unten gedrückt wird und eine Seite der Wandstruktur sich hebt.

Jetzt drehen die Hängestruktur für Umwandlung der Tretkraft sowie das erste aufrechte Element und das zweite aufrechte Element auch in gleiche Richtung, und das Gaspedal dreht auch, jedoch nicht um den Schwenkpunktstift, so dass der Gaspedaldraht nicht gezogen wird. Nämlich nur die Bremskraft des Bremspedals wirkt.

Wenn L-förmige Strukturen nebeneinander an der Welle des umwandelnden Metallbeschlags angeordnet sind, wird ein drehbarer Zustand des Führungselements durch die Drehung des umwandelnden Metallbeschlags realisiert, drehen L-förmige Strukturen die Säulenstruktur des wesentlich T-förmigen Pressabschnitts des Verriegelungsstiftes, so dass das erste ringförmige Element geschoben wird, durch das Schieben des Verriegelungsstifts werden das erste aufrechte Element und das zweite aufrechte Element voneinander gelöst.

Nämlich, wenn das Bremspedal getreten wird, kehrt das zweite aufrechte Element unter der Zugkraft des Gaspedaldrahts zur Ausgangsposition zurück. Daher wird kein Brennstoff beim Treten des Bremspedals zugeführt, auch wenn das Gaspedal falsch getreten wird.

Einrichtung zur Lösung einer fehlerhaften Betätigung des Gaspedals gemäß der technischen Lösung 12, dadurch gekennzeichnet, dass ein Stopper, der berührend mit der Tragstruktur verbunden ist, auf der Seite der Wandstruktur der Hängestruktur für Umwandlung der Tretkraft angeordnet ist.

Beim Treten des Bremspedals wirkt die Drehkraft zuerst auf das Verbindungselement, wenn die Tragstruktur durch Bewegung berührend mit dem Stopper verbunden ist, wirkt die Drehkraft des Bremsarms und der Tragstruktur auf die Hängestruktur für Umwandlung der Tretkraft, so dass die Zentralisierung der Belastungen auf den umwandelnden Metallbeschlag vermieden werden kann.

Einrichtung zur Lösung einer fehlerhaften Betätigung des Gaspedals gemäß der technischen Lösung 13, dadurch gekennzeichnet, dass am seitlichen Oberteil der Tragstruktur ein vorstehender Abschnitt mit einem sägezahnförmigen Querschnitt angeordnet ist;
wobei eine Stiftstruktur für Pedalkoordinierung querend unterhalb dem Verriegelungsstift des ersten aufrechten Elements quer bewegend angeordnet werden kann; und wobei Stabstrukturen, die an der Außenseite des ersten ringförmigen Elements nebeneinander angeordnet sind, an der Stiftstruktur befestigt sind, und wobei eine elastische Struktur, die eine Kraft auf die Seite des zweiten aufrechten Elements ausübt, an der Stiftstruktur gewickelt ist;
und wobei die Stabstrukturen ins Langloch, das in der Säulenstruktur des inneren Pressabschnittes des Verriegelungsstiftes angeordnet ist, durchgesteckt ist;
und wobei an der Stiftstruktur ein vorderes Ende mit einer bestimmten Konizität ausgebildet ist, das mit dem vorstehenden Abschnitt mit einem sägezahnförmigen Querschnitt verbunden werden kann, und wobei die Stiftstruktur sich entlang der sägezahnförmigen Steigung bewegen kann.

Die Stiftstruktur für Pedalkoordinierung wird so im ersten aufrechten Element aufgenommen, dass sie sich auf der Innenseite des ersten aufrechten Elements quer bewegen kann und das vordere Ende der Stiftstruktur vorstehen kann, an der Außenseite der Welle der Stiftstruktur ist ein vorstehender Abschnitt mit einem sägezahnförmigen Querschnitt angeordnet. Wenn das obere Ende der Säulenstruktur des inneren Pressabschnitts des Verriegelungsstiftes sich an der Außenseite befindet und das untere Ende sich an der Innenseite befindet, wirkt die Presskraft nicht auf die Stabstrukturen, sondern unter der Wirkung der an der Stiftstruktur gewickelten elastischen Struktur das vordere Ende der Stiftstruktur befindet sich an der Innenseite des ersten aufrechten Elements.

Wenn das obere Ende der Säulenstruktur des inneren Pressabschnitts des Verriegelungsstiftes zur Innenseite dreht, bewegen sich die Stabstrukturen und die Stiftstruktur zur Seite des vorstehendes Abschnitts mit einem sägezahnförmigen Querschnitt, und das vordere Ende der Stiftstruktur steht in die Richtung der Außenseite des ersten aufrechten Elements vor und wird mit dem vorstehenden Abschnitt verbunden.

Wenn in diesem Zustand die Tragstruktur in die Richtung des Bremspedals dreht, dreht das erste aufrechte Element auch synchron. Wenn in diesem Zustand das Gaspedal getreten wird, wird die Drehung des ersten aufrechten Elements in die Richtung, wo es von der Tragstruktur gelöst wird, unterbrochen, wobei die Tragstruktur synchron mit dem Gaspedal dreht und das Bremspedal getreten wird.

Wenn das Treten des Gaspedals aufhört und das erste aufrechte Element somit in die Richtung nah zur Tragstruktur dreht, wird die Stiftstruktur entlang der sägezahnförmigen Steigung geschoben, so dass Verbindungsstellen nacheinander entstehen, bis die Stiftstruktur auf die Ausgangsposition des ersten aufrechten Elements bewegt wird.

Einrichtung zur Lösung einer fehlerhaften Betätigung des Gaspedals gemäß der technischen Lösung 14, dadurch gekennzeichnet, dass der Koordinierungsmechanismus des Gaspedals obere vorstehende Abschnitte und untere vorstehende Abschnitte ausbildet, wobei ein Ende von den oberen vorstehenden Abschnitten und den unteren vorstehenden Abschnitten den Verriegelungsstift durchsteckt, und wobei auf der Seite des anderen Endes alle hängenden Stifte auf die Weise der veränderbaren Querungsposition durchgesteckt sind; und wobei ein dreieckiger Rahmen am unteren vorstehenden Abschnitt angeordnet ist, und wobei bei der Trennung und Bewegung der hängenden Stiften vom dem Verriegelungsstift der dreieckige Rahmen die hängenden Stifte stützen kann und gleichzeitig die hängenden Stifte sich tretend bewegen machen kann, und wobei der dreieckige Rahmen bei der annähernden Bewegung die hängenden Stifte durch Drehung sich tretend bewegen machen kann; und wobei der obere vorstehende Abschnitt einen Stellring für Tretkraft des Gaspedals aufweist, und wobei der Stellring für Tretkraft des Gaspedals eine Einstellplatte, die mit der Seite des Verriegelungsstiftes durch Stifte kombiniert und bei der tretenden Bewegung der hängenden Stifte durch die Stützung des dreieckigen Rahmens hochgeschoben ist, und eine elastische Struktur, die eine Kraft auf die Seite des unterwärts vorstehenden Abschnittes des äußeren Endes der Einstellplatte ausübt und gleichzeitig das äußere Ende der Einstellplatte hält, aufweist.

Der obere vorstehende Abschnitt besteht aus zwei einander gegenüberliegend Elementen, wobei die Einstellplatte in der Innenseite von den zwei Elementen aufgenommen ist. An dem äußeren Ende der Einstellplatte sind Einstellschrauben durchgesteckt, an denen die elastische Struktur gewickelt ist, wobei das vordere Ende der Schraube am hintere Ende des unteren vorstehenden Abschnitts verschraubt ist. Durch die Einstellung der einzuschraubenden Höhe der Einstellschraube wird die Hochschiebkraft der Einstellplatte geändert.

Am Mittenabschnitt des unteren vorstehenden Abschnitts ist ein Lochabschnitt angeordnet, wobei der dreieckige Rahmen innerhalb des Lochabschnitts aufgenommen ist. Eine Spitze des dreieckigen Rahmens steht vom Lochabschnitt vor, wobei die Seitenspitze am äußeren Ende durch Stifte gestützt ist. Die untere Oberfläche der inneren Seitenspitze ist mit der die Kraft ausübenden elastischen Struktur berührend verbunden.

Die Außenseite einer aus dem Lochabschnitt vorstehenden Spitze ist mit der Wandfläche des Lochabschnitts berührend verbunden. Die relative Position des Stellrings zur Einstellung der Tretkraft des Gaspedals und des hängenden Stiftes ändert sich unter der Wirkung der Tretkraft des Gaspedals, wenn das Gaspedal getreten wird und der hängende Stift mit einer Spitze des dreieckigen Rahmens berührend verbunden ist sowie sich weiter zur Außenseite bewegen sollte, stützt der hängende Stift auf dem dreieckigen Rahmen, weil der dreieckige Rahmen sich nicht zur Außenseite bewegen kann.

Der Kontaktstelle zwischen dem hängenden Stift und dem dreieckigen Rahmen wird als der kritische Punkt eingestellt, wo das erste aufrechte Element und das zweite aufrechte Element voneinander gelöst werden. Beim weiteren Treten des Gaspedals fährt der hängende Stift auf den dreieckigen Rahmen, und der hängende Stift ist mit der Einstellplatte auf der oberen Oberfläche berührend verbunden und schiebt die Einstellplatte hoch. Der Widerstand beim Hochschieben wird der Widerstand gegen das Gaspedal, wonach kann die übermäßige Tretposition des Gaspedals erkannt werden.

Wenn das Gaspedal zu diesem Zeitpunkt nicht gelöst und weiter getreten wird, bewegt sich das hängende Stift und der Verriegelungsstift wird geschoben, wo dass das Lösen zwischen dem ersten aufrechten Element und dem zweiten aufrechten Element geschieht. Der hängende Stift tritt über den dreieckigen Rahmen, dann bewegt sich zur Position von dem Lochabschnitt, und wird dann von der Einstellplatte gelöst und kehrt zur Ausgangsposition zurück.

Wenn das Gaspedal dann gelöst wird und das erste aufrechte Element somit zur Ausgangsposition dreht, wird der hängende Stift rückwärts in den Stellring geschoben, dann wird eine Spitze des dreieckigen Rahmens von der Außenseite zur Innenseite gepresst, so dass der dreieckige Rahmen dreht. Somit kehrt die relative Position des Stellrings zur Einstellung der Tretkraft des Gaspedals und des hängenden Stiftes zur Ausgangsposition zurück. Der dreieckige Rahmen, den der hängende Stift durchgeht, durch die mit der inneren Seitenspitze berührend verbundene elastische Struktur dreht, wobei die Außenseite einer aus dem Lochabschnitt vorstehenden Spitze mit der Wandfläche des Lochabschnitts berührend verbunden ist.

Einrichtung zur Lösung einer fehlerhaften Betätigung des Gaspedals gemäß der technischen Lösung 15, dadurch gekennzeichnet, dass der Bremsarm aufweist:
einen Hilfsbremsarm, der genau oberhalb des Bremspedals montiert ist; ein Hilfsbremspedal, das am vorderen Ende des Hilfsbremsarms geklebt und neben dem Bremspedal angeordnet ist.

In der Regel wird das Bremspedal nach dem Gaspedal abwechselnd getreten, aber bei Verwendung von zwei Füßen sind sie zu nah zueinander, wonach wird das Hilfsbremspedal an der leicht zu tretenden und entfernten Position angeordnet.

Einrichtung zur Lösung einer fehlerhaften Betätigung des Gaspedals gemäß der technischen Lösung 16, dadurch gekennzeichnet, dass L-förmige Strukturen als Pressabschnitt des Verriegelungsstiftes nebeneinander angeordnete sind, wobei das obere Ende der L-förmigen Strukturen und der querende Abschnitt des umwandelnden Metallbeschlags angrenzend an der Welle befestigt sind, und wobei eine konische vorstehende Fläche am unteren Ende ausgebildet ist; und wobei die konische vorstehende Fläche bei der Drehung der Wellen berührend mit dem unteren Ende der Säulenstruktur verbunden ist; wobei die Einrichtung zur Lösung einer fehlerhaften Betätigung des Gaspedals aufweist: eine bogenförmige Struktur, deren Oberteil an der Welle des umwandelnden Metallbeschlags befestigt ist, wobei das Unterteil mit dem beweglichen Eisenkern des Magnetventils berührend verbunden ist; eine Bedieneinheit für Treten, die am Seitenabschnitt des Gaspedals angeordnet ist; eine Betriebsschaltung, die mit der Bedieneinheit für Treten und dem Magnetventil verbunden ist.

Die Bedieneinheit für Treten weist einen über das Gaspedal hinausgehenden Fußlegeabschnitt und ein Stangenelement auf, das durch Bewegungen des Fußes betätigt werden kann, durch die Bewegung des Stangenelements wird die Betriebsschaltung eingeschaltet, so dass der bewegliche Eisenkern des Magnetventils herausgepresst wird. Durch die bogenförmige Struktur dreht der umwandelnde Metallbeschlag, das erste ringförmige Element wird dadurch geschoben, indem die konische vorstehende Fläche des inneren Pressabschnitts des Verriegelungsstiftes der L-förmigen Strukturen berührend mit dem rollenden Element am unteren Ende der Säulenstruktur des inneren Pressabschnitts des Verriegelungsstiftes verbunden ist, wobei durch das Schieben des Verriegelungsstifts werden das erste aufrechte Element und das zweite aufrechte Element voneinander gelöst.

Einrichtung zur Lösung einer fehlerhaften Betätigung des Gaspedals gemäß der technischen Lösung 17, dadurch gekennzeichnet, dass der Bremsarm aufweist: einen Hilfsbremsarm, der genau oberhalb des Bremspedals montiert ist; ein Hilfsbremspedal, das am vorderen Ende des Hilfsbremsarms geklebt und neben dem Bremspedal angeordnet ist, und wobei eine zweite Bedieneinheit für Treten zusätzlich angeordnet ist; und wobei die zweite Bedieneinheit für Treten mit der Betriebsschaltung verbunden ist.

Die zweite Bedieneinheit für Treten funktioniert beim Pressen des Hilfsbremspedals, beim Betätigen des Hilfsbremspedals ist das Gaspedal im Nicht-Betrieb-Zustand.

### Vorteile der vorliegenden Erfindung

In der Einrichtung zur Lösung einer fehlerhaften Betätigung des Gaspedals gemäß der vorliegenden Erfindung sind ein Führungselement als Koordinierungsmechanismus des Pedals, ein koordinierende Verbindungselement, ein umwandelnder Metallbeschlag, ein Drehungselement des umwandelnden Metallbeschlags und ein verriegelnder Metallbeschlag angeordnet, so dass das obere Ende des einen Teil der Übertragungskomponente für Tretkraft des Gaspedals ausbildenden ersten aufrechten Elements berührend mit dem hängenden Stift verbunden ist, und sie greifen ineinander entsprechend dem Drehwinkel des ersten aufrechten Elements, deshalb durch Treten an der Position höher als konstante Position verschwindet die Gaspedalfunktion, ohne abwechselndes Treten des Bremspedals kann das Bremspedal der Tretkraft des Gaspedals entsprechend auch getreten werden, so dass die Bremssteuerung vorgenommen wird,
dadurch wird eine zuverlässige Bremsung realisiert.

Wenn ein Fahrer aus großer Überraschung das Bremspedal nicht treten kann, kann die Bremsung auch durch Treten des Gaspedals realisiert werden, und die Bremszeit wird kürzer, die Bremskontrolle wird zuverlässig vorgenommen, so dass das Geschehen eines Unfalls verhindert werden kann. Somit kann es dazu beitragen, die Unfälle bei unerfahrenem Autofahrer oder älterem Autofahrer zu verhindern.

Am Bremsarm werden alle Elemente auf der Seite der Übertragungskomponente für Tretkraft des Gaspedals gehalten, so dass die Oberflächen der Tragstruktur und der Hängestruktur für Umwandlung der Tretkraft einander gegenüberliegen, so dass die Tretkraft des Gaspedals nach der Lösung der Verriegelung des Führungselements direkt das Treten des Bremspedals wird, so dass die Bremseffizienz höher wird und die Bremsung bei einer falscher Betätigung zuverlässig vorgenommen werden kann.

Die Einrichtung zur Lösung einer fehlerhaften Betätigung des Gaspedals der vorliegenden Erfindung trägt dazu bei, die schweren Unfälle beim unerfahrenen Autofahrer, der den Führerschein gerade bekommt, und beim Autofahrer mit Mittelalter oder Hochalter zu verhindern, und es kann erwartet werden, dass die Einrichtung das voreilige Fahren beim jungen Leuten verhindern, z.B. schneller Start mit Treten des Gaspedals zunächst, schnelle Beschleunigung, Annäherungsfahrt (Fahren annähernd zu vorderem Auto, so dass es die Fahrspur freilässt), Unterhaltungsfahrt usw.

Es kann erwartet werden, dass die Einrichtung die sekundären schweren Unfällen verhindert, die durch das panische Fahren nach Auffahrunfällen und Kollisionsunfällen und Fluchtverhalten nach der Verletzung nach einem Unfall verursacht werden.

Die Einrichtung zur Lösung einer fehlerhaften Betätigung des Gaspedals nach der technischen Lösung 2, wobei das Führungselement einen vorderen Endabschnitt aufweist, der mit der Hängestruktur berührend verbunden ist und sich bewegt, so dass die Drehung der Hängestruktur für Umwandlung der Tretkraft beim Lösen der Verriegelung reibungslos erfolgen und somit dem Führungselement mit einer linearen Form entsprechen kann, so dass die Struktur einfach wird.

Die Einrichtung zur Lösung einer fehlerhaften Betätigung des Gaspedals nach der technischen Lösung 3, wobei am Koordinierungsmechanismus des Gaspedals eine Koordinierungsklaue als Koordinierungselement des Gaspedals, ein Verriegelungsstift als bewegliches Element, der herauskommen und hineingehen kann, und ein Pressabschnitt des Verriegelungsstiftes angeordnet sind, deshalb wird die Struktur des Koordinierungselements des Gaspedals klein und einfach.

Die Einrichtung zur Lösung einer fehlerhaften Betätigung des Gaspedals nach der technischen Lösung 4, wobei am Koordinierungsmechanismus des Pedals ein ringförmiges Element als koordinierendes Verbindungselement, das einen Pressabschnitt des Verriegelungsstiftes ausbildet, ein umwandelnder Metallbeschlag, an dessen Oberteil ein Gabelabschnitt angeordnet ist, und ein Bremsstift als Drehungselement des umwandelnden Metallbeschlags angeordnet sind, so dass das Gaspedal durch das koordinierende Verbindungselement gelöst wird, und mit dem Bremsstift des umwandelnden Metallbeschlags wird die Verriegelung gelöst, und mit dem Gabelabschnitt des umwandelnden Metallbeschlags wird die Bremsung vorgenommen. Mit den unabhängigen Elementen können die Lösung des Gaspedals, die Lösung der Verriegelung und die Bremsung vorgenommen werden, somit können verschiedene Wirkungspunkte von solchen Elementen gering eingestellt werden, dadurch kann die Einstellung während des Starts der Bremsung vorgenommen werden.

Die Einrichtung zur Lösung einer fehlerhaften Betätigung des Gaspedals nach der technischen Lösung 5, wobei der Pressabschnitt des Verriegelungsstiftes der gekrümmte Abschnitt des ringförmigen Elements ist, so dass die Schiebung und die Rückstellung des Verriegelungsstifts durch die einfache Struktur realisiert werden können.

Die Einrichtung zur Lösung einer fehlerhaften Betätigung des Gaspedals nach der technischen Lösung 6, wobei unterhalb der Tragstruktur eine vorstehende Tragplatte und ein verriegelnder Metallbeschlag des Fußabschnitts angeordnet sind, der mit der Tragplatte berührend verbunden werden kann, so dass beim Treten des Bremspedals das Gaspedal synchron drehen kann, dann sind seine relative Position im Wesentlichen identisch mit dem Ausgangszustand, so dass nach dem Treten des Bremspedal das Gaspedal reibungslos abwechselnd getreten werden kann.

Die Einrichtung zur Lösung einer fehlerhaften Betätigung des Gaspedals nach der technischen Lösung 7, wobei der Stopper eine vorstehende Struktur ist, die mit dem umwandelnden Metallbeschlag berührend verbunden werden kann, wonach kann die Drehung zuverlässig verhindert werden.

Die Einrichtung zur Lösung einer fehlerhaften Betätigung des Gaspedals nach der technischen Lösung 8, wobei der Koordinierungsmechanismus des Pedals einen umwandelnden Metallbeschlag aufweist, an dem ein verriegelnder Metallbeschlag gehängt und ein blattförmiger aufrechter Abschnitt vertikal angeordnet ist, wobei der Koordinierungsmechanismus des Pedals einen blattförmiger Pressabschnitt als ein Drehungselement des umwandelnden Metallbeschlags aufweist, und wobei am Koordinierungsmechanismus des Pedals ein erstes ringförmiges Element als koordinierendes Verbindungselement des Pressabschnittes des Verriegelungsstiftes angeordnet ist, so dass der umwandelnde Metallbeschlag und das koordinierende Verbindungselement verbunden werden können, dadurch kann eine zuverlässige Bremsung vorgenommen werden.

Die Einrichtung zur Lösung einer fehlerhaften Betätigung des Gaspedals nach der technischen Lösung 9, wobei am Pressabschnitt des Verriegelungsstiftes ein Pressabschnitt des Verriegelungsstiftes und ein innerer Pressabschnitt des Verriegelungsstiftes angeordnet sind, so dass in Situationen außer der beim Übertreten des Gaspedals der Verriegelungsstift auch geschoben werden kann.

Die Einrichtung zur Lösung einer fehlerhaften Betätigung des Gaspedals nach der technischen Lösung 10, wobei der Pressabschnitt des Verriegelungsstiftes durch die am umwandelnden Metallbeschlag nebeneinander angeordneten L-förmige Strukturen ausgebildet ist, so dass der Verriegelungsstift durch die Drehung des umwandelnden Metallbeschlags geschoben werden kann, wonach kann der Verriegelungsstift beim Betätigen des Bremspedal auch geschoben werden.

Die Einrichtung zur Lösung einer fehlerhaften Betätigung des Gaspedals nach der technischen Lösung 11, wobei die Tragstruktur mit dem umwandelnden Metallbeschlag verbunden ist, wonach beim Treten des Bremspedals können der umwandelnde Metallbeschlag, der verriegelnde Metallbeschlag, die Hängestruktur für Umwandlung der Tretkraft und das erste aufrechte Elements gleichzeitig gedreht werden, so dass der Gaspedaldraht nicht gedreht werden kann und die Bremskraft gleichzeitig wirkt.

Wenn die L-förmigen Strukturen nebeneinander an der Welle des umwandelnden Metallbeschlags angeordnet sind, wird der Verriegelungsstift beim Treten des Bremspedals geschoben, so dass der Brennstoff nicht zugeführt wird, auch wenn das Gaspedal falsch getreten wird.

Die Einrichtung zur Lösung einer fehlerhaften Betätigung des Gaspedals nach der technischen Lösung 12, wobei an der Hängestruktur für Umwandlung der Tretkraft ein Stopper angeordnet ist, der mit der Tragstruktur berührend verbunden ist, so dass es vermieden werden kann, dass die Drehkraft des Bremsarms und der Tragstruktur auf den umwandelnden Metallbeschlag zentralisiert wird.

Einrichtung zur Lösung einer fehlerhaften Betätigung des Gaspedals gemäß der technischen Lösung 13, wobei ein vorstehender Abschnitt mit einem sägezahnförmigen Querschnitt an der Tragstruktur angeordnet ist, und wobei eine Stiftstruktur für Pedalkoordinierung am ersten aufrechten Element angeordnet ist, so dass das Bremspedal gleichzeitig drehen kann.

Die Einrichtung zur Lösung einer fehlerhaften Betätigung des Gaspedals nach der technischen Lösung 14, wobei ei Stellring für Tretkraft des Gaspedals am Koordinierungsmechanismus des Gaspedals angeordnet ist, so dass die übermäßige Tretposition des Gaspedals zuverlässig erkannt werden kann.

Die Einrichtung zur Lösung einer fehlerhaften Betätigung des Gaspedals nach der technischen Lösung 15, wobei der Bremsarm ein Hilfsbremspedal aufweist, so dass die Bremsbetätigung mit zwei Füßen einfacher wird. Ferner trotz des Beschleunigungsprozesses durch Treten des Gaspedals kann die Funktion des Gaspedals auch durch geringes Treten des Bremspedals gelöst werden. Das mit dem rechten Fuß beschleunigte Gaspedal kann auch automatisch in die Funktion des Bremspedals wechseln, so dass das Auto ohne wechselndes Treten des Bremspedals durch gleichzeitiges Treten des Bremspedals wie des Gaspedals möglichst schnell gehalten werden, wonach kann der Unfall minimiert oder verhindert werden.

Die Einrichtung zur Lösung einer fehlerhaften Betätigung des Gaspedals nach der technischen Lösung 16, wobei ein Magnetventil, das mit dem Gaspedal gekoppelt ist, und eine bogenförmige Struktur, die mit dem Magnetventil berührend verbunden ist, am umwandelnden Metallbeschlag angeordnet sind, wo dass es durch die Bewegung des Fußes auf dem Gaspedal realisiert werden, dass das erste aufrechte Element und das zweite aufrechte Element voneinander gelöst werden können.

Die Einrichtung zur Lösung einer fehlerhaften Betätigung des Gaspedals nach der technischen Lösung 17, wobei eine zweite Bedieneinheit für Treten am Hilfsbremspedal zusätzlich angeordnet ist, so dass das Gaspedal beim Betätigen des Hilfsbremspedals immer im Nicht-Betriebs-Zustand ist.

### Kurze Beschreibung der Zeichnungen

Figur 1 ist eine perspektivische Ansicht des Hauptteils der Einrichtung zur Lösung einer fehlerhaften Betätigung des Gaspedals.
Figur 2 ist eine perspektivische Explosionsansicht der Einrichtung zur Lösung einer fehlerhaften Betätigung des Gaspedals.
Figur 3 ist eine schematische Seitenansicht der Einrichtung zur Lösung einer fehlerhaften Betätigung des Gaspedals.
Figur 4 ist eine Seitenquerschnittsansicht der Einrichtung zur Lösung einer fehlerhaften Betätigung des Gaspedals ohne einen Teil auf der Seite der Übertragungskomponente für Tretkraft des Gaspedals.
Figur 5 ist eine Schnittansicht des V-V-Querschnittes von Figur 4.
Figur 6 ist eine schematische Seitenansicht der Einrichtung zur Lösung einer fehlerhaften Betätigung des Gaspedals mit einem im normalen Bereich getretenen Gaspedal.
Figur 7 ist eine Schnittdraufsicht der Einrichtung zur Lösung einer fehlerhaften Betätigung des Gaspedals mit einem im normalen Bereich getretenen Gaspedal und ohne einen Teil auf der Seite der Übertragungskomponente für Tretkraft des Gaspedals.
Figur 8 ist eine Schnittansicht des VIII-VIII-Querschnittes von Figur 7.
Figur 9 ist eine schematische Seitenansicht der Einrichtung zur Lösung einer fehlerhaften Betätigung des Gaspedals, bei der das Treten des Gaspedals den normalen Bereich überschreitet.
Figur 10 ist eine seitliche Schnittansicht des Hauptteils auf der Seite der Übertragungskomponente für Tretkraft des Gaspedals von der Einrichtung zur Lösung einer fehlerhaften Betätigung des Gaspedals, bei der das Treten des Gaspedals den normalen Bereich überschreitet.
Figur 11 ist eine seitliche Schnittansicht des Hauptteils auf der Seite der Übertragungskomponente für Tretkraft des Gaspedals von der Einrichtung zur Lösung einer fehlerhaften Betätigung des Gaspedals, bei der das Treten des Gaspedals den normalen Bereich überschreitet und die Verriegelung des Führungselements gerade gelöst wird.
Figur 12 ist eine seitliche Schnittansicht des Hauptteils auf der Seite der Übertragungskomponente für Tretkraft des Gaspedals von der Einrichtung zur Lösung einer fehlerhaften Betätigung des Gaspedals, bei der das Gaspedal sich nach der Lösung der Verriegelung des Führungselements bewegt.
Figur 13 ist eine seitliche Schnittansicht des Hauptteils auf der Seite der Übertragungskomponente für Tretkraft des Gaspedals von der Einrichtung zur Lösung einer fehlerhaften Betätigung des Gaspedals genau nach dem Treten des Bremspedals.
Figur 14 ist eine seitliche Schnittansicht des Hauptteils auf der Seite der Übertragungskomponente für Tretkraft des Gaspedals von der Einrichtung zur Lösung einer fehlerhaften Betätigung des Gaspedals beim Treten des Gaspedals.
Figur 15 ist eine Seitenansicht des Hauptteils der Einrichtung zur Lösung einer fehlerhaften Betätigung des Gaspedals mit einem Drehstopper, der von dem umwandelnden Metallbeschlag gelöst ist.
Figur 16 ist eine seitliche Schnittansicht des Hauptteils auf der Seite der Übertragungskomponente für Tretkraft des Gaspedals von der Einrichtung zur Lösung einer fehlerhaften Betätigung des Gaspedals nach Treten des Bremspedals gemäß einer anderen Ausführungsform.
Figur 17 ist eine perspektivische Ansicht des Hauptteils der Einrichtung zur Lösung einer fehlerhaften Betätigung des Gaspedals gemäß einer anderen Ausführungsform.
Figur 18 ist eine perspektivische Explosionsansicht des Hauptteils der Übertragungskomponente für Tretkraft des Gaspedals, die am ersten Metallbeschlag für Montage montiert ist.
Figur 19 ist eine perspektivische Explosionsansicht des Hauptteils vom Koordinierungsmechanismus des Gaspedals.
Figur 20 ist eine perspektivische Explosionsansicht über die Koppelung mit einem Element, das mit dem Führungskasten (guide case) verbunden ist.
Figur 21 ist eine Draufsicht des Hauptteils der Einrichtung zur Lösung einer fehlerhaften Betätigung des Gaspedals.
Figur 22 ist eine Schnittansicht des Querschnitts des unteren Teils von Figur 21.
Figur 23 ist eine Schnittansicht des XXIII- XXIII-Querschnittes von Figur 22.
Figur 24 ist eine Schnittansicht des XXIV- XXIV-Querschnittes von Figur 22.
Figur 25 ist eine Schnittansicht des XXV- XXV-Querschnittes von Figur 22.
Figur 26 ist eine Schnittansicht des XXVI- XXVI-Querschnittes von Figur 22.
Figur 27 ist eine schematische Seitenansicht der Einrichtung zur Lösung einer fehlerhaften Betätigung des Gaspedals vor Treten des Gaspedals.
Figur 28 ist eine Draufsicht der Einrichtung zur Lösung einer fehlerhaften Betätigung des Gaspedals vor Treten des Gaspedals, bei der ein Teil weggelassen wird.
Figur 29 ist eine schematische Seitenansicht der Einrichtung zur Lösung einer fehlerhaften Betätigung des Gaspedals mit einem im normalen Bereich getretenen Gaspedal.
Figur 30 ist eine Draufsicht der Einrichtung zur Lösung einer fehlerhaften Betätigung des Gaspedals mit einem im normalen Bereich getretenen Gaspedal, bei der ein Teil weggelassen wird.
Figur 31 ist eine schematische Seitenansicht der Einrichtung zur Lösung einer fehlerhaften Betätigung des Gaspedals, bei der das Treten des Gaspedals den normalen Bereich überschreitet.
Figur 32 ist eine Draufsicht der Einrichtung zur Lösung einer fehlerhaften Betätigung des Gaspedals, bei der das Treten des Gaspedals den normalen Bereich überschreitet und ein Teil weggelassen wird.
Figur 33 ist eine schematische Seitenansicht der Einrichtung zur Lösung einer fehlerhaften Betätigung des Gaspedals, bei der das Gaspedal bis zum übermäßigen Bereich getreten wird.
Figur 34 ist eine schematische Seitenansicht der Einrichtung zur Lösung einer fehlerhaften Betätigung des Gaspedals, bei der das Gaspedal bis zum übermäßigen Bereich getreten und danach mit dem Bremspedal integriert wird.
Figur 35 ist eine seitliche Schnittansicht des Hauptteils auf der Seite der Übertragungskomponente für Tretkraft des Gaspedals von der Einrichtung zur Lösung einer fehlerhaften Betätigung des Gaspedals genau nach dem Treten des Bremspedals.
Figur 36 ist eine Seitenansicht der Konfiguration des inneren Pressabschnittes des Verriegelungsstiftes.
Figur 37 ist eine Draufsicht über die Koppelung zwischen dem Stiftstruktur für Pedalkoordinierung und dem vorstehenden Abschnitt der Tragstruktur.
Figur 38 ist eine Hauptansicht über die Koppelung zwischen dem inneren Pressabschnitt des Verriegelungsstiftes, der Stiftstruktur für Pedalkoordinierung und dem vorstehenden Abschnitt der Tragstruktur.
Figur 39 ist eine seitliche Schnittansicht des Hauptteils auf der Seite der Übertragungskomponente für Tretkraft des Gaspedals von der Einrichtung zur Lösung einer fehlerhaften Betätigung des Gaspedals nach dem Treten des Bremspedals.
Figur 40 ist eine seitliche Schnittansicht des Hauptteils des Stellrings für Tretkraft des Gaspedals vor Treten des Gaspedals.
Figur 41 ist eine seitliche Schnittansicht des Hauptteils des Stellrings für Tretkraft des Gaspedals mit einem im normalen Bereich getretenen Gaspedal.
Figur 42 ist eine seitliche Schnittansicht des Hauptteils des Stellrings für Tretkraft des Gaspedals, wobei das Treten des Gaspedals den normalen Bereich überschreitet.
Figur 43 ist eine seitliche Schnittansicht des Hauptteils des Stellrings für Tretkraft des Gaspedals, wobei das Treten des Gaspedals den normalen Bereich überschreitet und das Gaspedal weiter getreten wird.
Figur 44 ist eine seitliche Schnittansicht des Hauptteils des Stellrings für Tretkraft des Gaspedals nach Aufhören des Tretens des Gaspedals.
Figur 45 ist eine perspektivische Ansicht des Abschnittes des Bremspedals.
Figur 46 ist eine schematische Ansicht des Hauptteils von der Einrichtung zur Lösung einer fehlerhaften Betätigung des Gaspedals, bei der eine Betriebsschaltung des Motors an das Gaspedal und das Hilfsbremspedal angeschlossen ist.
Figur 47 ist eine untenansicht, gesehen von der Pfeilrichtung von Figur 46.

### Ausführliche Ausführungsformen

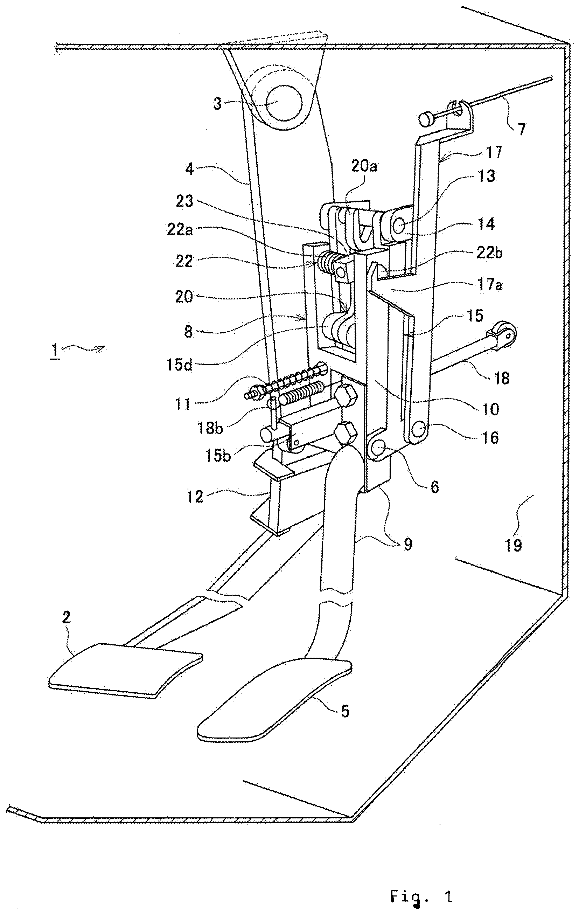

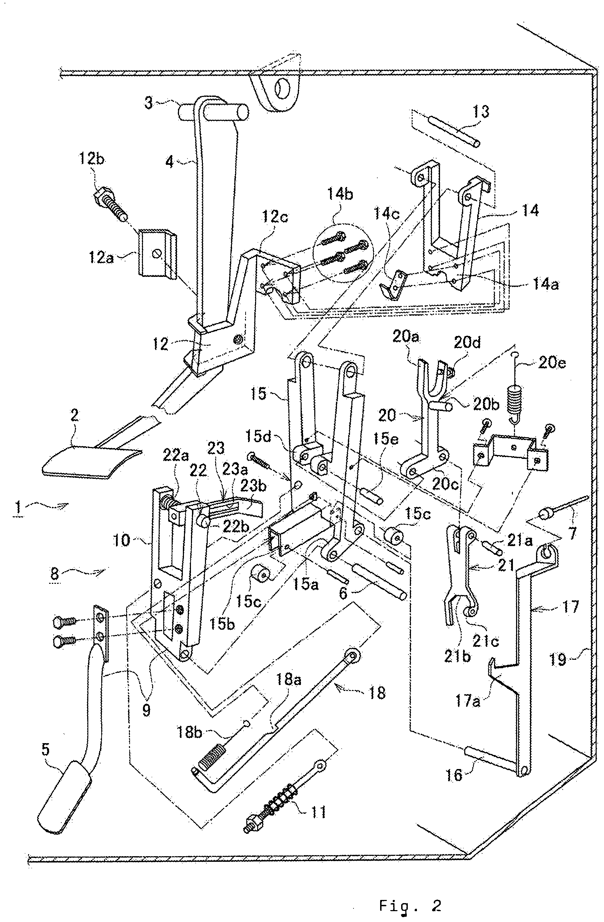

Im Zusammenhang mit den Figuren werden die Ausführungsformen der vorliegenden Erfindung näher erläutert. Figur 1 ist eine perspektivische Ansicht des Hauptteils der Einrichtung zur Lösung einer fehlerhaften Betätigung des Gaspedals, Figur 2 ist ein perspektivische Explosionsansicht der Einrichtung zur Lösung einer fehlerhaften Betätigung des Gaspedals. Einrichtung zur Lösung einer fehlerhaften Betätigung des Gaspedals 1 weist auf: einen Bremsarm (brake arm) 4, wobei ein Bremspedal (brake pedal) 2 an einem Endabschnitt des Bremsarms geklebt ist, und wobei der andere Endabschnitt an der Achse 3 montiert ist, und wobei der Bremsvorgang durch eine Drehbewegung vorgenommen wird; eine Übertragungskomponente für Tretkraft des Gaspedals 8, wobei das Gaspedal 5 an einem Endabschnitt der Übertragungskomponente geklebt ist, wobei ein Schwenkpunktstift 6 lose in den Mittenabschnitt gesteckt ist, und wobei ein Gaspedaldraht (accelerator wire) 7 am anderen Endabschnitt verriegelt ist.

Die Übertragungskomponente für Tretkraft des Gaspedals 8 weist ein Schwenkelement 9 mit einer Seitenfläche der " 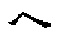 "-Form, an dessen Endschnitt das Gaspedal 5 geklebt ist, wobei der gekrümmte Abschnitt des Schwenkelements 9 drehend in den Schwenkpunktstift 6 greifen kann. Oberhalb des gekrümmten Abschnittes ist ein erstes aufrechtes Element 10 ausgebildet, wobei unterhalb des ersten aufrechten Elements 10 eine Rückstellfeder zusätzlich angeordnet ist. Mit der Rückstellfeder 11 kehrt das erste aufrechte Element 10 zur Ausgangsposition zurück, wenn das Treten des Gaspedals 5 nach dem Treten des Gaspedals 5 gelöst wird.

Der Bremsarm 4 weist einen Metallbeschlag für Montage 12 auf, der von der Nähe des gekrümmten Abschnittes des Arms zur Seite der Übertragungskomponente für Tretkraft des Gaspedals quert. Wie in Figur 2 dargestellt, ist die Tragstruktur 14 berührend mit der Hängestruktur für Umwandlung der Tretkraft 15 verbunden, wobei die Tragstruktur 14 am Metallbeschlag für Montage 12 befestigt ist, und wobei ein hängender Stift 13 querend am Oberteil der Tragstruktur 14 montiert ist, und wobei die Hängestruktur für Umwandlung der Tretkraft 15 eine hängende Struktur ist, die drehbar am hängenden Stift 13 gehängt ist und deren Vorderseite im Wesentlichen H-förmig ist, und wobei ein Schwenkpunktstift 6 am vorstehenden Abschnitt auf der Pedalseite am unteren Ende der Hängestruktur querend angeordnet ist;

Der Metallbeschlag für Montage 12 ist mit der Befestigungsplatte 12a und die Befestigungsschrauben (fixing bolt) 12b am Bremsarm 4 verankert, wobei eine untere Deckplatte 14a der Tragstruktur 14 durch Schrauben 14b auf der oberen vorstehenden Platte 12c verschraubt ist. Mit dem hängenden Stift 13 stützt die Tragstruktur 14 alle Elemente auf der Seite der Übertragungskomponente für Tretkraft des Gaspedals 8.

Die Hängestruktur für Umwandlung der Tretkraft 15 und die Tragstruktur 14 sind nebeneinander angeordnet, wobei die zwei Seitenfläche im Wesentlichen umgekehrt T-förmge sind, und wobei der Schwenkpunktstift 6 in loser Passung auf der Seite des unteren vorstehenden Abschnitts 15a (auf der Seite des Pedals) der Hängestruktur für Umwandlung der Tretkraft 15 eingesteckt ist, so dass das erste aufrechte Element schwenkend gestützt werden kann. Das zweite aufrechte Element 17, dessen Oberteil den Gaspedaldraht 7 fest verriegelt und an dessen Unterteil ein Angelpunktstift des Gaspedals 16 angeordnet ist, wobei das zweite aufrechte Element drehbar auf der anderen Seite (gegenteilige Seite zu dem Pedal) des unteren vorstehenden Abschnitt 15a der Hängestruktur für Umwandlung der Tretkraft 15 angeordnet ist. Das zweite aufrechte Element 17 bildet auch einen Teil der Übertragungskomponente für Tretkraft des Gaspedals 8 aus.

Im unteren Mittelabschnitt der Hängestruktur für Umwandlung der Tretkraft 15 ist ein Führungskasten 15b vertikal angeordnet, wobei ein Führungselement 18 im Führungskasten 15b aufgenommen ist. Das Führungselement 18 ist ein Stabelement, das auf der Führungswalze (guide roller) 15c im Führungskasten 15b stützt und im Wesentlich L-förmig ist, wobei ein Kerbenabschnitt 18a im Mittenabschnitt des Führungselements 18 ausgebildet ist, und wobei eine Feder 18b am vorderen gekrümmten Endabschnitt montiert ist, der aus dem Führungskasten 15b vorsteht.

Das Führungselement 18 steckt die Hängestruktur für Umwandlung der Tretkraft 15 durch und ein Ende ist mit dem Fahrwerk (chassis) 19 des Autos berührend verbunden, das Führungselement stützt beweglich auf der Hängestruktur für Umwandlung der Tretkraft 15 und empfängt die von der Feder 18b auf die Seite des Fahrwerks 19 ausgeübte Wirkung, und ein Ende des Führungselements ist immer mit der Oberfläche des Fahrwerks 19 berührend verbunden. Das andere Ende der Feder 18b ist an der Hängestruktur für Umwandlung der Tretkraft 15 befestigt.

Am Mittenabschnitt der Hängestruktur für Umwandlung der Tretkraft 15 ist ein Lager 15d angeordnet, wobei ein Stift 15e ins Lager 15d durchgesteckt ist, um den auf dem Stift 15e befestigten umwandelnden Metallbeschlag 20 drehbar zu stützen. Der umwandelnde Metallbeschlag 20 ist eine Plattenstruktur, die im Wesentlichen Y-förmig ist, der umwandelnde Metallbeschlag 20 weist einen Gabelabschnitt 20a, dessen Oberteil den hängenden Stift 13 aufnimmt, einen am Mittenabschnitt vorstehend angeordneten Bremsstift 20b und zwei am unteren Ende angeordnete vorstehende Abschnitte 20c auf, wobei ein vorstehender Abschnitt von den vorstehenden Abschnitten 20c durch den Stift 15e auf dem Lager 15d gestützt ist, am anderen vorderen Abschnitt ist ein Stiftes verriegelnden Metallbeschlags 21a in loser Passung entsprechend durchgesteckt, der den verriegelnden Metallbeschlag 21 drehbar hängt.

Der Gabelabschnitt 20a dient dazu, den Stopper zu drehen, wenn der den umwandelnden Metallbeschlag 20 befestigende Stift 15e sich um das Lager 15d dreht und der Gabelabschnitt 20a mit dem hängenden Stift 13 verbunden ist, wird die Drehung verhindert. Um die Stoppstelle der Drehung einzustellen, ist eine Einstellschraube 20d am Gabelabschnitt 20a verschraubt. Ferner ist eine Feder 20e auf der Seite der Einstellschraube 20d des Gabelabschnittes 20a angeordnet, die Feder 20e übt eine Kraft auf den Gabelabschnitt 20a der der Einstellschraube 20d gegenüberliegenden Seite in die Richtung des hängenden Stifts 13 aus.

Der verriegelnde Metallbeschlag 21 ist eine Plattenstruktur, die im Wesentlichen Y-förmig ist, der verriegelnde Metallbeschlag 21 ist dadurch am unteren Ende des umwandelnden Metallbeschlags 20 drehbar gehängt, indem der Abzweigabschnitt 21b in den Kerbenabschnitt 18a des Führungselements 18 greift oder davon gelöst wird. Unterhalb des Abzweigabschnitts 21b besteht ein Fußabschnitt 21c mit der Walze. Der Fußabschnitt 21c kann auf der Tragplatte 14c rollen, die auf der unteren Deckplatte 14a der Tragstruktur 14 montiert ist. Die Tragplatte 14c weist einen horizontalen Abschnitt und einen schräg aufrechten Abschnitt auf.

Wenn das Führungselement 18 in den Abzweigabschnitt 21b und den Kerbenabschnitt 18a des verriegelnden Metallbeschlags 21 greift, der mit dem Führungselement berührend verbunden ist, unterdrückt das Führungselement beim Treten des Gaspedals 5 die Bewegungen des umwandelnden Metallbeschlags 20, der Hängestruktur für Umwandlung der Tretkraft 15 und der Tragstruktur 14, und das Führungselement unterdrückt weiterhin die Bewegungen des Bremsarms 4, ferner wenn der Abzweigabschnitt 21b und der Kerbenabschnitt 18a des verriegelnden Metallbeschlags voneinander gelöst werden, lässt das Führungselement 18 die vorliegenden Elemente sich bewegen.

An der oberen Seite des ersten aufrechten Elements 10 ist ein Verriegelungsstift 22 angeordnet, der einen Teil vom Koordinierungsmechanismus des Gaspedals ausbildet und als das bewegliche Element dient, wobei am Verriegelungsstift 22 eine Feder 22a gewickelt ist. Wenn das ringförmige Element 23, dessen Ende am Verriegelungsstift 22 befestigt ist, berührend mit der Feder 22a verbunden ist, übt die Feder 22a eine Kraft auf den Verriegelungsstift 22 und das ringförmige Element 23 zur Seite des zweiten aufrechten Elements 17 aus.

Ein Langloch 23a, das von dem am umwandelnden Metallbeschlag 20 vorstehenden angeordneten Bremsstift 20b durchgesteckt ist, ist am ringförmigen Element 23 ausgebildet, und ein gekrümmter Abschnitt 23b ist am vorderen Ende des ringförmigen Elements ausgebildet. Das ringförmige Element 23 bildet das koordinierende Verbindungselement aus, das koordinierende Verbindungselement verbindet passend das obere Ende des ersten aufrechten Elements 10 und den Mittenabschnitt des umwandelnden Metallbeschlags 20, dadurch werden die beiden dem Drehwinkel des ersten aufrechten Elements 10 entsprechend gekoppelt.

Auf der Seite des ersten aufrechten Elements 10 des Mittenabschnittes des zweiten aufrechten Elements 17 ist eine L-förmige Koordinierungsklaue 17a vorstehend angeordnet, die einen Teil vom Koordinierungsmechanismus des Gaspedals ausbildet und als Koordinierungselement des Gaspedals dient. Das vordere Ende des Stifts 22b des Verriegelungsstifts 22 des ersten aufrechten Elements 10 greift beim Treten des Gaspedals 5 in die Koordinierungsklaue 17a oder wird davon gelöst. Das vordere Ende des Stifts 22b wird so ausgebildet, dass der vordere Endabschnitt des Querschnitts der den Verriegelungsstift 22 ausbildenden zylindrischen Struktur in die Richtung der Seite des zweiten aufrechten Elements 17 konisch verarbeitet wird.

Wenn die Position des Schwenkpunktstifts 6 nicht bewegt werden kann, überträgt der Koordinierungsmechanismus des Gaspedals die Tretkraft des Gaspedals an den Gaspedaldraht 7 oder löst die Übertragung. Weil der Koordinierungsmechanismus des Gaspedals besteht, drehen das erste aufrechte Element 10 und das zweite aufrechte Element 17 bis zum Tretprozess des Gaspedals 5 synchron.

Wenn das vordere Ende des Stifts 22b und die Koordinierungsklaue 17a voneinander gelöst werden, kehrt das zweite aufrechte Element 17 durch die Zugkraft des Gaspedaldrahts 7 zur Ausgangsposition zurück, und die Zuführung des Brennstoffs hört auf. Ferner im üblichen Tretbereich des Gaspedals 5 werden sie nicht voneinander getreten, sondern das Lösen nur im Bereich in der Nähe zum größten Treten erreicht wird.

Damit das erste aufrechte Element 10 und das zweite aufrechte Element 17 ineinander greifen oder voneinander gelöst werden, soll die Position des Schwenkpunktstifts 6 im unbeweglichen Zustand sein, wenn die Position des Schwenkpunktstifts 6 nicht befestigt ist, nämlich im unbeweglichen Zustand ist, schiebt die Tretkraft des Bremspedals 5 durch den beweglichen Schwenkpunktstift 6 die Hängestruktur für Umwandlung der Tretkraft 15 zur Seite des Fahrwerks 19, so dass die Tragstruktur 14, die mit der Hängestruktur für Umwandlung der Tretkraft 15 verbunden ist, und der Bremsarm 4 auch um die Achse 3 drehen.

Wonach sind die Hängestruktur für Umwandlung der Tretkraft 15, der umwandelnde Metallbeschlag 20, der verriegelnde Metallbeschlag 21 und das Führungselement 18 in der Einrichtung zur Lösung einer fehlerhaften Betätigung des Gaspedals 1 angeordnet, so dass die Position des Schwenkpunktstifts 6 selektiv den beweglichen oder unbeweglichen Zustand realisiert.

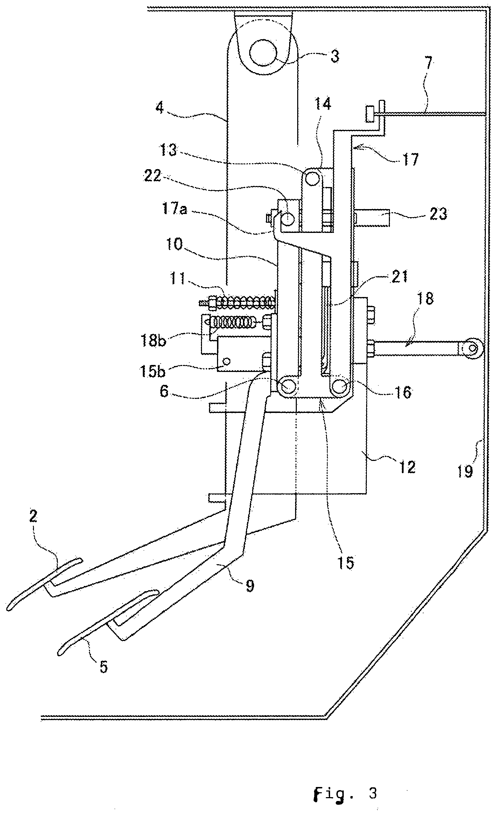

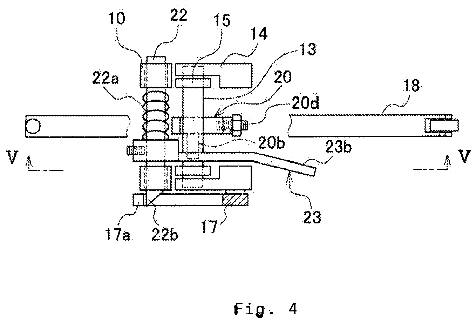

Auf der Grundlage der Figuren 3 bis 5 wird es näher erläutert. Figur 3 ist eine schematische Seitenansicht der Einrichtung zur Lösung einer fehlerhaften Betätigung des Gaspedals, Figur 4 ist eine Seitenquerschnittsansicht der gleichen Einrichtung ohne einen Teil auf der Seite der Übertragungskomponente für Tretkraft des Gaspedals,

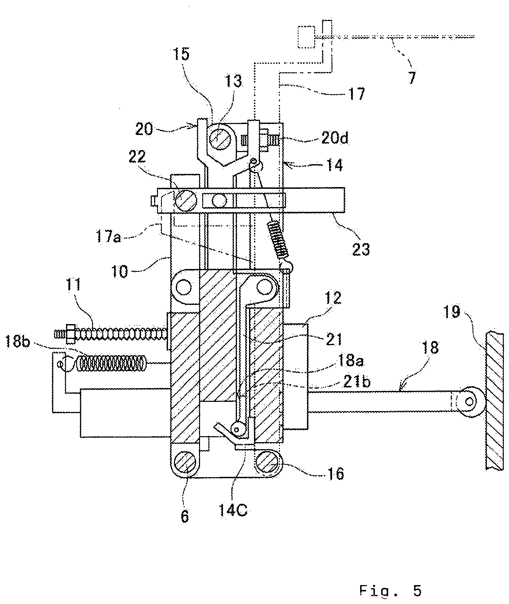

Figur 5 ist eine Schnittansicht des V-V-Querschnittes von Figur 4.

Die Hängestruktur für Umwandlung der Tretkraft 15 ist mit dem umwandelnden Metallbeschlag 20, dem mit dem umwandelnden Metallbeschlag 20 verbundenen verriegelnden Metallbeschlag 21 und dem Führungselement 18 verbunden; wenn das Gaspedal 5 im Zustand, dass der Klemmabschnitt 21b des verriegelnden Metallbeschlags 21 in den Kerbenabschnitt 18a des Führungselements 18 greift, getreten wird, wird die Hängestruktur für Umwandlung der Tretkraft 15 durch den Schwenkpunktstift 6 zur Seite des Fahrwerks 19 geschoben, so dass die Hängestruktur für Umwandlung der Tretkraft 15 berührend mit der Rückseite des hängenden Abschnittes des verriegelnden Metallbeschlags 21 verbunden ist. Der verriegelnde Metallbeschlags 21 ist von dem Kerbenabschnitt 18a des Führungselements 18 und der Hängestruktur für Umwandlung der Tretkraft 15 geklemmt, jetzt wird eine Belastung auf das Führungselement 18 in die Richtung des Fahrwerks 19 ausgeübt, aber weil das vordere Ende des Führungselements 18 berührend mit dem Fahrwerk 19 verbunden ist und sich nicht bewegen kann, wird die Bewegung des verriegelnden Metallbeschlags 21 auch unterdrückt.

Wonach werden die Bewegungen des umwandelnden Metallbeschlags 20, der Hängestruktur für Umwandlung der Tretkraft 15, der Tragstruktur 14 und des Bremsarms 4 unterdrückt, so dass die Position des Schwenkpunktstiftes 6 im unbeweglichen Zustand ist, dadurch wird die Schwenkung des ersten aufrechten Elements 10 um den Schwenkpunktstift 6 realisiert wird.

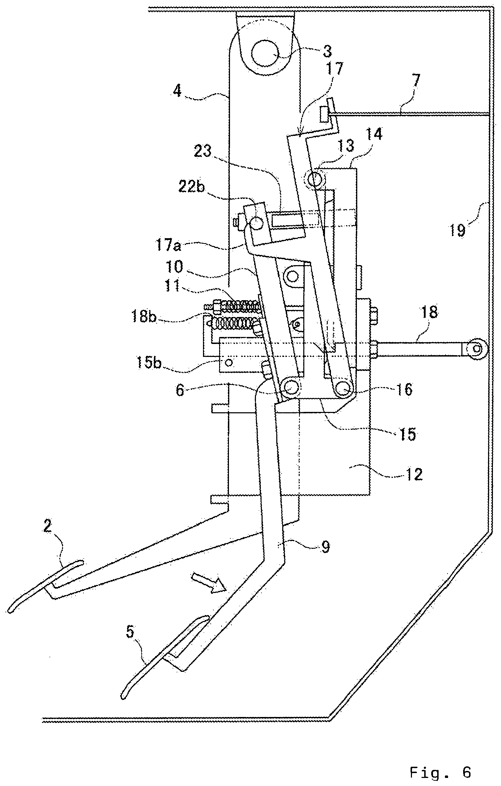

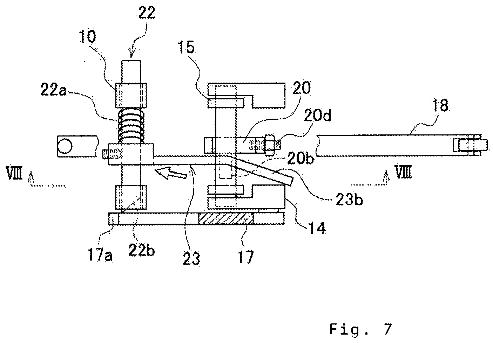

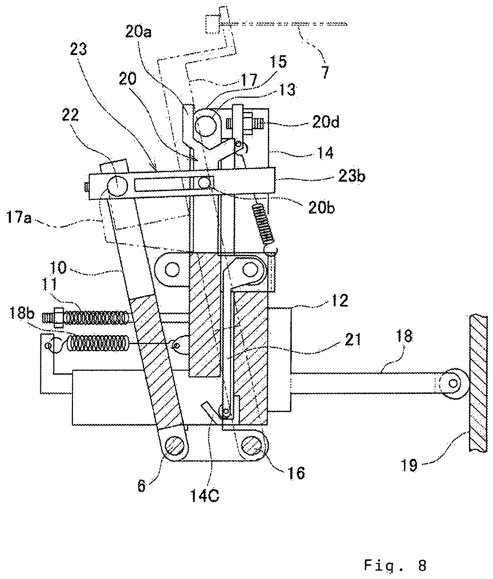

Dann während des Tretens des Gaspedals 5, dreht das zweite aufrechte Element 17 durch das als den Koordinierungsmechanismus des Gaspedals dienende Koordinierungselement des Gaspedals und das bewegliche Element synchron mit dem ersten aufrechten Element 10. Auf der Grundlage der Figuren 6 bis 8 wird es näher erläutert. Figur 6 ist eine schematische Seitenansicht der Einrichtung zur Lösung einer fehlerhaften Betätigung des Gaspedals mit einem im normalen Bereich getretenen Gaspedal, Figur 7 ist eine Schnittdraufsicht der gleichen Einrichtung zur gleichen Zeit ohne einen Teil auf der Seite der Übertragungskomponente für Tretkraft des Gaspedals, Figur 8 ist eine Schnittansicht des VIII-VIII-Querschnittes von Figur 7.

Wenn das vordere Ende des Stifts 22b des Verriegelungsstiftes 22 des ersten aufrechten Elements 10 in die Koordinierungsklaue 17a greift, drehen das erste aufrechte Element 10 und das zweite aufrechte Element 17 dem Treten des Gaspedals 5 entsprechend synchron, wie in Figur 6 dargestellt.

Wenn das Gaspedal 5 im normalen Bereich getreten wird, greift das vordere Ende des Stifts 22b in die Koordinierungsklaue 17a und gleichzeitig dreht, so dass das das zweite aufrechte Element 17 den Gaspedaldraht 7 herausziehen kann, so dass der Start, der Anlauf, die Beschleunigung und die Fahrt mit konstanter Geschwindigkeit des Autos realisiert werden.

Jetzt bewegt sich das am Verriegelungsstift 22 angeordnete ringförmige Element 23 im Laufe der Drehung des ersten aufrechten Elements 10, wie in Figur 7 dargestellt, so dass der vordere gekrümmte Abschnitt 23b des ringförmigen Elementes 23 mit der oberen Innenoberfläche der Tragstruktur 14 gleitend verbunden ist und das ringförmige Element 23 und der Verriegelungsstift 22 geschoben werden.

Wenn die elastische Kraft der Feder 22a überwunden wird und die gleitende Verbindung des gekrümmten Abschnittes 23b des ringförmigen Elementes 23 die in Figur 7 dargestellte Position erreicht, taucht das vordere Ende des Stifts 22b des Verriegelungsstiftes 22 im ersten aufrechten Element 10, so dass die Lösung von der Koordinierungsklaue 17a geschieht.

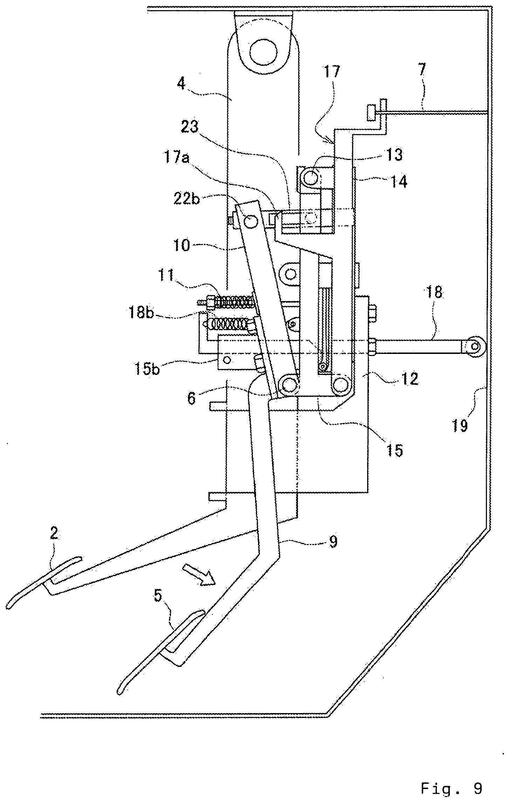

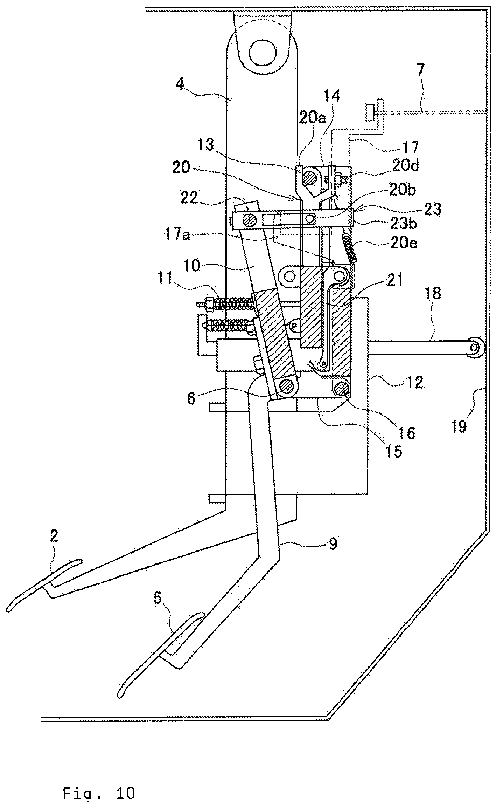

Auf der Grundlage der Figuren 9 und 10 wird die Lösung von den beiden näher erläutert. Figur 9 ist eine schematische Seitenansicht der Einrichtung zur Lösung einer fehlerhaften Betätigung des Gaspedals, bei der das Treten des Gaspedals den normalen Bereich überschreitet, Figur 10 ist eine seitliche Schnittansicht des Hauptteils auf der Seite der Übertragungskomponente für Tretkraft des Gaspedals von der gleichen Einrichtung zum gleichen Zeitpunkt.

Wenn das vordere Ende des Stifts 22b des Verriegelungsstiftes 22 und die Koordinierungsklaue 17a voneinander gelöst werden, kehrt das zweite aufrechte Element 17 durch die Zugkraft des Gaspedaldrahts 7 zur Ausgangsposition zurück, und die Zuführung des Brennstoffs hört auf. Ferner im üblichen Tretbereich des Gaspedals werden die beiden nicht voneinander getreten, sondern das Lösen nur im Bereich in der Nähe zum größten Treten erreicht wird. Jetzt kehrt der Gaspedaldraht 7 zurück so dass der schnelle Start und die schnelle Beschleunigung unterdrückt werden können.

Wenn ein Notfall beim Autofahren passiert ist, besteht die Situation, statt des Bremspedals 2 das Gaspedals 5 weiter zu treten. Bis in dieser Situation der Bereich in der Nähe zum größten Treten erreicht wird, werden das vordere Ende des Stifts 22b und die Koordinierungsklaue 17a voneinander gelöst, wie in Figur 9 dargestellt, das zweite aufrechte Element 17 kehrt durch die Zugkraft des Gaspedaldrahts 7 zur Ausgangsposition zurück, und die Zuführung des Brennstoffs hört auf. Wonach dreht der Motor mit niedriger Geschwindigkeit, so dass der schnelle Start und die schnelle Beschleunigung nicht passieren werden.

Beim schnellen Treten des Gaspedals 5 sind der Verriegelungsstift 22 und die Koordinierungsklaue 17a voneinander gelöst, so dass der schnelle Start und die schnelle Beschleunigung eines Autos unterdrückt werden, wonach können die Kraftstoffkosten durch das umweltfreundliche und menschenfreundliche Fahren verringert werden kann, dadurch wird die Wirtschaftlichkeit verbessert.

Beim Aufhören des Tretens des Gaspedals 5 kehr das erste aufrechte Element 10 unter der Wirkung der Rückstellfeder 11 zur Ausgangsposition zurück, wenn der gekrümmte Abschnitt 23b des ringförmigen Elements und die Tragstruktur 14 nicht gleitend verbunden sind, steht der Verriegelungsstift 22 unter der Wirkung der Feder 22a wieder vor, nähern das vordere Ende des Stifts 22b und die Koordinierungsklaue 17a sich an, und die Koordinierungsklaue 17a ist berührend mit dem konisch verarbeiteten Abschnitt verbunden. Wenn die Feder 22a unter der Kontaktkraft wieder zusammenzieht und der Verriegelungsstift 22 sich bewegt und im ersten aufrechten Element 10 taucht, steht der Verriegelungsstift unter der Wirkung der Feder 22a vor, so dass das vordere Ende des Stifts 22b und die Koordinierungsklaue 17a ineinander greifen und zum Ausgangszustand zurückkehren.

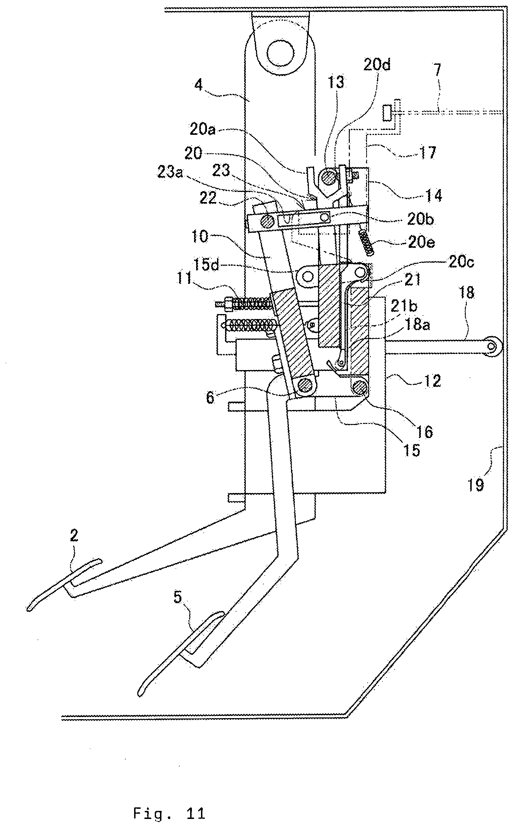

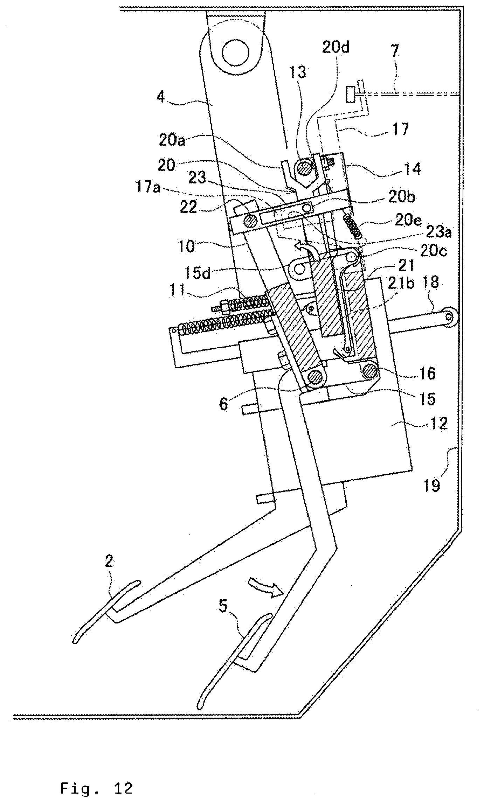

Wenn das Gaspedal 5 andererseits nach der Lösung zwischen dem ersten aufrechten Element 10 und dem zweiten aufrechten Element 17 weiter getreten wird, schwenkt das erste aufrechte Element 10 weiter um den Schwenkpunktstift 6. Auf der Grundlage der Figuren 11 bis 12 wird es näher erläutert. Figur 11 ist eine seitliche Schnittansicht des Hauptteils auf der Seite der Übertragungskomponente für Tretkraft des Gaspedals von der Einrichtung zur Lösung einer fehlerhaften Betätigung des Gaspedals, bei der das Treten des Gaspedals den normalen Bereich überschreitet und die Verriegelung des Führungselements gerade gelöst wird, Figur 12 ist eine seitliche Schnittansicht des Hauptteils auf der Seite der Übertragungskomponente für Tretkraft des Gaspedals von der gleichen Einrichtung, bei der das Gaspedal sich nach der Lösung der Verriegelung des Führungselements bewegt.

Wenn der am umwandelnden Metallbeschlag 20 vorstehend angeordnete Bremsstift 20b das Langloch 23a des ringförmigen Elements 23 kontaktiert, dreht der umwandelnde Metallbeschlag 20 synchron mit dem ersten aufrechten Element 10. Wenn das erste aufrechte Element 10 dreht und das Koordinierungselement das Gaspedals und das bewegliche Element voneinander gelöst werden, kontaktiert eine innere Oberfläche des Langlochs 23a den Bremsstift 20b.

Wenn das Gaspedal 5 in diesem Zustand weiter getreten wird, fängt der umwandelnde Metallbeschlag 20 damit an, um das Lager 15d der Hängestruktur für Umwandlung der Tretkraft 15 zu drehen, so dass den verriegelnden Metallbeschlags 21 hoch gehoben wird, der auf der Seite des Fahrwerks 19 des unteren vorstehenden Abschnittes 20c des umwandelnden Metallbeschlags 20 gehängt ist. Jetzt sind der Abzweigabschnitt 21b des verriegelnden Metallbeschlags 21 und der Kerbenabschnitt 18a des Führungselements 18 voneinander gelöst.

Zu diesem Zeitpunkt verschwindet die Belastung, die auf das Führungselement 18 in die Richtung des Fahrwerks 19 ausgeübt wird. Wenn der verriegelnde Metallbeschlags 21 und der Kerbenabschnitt 18a einander kontaktieren, wird die Betätigung des Führungselements 18 in Aufwärtsrichtung unterdrückt, aber beim Lösen von den beiden fängt die Hängestruktur für Umwandlung der Tretkraft 15 mit der Drehung an, das auf der Hängestruktur für Umwandlung der Tretkraft 15 stützende Führungselement 18 dreht auch, der vordere Endabschnitt des Führungselements 18 kann sich entlang dem Fahrwerk 19 bewegen.

Wie in Figur 12 dargestellt, wenn das Gaspedal 5 weiter getreten wird, überwindet der umwandelnde Metallbeschlag 20 die Zugkraft der Feder 20e und dreht um das Lager 15d weiter. Der obere Gabelabschnitt 20a bewegt sich gegenüber dem hängenden Stift 13, und die Drehung wird verhindert, wenn der hängende Stift 13 mit der Einstellschraube 20d berührend verbunden ist.

Wenn die Drehung verhindert wird, werden das erste aufrechte Element 10, der umwandelnde Metallbeschlag 20, die Hängestruktur für Umwandlung der Tretkraft 15, die Tragstruktur 14 und der Bremsarm 4, die im Verbindungszustand sind, in die integrierte Weise betätigt (gedreht). Nämlich wenn das Gaspedal 5 weiter getreten wird, wird es identisch mit der Situation, dass das Bremspedal 2 getreten wird, so dass das Bremspedal 2 der Tretkraft des Gaspedals 5 entsprechend getreten wird, somit kann die Bremsung zuverlässig vorgenommen werden.

Den Betätigungen des ersten aufrechten Elements 10 und der Hängestruktur für Umwandlung der Tretkraft 15 entsprechend, gleitet jetzt ein Ende des Führungselements 18 auf der Oberfläche des Fahrwerks 19. Eine Walze kann auch am Ende zusätzlich angeordnet werden, so dass das Ende rollen kann.

Beim Aufhören mit dem Treten des Gaspedals 5 und Abrücken des Fußes, kehrt das erste aufrechte Element 10 zur Ausgangsposition zurück, somit wird die Verbindung zwischen dem Bremsstift 20b und dem ringförmigen Element 23 gelöst, dann kehren der umwandelnde Metallbeschlag 20, die Hängestruktur für Umwandlung der Tretkraft 15, die Tragstruktur 14, der Bremsarm 4 und das Bremspedal 2 zur Ausgangsposition zurück.

Ferner fällt der verriegelnde Metallbeschlags 21 auch ab, so dass der Abzweigabschnitt 21b und der Kerbenabschnitt 18a des Führungselements 18 miteinander berührend verbunden sind und ein Verriegelungszustand erzeugt wird, so dass die Bewegungen von der Hängestruktur für Umwandlung der Tretkraft 15 usw. unterdrückt werden. Dadurch kann die normale Fahrbetätigung vorgenommen werden.

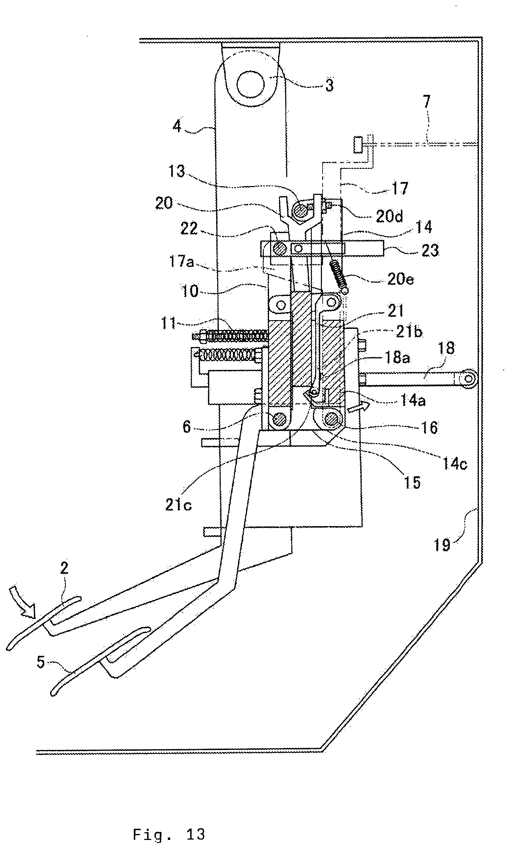

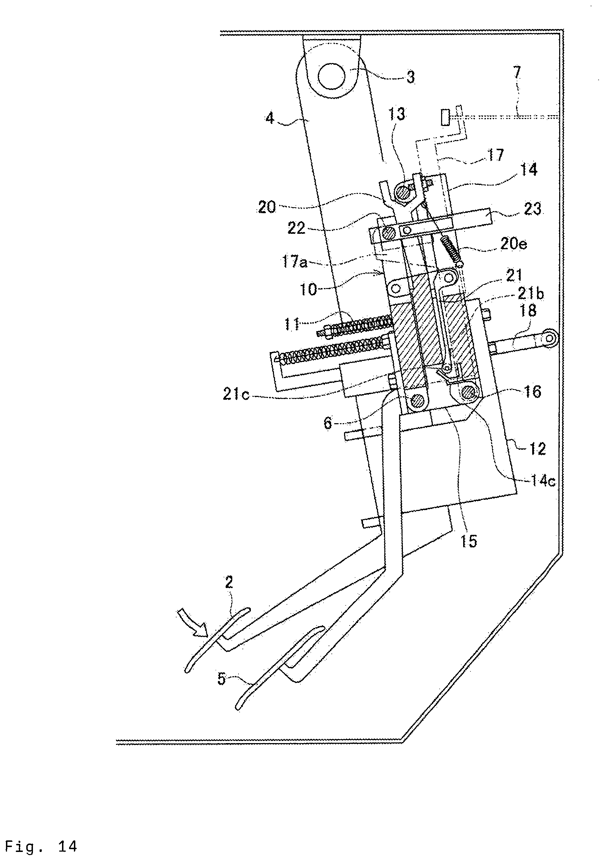

Auf der Grundlage der Figuren 13 und 14 wird die Funktion des Tretens des Bremspedals näher erläutert. Figur 13 ist eine seitliche Schnittansicht des Hauptteils auf der Seite der Übertragungskomponente für Tretkraft des Gaspedals von der Einrichtung zur Lösung einer fehlerhaften Betätigung des Gaspedals genau nach dem Treten des Bremspedals, Figur 14 ist eine seitliche Schnittansicht des Hauptteils auf der Seite der Übertragungskomponente für Tretkraft des Gaspedals beim Treten des Gaspedals.

Wenn das Bremspedal 2 getreten wird, drehen der Bremsarm 4 und die Tragstruktur 14 um die Achse 3. Eine Tragplatte 14c ist vorstehend auf der unteren Deckplatte 14a der Tragstruktur 14 angeordnet, die obere Oberfläche der Tragplatte 14c ist berührend mit den Fußabschnitt 21c des verriegelnden Metallbeschlags 21 verbunden. Wenn die Tragplatte 14c und die Tragstruktur 14 zusammen drehen, übt der schräg aufrechte Abschnitt der Tragplatte 14c eine Kraft auf den Fußabschnitt 21c in die Richtung zum Hochheben des Fußabschnittes 21c aus, wie in Figur 13 dargestellt.

Ferner steigert jetzt der verriegelnde Metallbeschlags 21, und der Abzweigabschnitt 21b ist vom Kerbenabschnitt 18a des Führungselements 18 gelöst, so dass die Verriegelung gelöst wird. Somit wird die Bewegung des Führungselements 18 frei.

Wie in Figur 14 dargestellt, drehen die Tragstruktur 14 und die Tragstruktur 14c beim weiteren Treten des Bremspedals 2, und der verriegelnde Metallbeschlags 21 und der Fußabschnitt 21c sowie die Hängestruktur für umwandelnder Metallbeschlags 20 der Tretkraft 15 und das erste aufrechte Element 10 drehen gleichzeitig.

Jetzt dreht das Gaspedal 5 auch gleichzeitig, aber nicht um den Schwenkpunktstift 6, deshalb wird der Gaspedaldraht 7 auch nicht gezogen. Nämlich nur die Bremskraft des Bremspedals 2 wirkt. Ferner drehen das Bremspedal 2 und das Gaspedal 5 synchron, deshalb ist ihre relative Position im Wesentlich identisch mit dem Ausgangszustand.

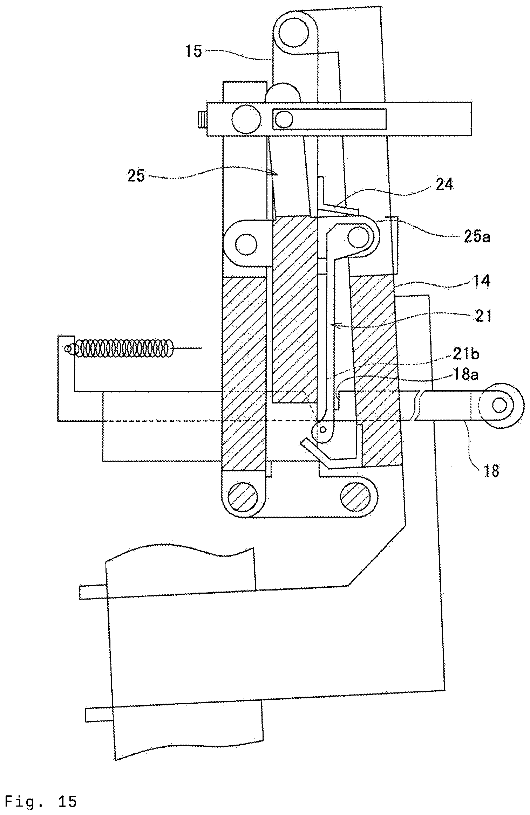

Auf der Grundlage der Figur 15 wird die Ausführungsform des vom umwandelnden Metallbeschlag gelösten Drehstoppers näher erläutert. Figur 15 ist eine Seitenansicht des Hauptteils der Einrichtung zur Lösung einer fehlerhaften Betätigung des Gaspedals mit einem Drehstopper, der von dem umwandelnden Metallbeschlag gelöst ist. Der Drehstopper 24 ist eine vorstehende Struktur, die berührend mit der Seite der Tragstruktur 14 des unteren vorstehenden Abschnittes 25a des umwandelnden Metallbeschlags 25 verbunden werden kann, der Drehstopper ist vorstehend auf der Seite der Tragstruktur 14 der Hängestruktur für Umwandlung der Tretkraft 15 angeordnet.

Der Drehstopper 24 kann an irgendeinem Element angeordnet werden, solange es nach dem Lösen zwischen dem Abzweigabschnitts 21b des verriegelnden Metallbeschlags 21 und dem Kerbenabschnitt 18a des Führungselements 18 verhindert werden kann, dass der umwandelnde Metallbeschlag 25 weiter gehoben wird (gedreht).

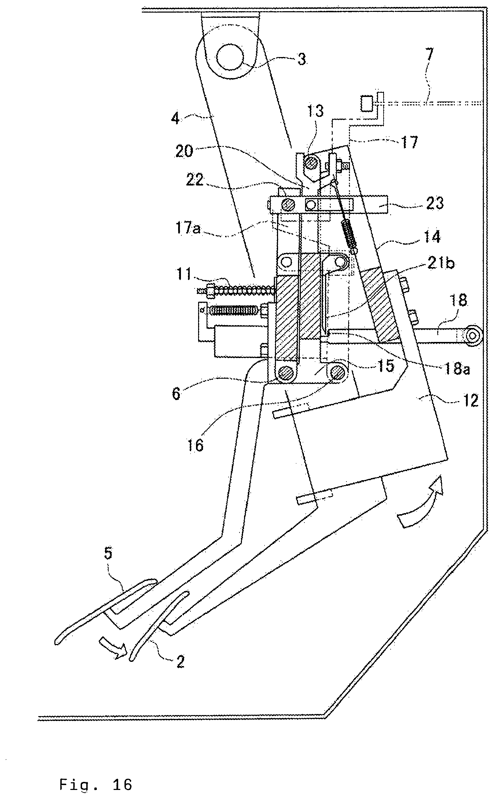

Eine Struktur kann auch verwendet werden, die beim Treten des Bremspedals nicht mit der Seite der Übertragungskomponente für Tretkraft des Gaspedals gekoppelt ist. Bei Verwendung der Struktur ist keine Tragplatte an der Tragstruktur angeordnet. Auf der Grundlage der Figur wird die Funktion des Tretens des Bremspedals der vorliegenden Ausführungsform näher erläutert. Figur 16 ist eine seitliche Schnittansicht des Hauptteils auf der Seite der Übertragungskomponente für Tretkraft des Gaspedals von der Einrichtung zur Lösung einer fehlerhaften Betätigung des Gaspedals nach Treten des Bremspedals gemäß einer anderen Ausführungsform.

Ferner werden die Elemente in der Figur 16 mit gleicher Struktur und Funktion wie Figur 1 mit gleichem Bezugszeichen gekennzeichnet, und die detaillierte Beschreibung dafür wird weggelassen. Wenn das Bremspedal 2 getreten wird, drehen der Bremsarm 4 und die Tragstruktur 14 um die Achse 3.

Jetzt stützt der hängende Stift 13 der Tragstruktur 14 alle Elemente auf der Seite der Übertragungskomponente 8 für Tretkraft des Gaspedals, aber es besteht nur die Funktion, die Elemente in vertikaler Richtung hängend zu stützen, statt sie zu drehen. Der Abzweigabschnitt 21b des verriegelnden Metallbeschlags 21 und der Kerbenabschnitt 18a des Führungselements 18 greifen ineinander und ein Verriegelungszustand wird erzeugt, so dass die Seite der Übertragungskomponente 8 für Tretkraft des Gaspedals bewegt sich fast nicht und sich nicht auf den Gaspedaldraht 7 wirkt.

Deshalb wird das Treten des Bremspedals 2 eine einzelne Betätigung, und das Gaspedal 5 bewegt sich nicht.

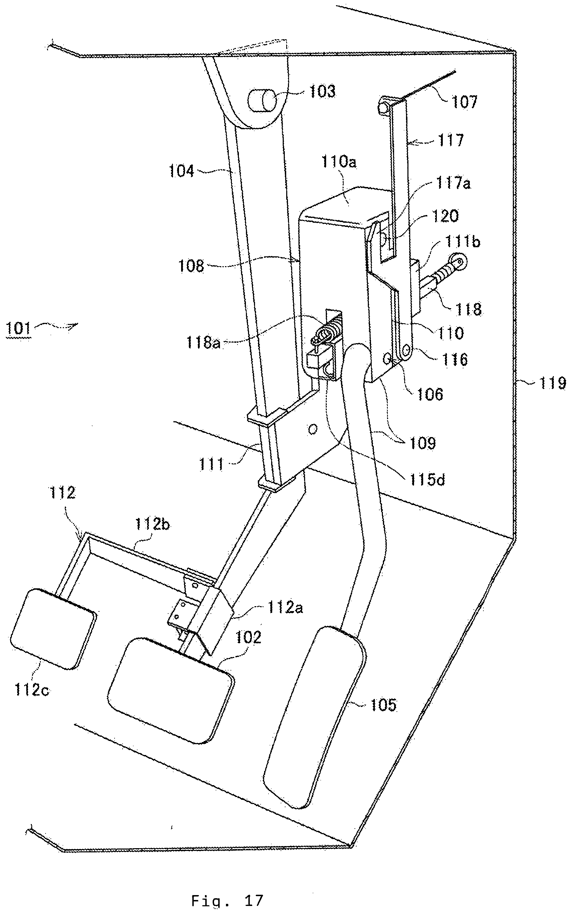

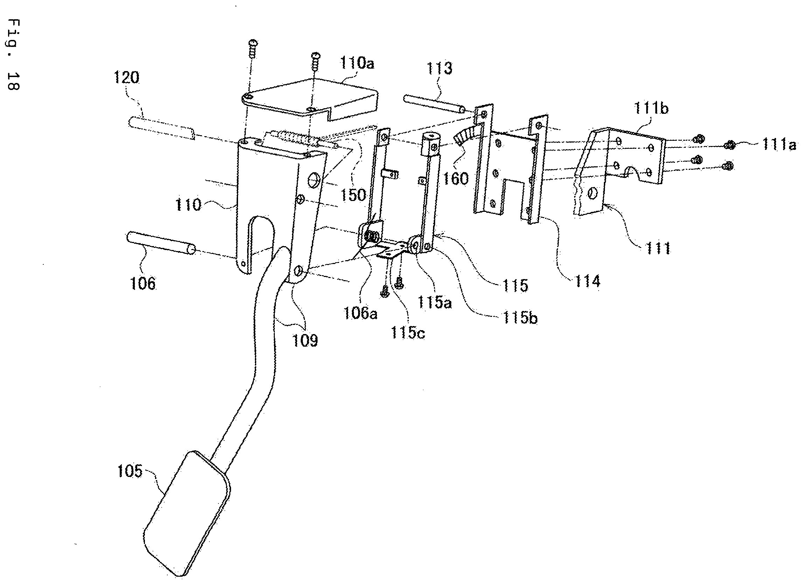

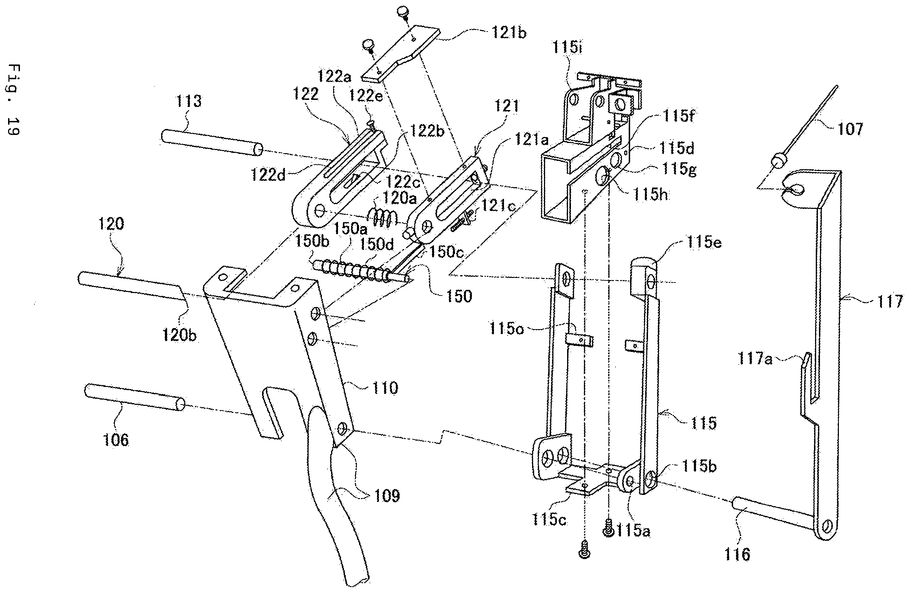

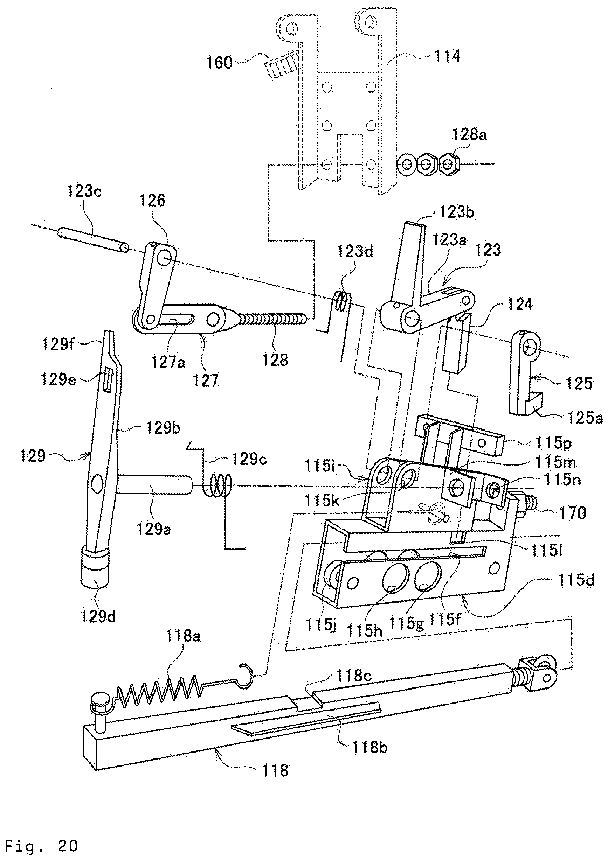

Im Zusammenhang mit den Figuren 17 bis 20 wird eine andere Ausführungsform näher erläutert. Figur 17 ist eine perspektivische Ansicht des Hauptteils der Einrichtung zur Lösung einer fehlerhaften Betätigung des Gaspedals gemäß einer anderen Ausführungsform, Figur 18 ist eine perspektivische Explosionsansicht des Hauptteils der Übertragungskomponente für Tretkraft des Gaspedals, die am ersten Metallbeschlag für Montage montiert ist, Figur 19 ist eine perspektivische Explosionsansicht des Hauptteils vom Koordinierungsmechanismus des Gaspedals, Figur 20 ist eine perspektivische Explosionsansicht über die Koppelung mit einem Element, das mit dem Führungskasten verbunden ist.

Wie in Figur 17 dargestellt, weist die Einrichtung zur Lösung einer fehlerhaften Betätigung des Gaspedals 101 auf: einen Bremsarm 104, wobei ein Bremspedal 102 an einem Endabschnitt des Bremsarms geklebt ist, und wobei der andere Endabschnitt an der Achse 103 montiert ist, und wobei der Bremsvorgang durch eine Drehbewegung vorgenommen wird; eine Übertragungskomponente für Tretkraft des Gaspedals 108, wobei das Gaspedal 105 an einem Endabschnitt der Übertragungskomponente geklebt ist, wobei ein Schwenkpunktstift106 lose in den Mittenabschnitt gesteckt ist, und wobei ein Gaspedaldraht 107 am anderen Endabschnitt verriegelt ist.

Die Übertragungskomponente für Tretkraft des Gaspedals 108 weist ein Schwenkelement 109 mit einer Seitenfläche der " 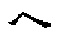 "-Form, an dessen Endschnitt das Gaspedal 105 geklebt ist, wobei der gekrümmte Abschnitt des Schwenkelements 109 drehend in den Schwenkpunktstift 106 greifen kann. Der obere Teil des gekrümmten Abschnittes bildet das erste aufrechte Element 110 aus.

Der Bremsarm 104 weist einen ersten Metallbeschlag für Montage 111, der von der Position in der Nähe vom gekrümmten Abschnitt zur Seite der Übertragungskomponente für Tretkraft des Gaspedals 108 quert, genau oberhalb des Bremspedals 103 ist ein zweiter Metallbeschlag für Montage 112a zur Montage des Hilfsbremspedals 112 demontierbar befestigt; das Hilfsbremspedal 112c, das am vorderen Ende des Bremsarms 112b geklebt ist, und das Bremspedal 102 sind nebeneinander angeordnet.

Auf der Grundlage der Figur 18 wird das am ersten Metallbeschlag für Montage montierte Element näher erläutert. Auf der vorderen Oberfläche des vorstehenden Abschnittes 111b des ersten Metallbeschlags für Montage 111 wird eine Tragstruktur 114 durch Schrauben 111a befestigt, wobei am Oberteil der Tragstruktur ein hängender Stift 113 querend angeordnet ist. Am hängenden Stift 113 ist eine Hängestruktur für Umwandlung der Tretkraft 115 gehängt, deren vordere Oberfläche im Wesentlichen U-förmig ist, und der Hängestruktur wird ermöglicht, in die Innenseite der Tragstruktur 114 zu drehen. Mit dem hängenden Stift 113 stützt die Tragstruktur 114 alle Elemente auf der Seite der in Figur 17 dargestellten Übertragungskomponente für Tretkraft des Gaspedals 108.

Am unteren Ende von zwei Seitenplatten der Hängestruktur für Umwandlung der Tretkraft 115 ist ein Lochabschnitt angeordnet, in den Lochabschnitt 115a des vorstehenden Abschnittes auf der Seite des Pedals ist ein Schwenkpunktstift 106 durchgesteckt. Die Hängestruktur für Umwandlung der Tretkraft 115 ist nebeneinander auf der vorderen Oberfläche der Tragstruktur 114 angeordnet, wobei die zwei Seitenfläche im Wesentlichen umgekehrt L-förmge sind, und wobei der Schwenkpunktstift 106 ,dessen unteres Ende in loser Passung eingesteckt ist, schwenkbar das erste aufrechte Element 110 stützt.

Am Schwenkpunktstift 106 ist eine Rückstellfeder 106a gewickelt, deren ein Ende in das erste aufrechte Element 110 greift. Mit der Rückstellfeder 106a kehrt das erste aufrechte Element 110 zur Ausgangsposition zurück, wenn das Treten des Gaspedals 105 nach dem Treten des Gaspedals gelöst wird. Auf der oberen Oberfläche des ersten aufrechten Elements 110 ist eine Deckelstruktur 110a durch Schrauben befestigt, oberhalb des Schwenkpunktstifts 106 sind eine Stiftstruktur für Pedalkoordinierung 150 und ein Verriegelungsstift 120 querend angeordnet, der einen Teil vom Koordinierungsmechanismus des Gaspedals ausbildet und als bewegliches Element dient. Ferner ist ein Zahnstab 160 mit einem sägezahnförmigen Querschnitt am seitlichen Oberteil der Tragstruktur 114 angeordnet. Am unteren Mittenabschnitt der Hängestruktur für Umwandlung der Tretkraft 115 ist eine Bodenplatte 115c angeordnet, der in Figur dargestellte Führungskasten 115d ist vertikal montiert.

Wie in Figur 17 dargestellt, steckt das zweite aufrechte Element 117, dessen obere Ende den Gaspedaldraht 107 verriegelt und am dessen unteren Ende ein Angelpunktstift des Gaspedals 116 angeordnet ist, durch den Angelpunktstift des Gaspedals 116 in loser Passung in den Lochabschnitt 115b der in Figur 18 dargestellten Hängestruktur für Umwandlung der Tretkraft 115 auf der gegenteiligen Seite zum Pedals, so dass das zweite aufrechte Element drehbar an der Hängestruktur für Umwandlung der Tretkraft 115 angeordnet ist. Das zweite aufrechte Element 117 bildet auch einen Teil der Übertragungskomponente für Tretkraft des Gaspedals 108 aus.

Im Führungskasten 115d der Hängestruktur für Umwandlung der Tretkraft 115 ist ein Führungselement 118 aufgenommen. Am vorderen vorstehenden Endabschnitt des Führungselements 118 ist eine Feder 118a montiert, deren anderes Ende am Oberteil des Führungskastens 115d befestigt ist. Das vordere Ende des Führungselements 118 ist berührend mit dem Fahrwerk 119 verbunden, die Feder 118a übt eine Kraft in die Richtung des Fahrwerks 119 aus.

An der oberen Seite des ersten aufrechten Elements 110 ist das vordere Ende des Verriegelungsstifts 120 vorstehend angeordnet, der einen Teil vom Koordinierungsmechanismus des Gaspedals ausbildet und als das bewegliche Element dient. Ferner auf der Seite des ersten aufrechten Elements 110 des Mittenabschnittes des zweiten aufrechten Elements 117 ist eine L-förmige Koordinierungsklaue 117a vorstehend angeordnet, die einen Teil vom Koordinierungsmechanismus des Gaspedals ausbildet und als Koordinierungselement des Gaspedals dient. Der Verriegelungsstift 120 des ersten aufrechten Elements 110 greift beim Treten des Gaspedals 105 in die Koordinierungsklaue 117a oder wird davon gelöst.

Auf der Grundlage der Figur 19 wird der Koordinierungsmechanismus des Gaspedals näher erläutert. Der Verriegelungsstift 120 steckt das obere Ende des ersten aufrechten Elements 110 durch, am Mittenabschnitt des Verriegelungsstifts ist eine Feder 120a gewickelt, der Verriegelungsstift weist ein vorderes Ende des Stiftes 120b auf, der dadurch ausgebildet ist, dass das vordere Ende des Querschnittes der zylindrischen Struktur in die Richtung des zweiten aufrechten Elementes 117 konisch verarbeitet wird.

Am Verriegelungsstift 120 sind ein erstes ringförmiges Element 121, dessen ein Ende befestigt ist, und ein Stellring für Tretkraft des Gaspedals 122 nebeneinander angeordnet. Am ersten ringförmigen Element 121 ist ein Langloch 121a ausgebildet, ein hängender Stift 113, an dem die Hängestruktur für Umwandlung der Tretkraft 115 gehängt wird, wird durchgesteckt, der Verriegelungsstift 120 und das erste ringförmige Element 121 sind berührend mit der Feder 120a verbunden und üben eine Kraft auf die Seite des zweiten aufrechten Elements 117 aus.

An der Spitze des ersten ringförmigen Elements 121 ist ein Plattenelement 121b mit Höhenunterschied durch Schrauben montiert. Der vorstehende Abschnitt des Plattenelements 121b bildet einen Teil des Pressabschnitts des Verriegelungsstiftes aus, wenn der vorstehende Abschnitt mit der an der Spitze der Hängestruktur für Umwandlung der Tretkraft 115 angeordneten Presswalze 115e gleitend verbunden ist, werden das erste ringförmige Element 121 und der Verriegelungsstift 120 zur Innenseite geschoben.

Am Unterteil des ersten ringförmigen Elements 121 ist ein blattförmiger Pressabschnitt 121c angeordnet, der den umwandelnden Metallbeschlag 123 drehen kann. Das erste ringförmige Element 121 bildet das koordinierende Verbindungselement aus, das koordinierende Verbindungselement verbindet passend das obere Ende des ersten aufrechten Elements 110 und hängenden Stift 113, dadurch werden die beiden dem Drehwinkel des ersten aufrechten Elements 110 entsprechend gekoppelt.

An einem Ende des Stellrings für Tretkraft des Gaspedals 122 ist ein Verriegelungsstift 120 durchgesteckt, und in den Stellring für Tretkraft des Gaspedals 122 ist der hängende Stift 113 dadurch durchgesteckt, dass der hängende Stift 113 zwischen der oberen vorstehenden Platte 122a und der unteren vorstehenden Platte 122b die querende Position ändert. Auf der unteren vorstehenden Platte 122b ist ein dreieckiger Rahmen 122c angeordnet, auf der oberen vorstehenden Platte 122a sind eine Einstellplatte 122d und ein Presselement der Einstellplatte 122e angeordnet.

Wenn der hängende Stift 113 von der Seite des Verriegelungsstiftes 120 gelöst wird und sich bewegt, stützt der dreieckige Rahmen 122c den hängenden Stift 113 und ermöglicht gleichzeitig dem hängenden Stift 113 zur tretenden Bewegung, ferner bei annähernder Bewegung aus der gegenteiligen Richtung erfolgt die tretende Bewegung des hängenden Stiftes durch Drehung.

Unterhalb des Verriegelungsstiftes 120, an dem das erste ringförmige Element 121 und der Stellring für Tretkraft des Gaspedals 122 angeordnet sind, ist eine Stiftstruktur für Pedalkoordinierung 150 querend angeordnet. Die Stiftstruktur für Pedalkoordinierung 150 weist eine Stiftstruktur 150a und ein vorderes Ende mit einer Konizität 150b auf. An der Stiftstruktur 150a sind Stabstrukturen 150c befestigt, die neben dem ersten ringförmigen Element 121 angeordnet ist und sich auf der Außenseite des ersten ringförmigen Elements 121 befindet. An der Stiftstruktur für Pedalkoordinierung 150 ist eine Feder 150d angeordnet, die ein Kraft auf eine Seite des zweiten aufrechten Elements 117 ausübt..

Am vorderen Ende 150b mit einer Konizität der Stiftstruktur für Pedalkoordinierung 150 ist ein vorderes Ende mit einer Konizität ausgebildet, das mit dem Zahnstab 160 mit einem sägezahnförmigen Querschnitt verbunden werden und sich entlang der sägezahnförmigen Steigung bewegen kann.

Der Führungskasten 115d ist durch Schrauben an der Bodenplatte 115c befestigt, die am unteren Mittenabschnitt der Hängestruktur für Umwandlung der Tretkraft 115 angeordnet ist, an der Seitenfläche des Kastens sind ein Schneidöffnungsabschnitt 115f, ein Angelpunktstiftloch des Gaspedals 115g und ein Schwenkpunktstiftloch 115h angeordnet, an der Oberplatte ist ein Stützelement 115i des umwandelnden Metallbeschlags zur Unterstützung des umwandelnden Metallbeschlags 123 angeordnet.

Auf der Grundlage der Figur 20 ist der Führungskasten näher erläutert. Im Führungskasten 115d ist eine Walze 115j angeordnet, um das Führungselement 118 rollend zu stützen. An der Seitenfläche des Führungselements 118 ist eine seitliche vorstehende Platte 118b vorstehend angeordnet und enthüllt sich aus dem Schneidöffnungsabschnitt 115f des Führungskastens 115d. Am hinteren Ende des Führungskastens 115d ist ein Stopper 170 angeordnet, der mit der Tragstruktur 114 berührend verbunden werden kann.

Am Mittenabschnitt des Führungselements 118 ist ein Kerbenabschnitt 118c ausgebildet, das andere Ende der Feder 118a, die am vorderen Endabschnitt des Führungselements 118 montiert ist, ist innerhalb des Stützelements des umwandelnden Metallbeschlags 115i befestigt.

Das Stützelements des umwandelnden Metallbeschlag 115i stützt den umwandelnden Metallbeschlag 123 und mehrere Elemente, die mit dem umwandelnden Metallbeschlag 123 gekoppelt ist, das Stützelements des umwandelnden Metallbeschlag ist durch die gekrümmte Verarbeitung des Plattenelements ausgebildet.

Der umwandelnde Metallbeschlag 123 mit einer L-förmigen Seitenfläche bildet einen horizontalen Abschnitt 123a und einen blattförmigen aufrechten Abschnitt 123b aus, der querende Abschnitte von den horizontalen Abschnitten 123a und den blattförmigen aufrechten Abschnitten 123b ist an der Welle 123c befestigt. Die Welle 123c stützt auf dem Lager 115k, das auf der Seite des Stützelements des umwandelnden Metallbeschlag 115i angeordnet ist. Das vordere Ende des horizontalen Abschnitts 123a hängt drehbar den verriegelnden Metallbeschlag 124.

Der untere Klemmabschnitt des verriegelnden Metallbeschlags 124 hängt an der Öffnung 1151, die an der oberen Seitenfläche des Führungskastens 115d angeordnet ist, der verriegelnde Metallbeschlag 124 und der Kerbenabschnitt 118c des Führungselements 118 greifen ineinander oder werden voneinander gelöst.

An der den umwandelnden Metallbeschlag 123 befestigenden Wessel 123c ist eine Spulenfeder 123d gewickelt, eine Kraft wird auf den umwandelnden Metallbeschlag 123 in die Richtung des Kerbenabschnitts 118c des Führungselements 118 ausgeübt. Ferner kann das vordere Ende des blattförmigen aufrechten Abschnittes 123b mit dem blattförmigen Pressabschnitt 121c des ersten ringförmigen Elements 121 berührend verbunden werden.

An der Außenseite des Stützelements des umwandelnden Metallbeschlag 115i der den umwandelnden Metallbeschlag 123 befestigenden Welle 123c und auf der Seite des zweiten aufrechten Elements 117 ist das obere Ende der L-förmigen Strukturen 125 befestigt, auf der Seite des Bremspedals 102 ist das obere Ende des hängenden Struktur 126 befestigt, so dass die L-förmigen Strukturen und die hängenden Strukturen nebeneinander angeordnet werden.

Am unteren Ende der L-förmigen Strukturen 125 ist eine konische vorstehende Fläche 125a ausgebildet. Das untere Ende einer hängenden Struktur 126 ist mit dem horizontalen Element 127 verbunden, mit dem vorderen Ende des horizontalen Elements 127 ist ein stabförmiges Verbindungselement 128 durch Stifte kombiniert. Das Verbindungselement 128 steckt das Unterteil der Tragstruktur 114 durch, und am vorstehenden Kopfabschnitt ist eine Mutter 128a verschraubt.

Am horizontalen Element 127 ist ein Langloch 127a ausgebildet, so dass das untere Ende der mit dem horizontalen Element 127 verbundenen hängenden Struktur 126 sich in der horizontalen Richtung bewegen kann.

Auf der äußeren Seitenfläche des Stützelements des umwandelnden Metallbeschlag 115i auf der Seite des zweiten aufrechten Elements 117 ist eine vorstehende Stützplatte 115m angeordnet, am Lochabschnitt 115n, der an der Stützplatte 115m angeordnet ist, ist ein Pressabschnitt des Verriegelungsstiftes 129 angeordnet. Ferner an der Spitze des Stützelements des umwandelnden Metallbeschlag 115i ist eine Montageplatte 115p vorstehend angeordnet, die in die hintere vorstehende Platte 115o der in Figur 19 dargestellten Hängestruktur für Umwandlung der Tretkraft 115 greift.

Somit greifen der Führungskasten 115d und das am Führungskasten 115d geklebte Stützelement des umwandelnden Metallbeschlags 115i jeweils in die Bodenplatte 115c und die hintere vorstehende Platte 115o der Hängestruktur für Umwandlung der Tretkraft 115, so dass sie und die Hängestruktur für Umwandlung der Tretkraft 115 integriert sind.

Der innere Pressabschnitt des Verriegelungsstiftes 129 weist eine Wellenstruktur 129a, die in loser Passung in den Lochabschnitt 115n gesteckt ist, eine Säulenstruktur 129b, der zum Kopfabschnitt vertikal ist, und eine Spulenfeder 129c auf, die an der Wellenstruktur 129a gewickelt ist und eine Kraft auf das obere Ende der Säulenstruktur 129b zur Außenseite ausübt. Der innere Pressabschnitt des Verriegelungsstiftes 129 ist ein Element, das um die Wellenstruktur 129a drehen kann und im Wesentlichen eine T-Form hat.

Am unteren Ende der Säulenstruktur 129b ist ein rollendes Element 129d montiert, das mit der seitlichen vorstehenden Platte 118b des Führungselements 118 oder der konischen vorstehenden Fläche der L-förmigen Struktur 125 berührend verbunden ist, so dass das obere Ende der Säulenstruktur 129b zur Innenseite dreht; am oberen Ende der Säulenstruktur 129b sind ein Langloch 129e, das zum Durchstecken der an der Stiftstruktur 150a der in Figur 19 dargestellten Stiftstruktur für Pedalkoordinierung 150 befestigten Stabstrukturen 150c dient, und ein vorderer gleitender Verbindungsabschnitt 129f angeordnet, der mit dem ersten ringförmigen Element 121 gleitend verbunden ist.

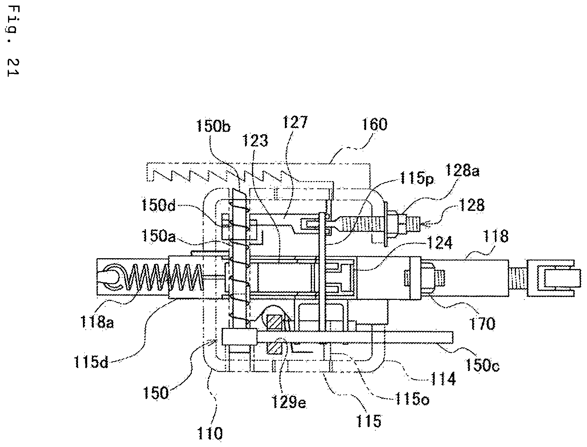

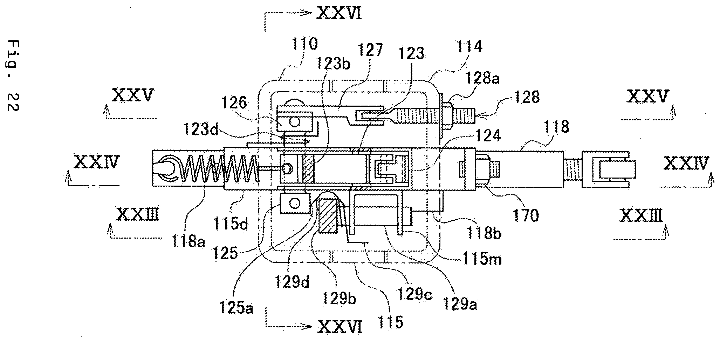

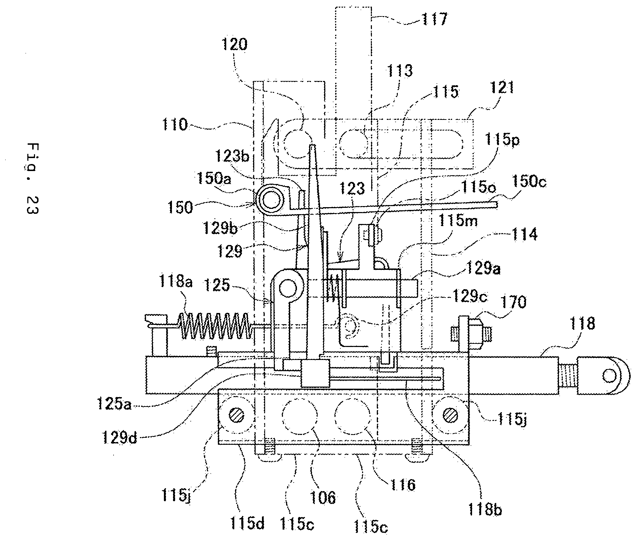

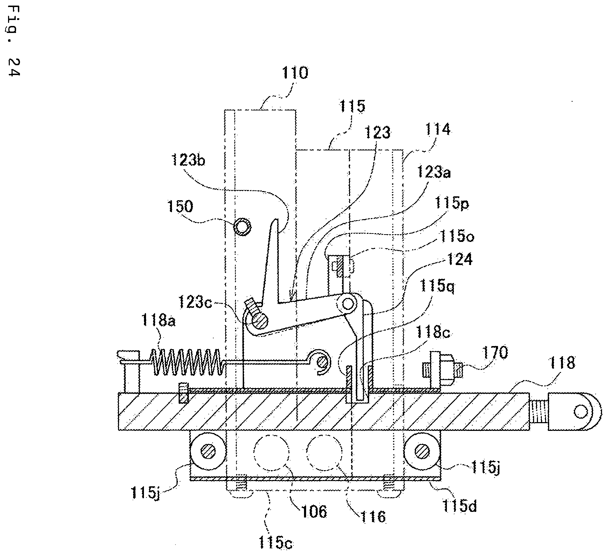

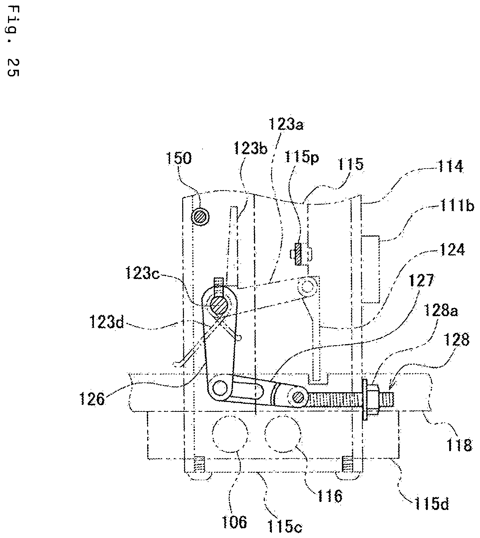

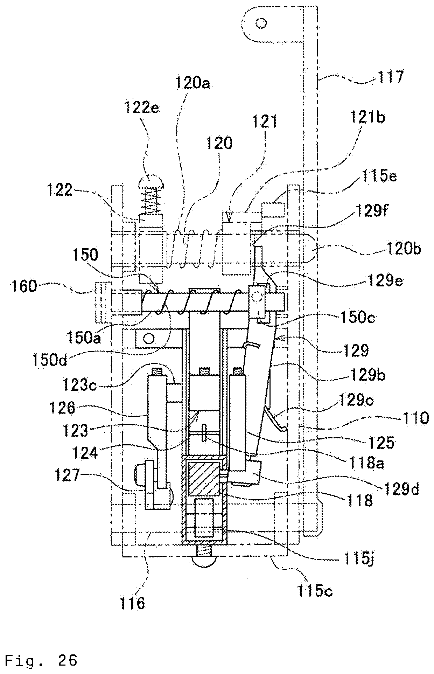

Figuren 21 bis 26 zeigen die Montageansicht der Einrichtung zur Lösung einer fehlerhaften Betätigung des Gaspedals nach Montage aller obigen Elemente. Figur 21 ist eine Draufsicht des Hauptteils der Einrichtung zur Lösung einer fehlerhaften Betätigung des Gaspedals, Figur 22 ist eine Schnittansicht des Querschnitts des unteren Teils von Figur 21. Figur 23 ist eine Schnittansicht des XXIII-XXIII-Querschnittes von Figur 22, Figur 24 ist eine Schnittansicht des XXIV-XXIV-Querschnittes von Figur 22, Figur 25 ist eine Schnittansicht des XXV-XXV-Querschnittes von Figur 22, Figur 26 ist eine Schnittansicht des XXVI-XXVI-Querschnittes von Figur 22.

Wie in Figur 21 dargestellt, ist ein vorderes Ende 150b mit einer Konizität an der Stiftstruktur 150a der Stiftstruktur für Pedalkoordinierung 150 ausgebildet. Die Stiftstruktur 150a ist dadurch querend am ersten aufrechten Element 110 angeordnet, dass sie sich zur Innenseite des ersten aufrechten Elements 110 in Querrichtung bewegt. Wenn das Langloch 129e der Säulenstruktur 129c des inneren Pressabschnitts des Verriegelungsstiftes 129 sich an der Außenseite befindet, wird keine Kraft auf die Stabstrukturen 150c ausgeübt, so dass unter der Wirkung der an der Stiftstruktur 150a gewickelten Feder 150d das vordere Ende 150d mit einer Konizität an der Innenseite des ersten aufrechten Elements 110 befindet.

Jetzt wie in Figur 22 dargestellt, fährt das rollende Element 129d des inneren Pressabschnitts des Verriegelungsstiftes 129 nicht auf die seitliche vorstehende Platte 118b des Führungselements 118, außerdem hebt die konische vorstehende Fläche 125a der L-förmigen Strukturen 125 das rollende Element 129d nicht hoch, wie in Figur 23 dargestellt. Wonach dreht das obere Ende der Säulenstruktur 129b des inneren Pressabschnitts des Verriegelungsstiftes 129 zur Außenseite, wie in Figur 26 dargestellt.

Andererseits wenn das rollende Element 129d des inneren Pressabschnittes des Verriegelungsstiftes 129 auf der seitlichen vorstehenden Platte 118b des Führungselements 118 fährt oder die konische vorstehende Fläche 125a der L-förmigen Strukturen 125 das rollende Element 129d hochschiebt und somit das Langloch 129e der Säulenstruktur 129b des inneren Pressabschnitts des Verriegelungsstiftes 129 sowie der vordere gleitende Verbindungsabschnitt 129f zur Innenseite dreht, werden die Stabstruktur 150c und das erste ringförmige Element 121 geschoben.

Wenn die Stabstrukturen 150c geschoben werden, bewegt sich die in Figur 21 dargestellte Stiftstruktur 150a zur Seite des Zahnstabs 160 mit einem sägezahnförmigen Querschnitt, das vordere Ende des vorderen Endes 150b mit einer Konizität steht zur Außenseite des ersten aufrechten Elements 110 vor, so dass das vordere Ende mit einer Konizität mit dem Zahnstab 160 verbunden ist.

Wenn die Stiftstruktur für Pedalkoordinierung 150 gegenüber dem Zahnstab 160 mit einem sägezahnförmigen Querschnitt sich zur Seite des Pedals bewegen will, wird die Bewegung wegen der Verbindung beschränkt; aber wenn sie sich zur gegenteiligen Seite zum Pedal bewegt, kann das vordere Ende mit einer Konizität 150b sich entlang der sägezahnförmigen Steigung bewegen.

Wie in Figur 24 dargestellt, greifen der untere Klemmabschnitt des am vorderen Ende des horizontalen Abschnittes 123a des umwandelnden Metallbeschlags 123 hängenden verriegelndes Metallbeschlags 124 und der Kerbenabschnitt 118c des Führungselements 118 in einander oder sie werden voneinander gelöst. Wenn der untere Klemmabschnitt zwischen dem Kerbenabschnitt 118c und der Wandstruktur 115q an der oberen Oberfläche des Führungskastens 115d beschränkt wird, kann das Führungselement 118 sich nicht bewegen.

Das Lösen zwischen dem verriegelnden Metallbeschlag 124 und dem Kerbenabschnitt 118c des Führungselements 118 wird durch die Drehung des umwandelnden Metallbeschlags 123 realisiert, aber es kann auch beim Treten des Bremspedals realisiert werden. Wie in Figur 25 dargestellt, ist ein Verbindungselement 128 unter der am vorstehenden Abschnitt 110b des ersten Metallbeschlags für Montage 111 des Bremsarms 104 befestigten Tragstruktur 114 montiert, so dass die Tragstruktur 114 im Laufe der Bewegung des Bremsarms 104 dreht und das Verbindungselement 128 und das horizontale Element 127 herausgezogen werden, wonach dreht die hängende Struktur 126 in die schräg vordere Richtung , so dass der umwandelnde Metallbeschlag 123 dreht.

Die Figur 26 zeigt den Zustand an, dass das Langloch 129e der Säulenstruktur 129b des inneren Pressabschnitts des Verriegelungsstiftes 129 berührend mit den Stabstrukturen 150c verbunden ist und der vordere gleitende Verbindungsabschnitt 129f der Säulenstruktur 129b berührend mit dem ersten ringförmigen Element 121 verbunden ist.

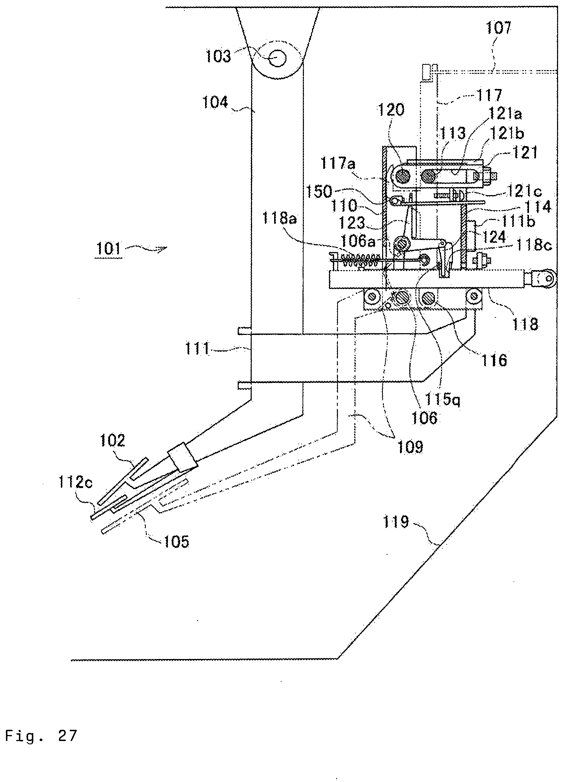

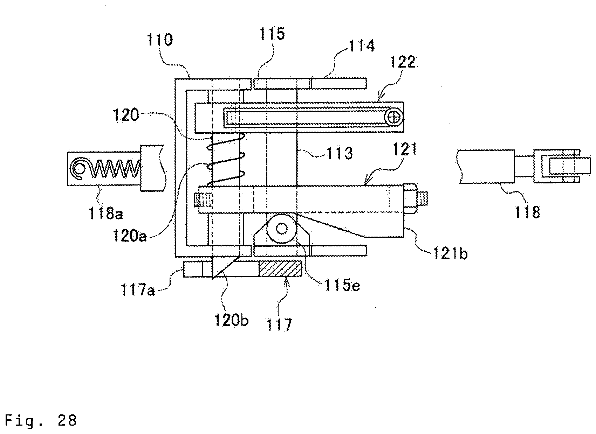

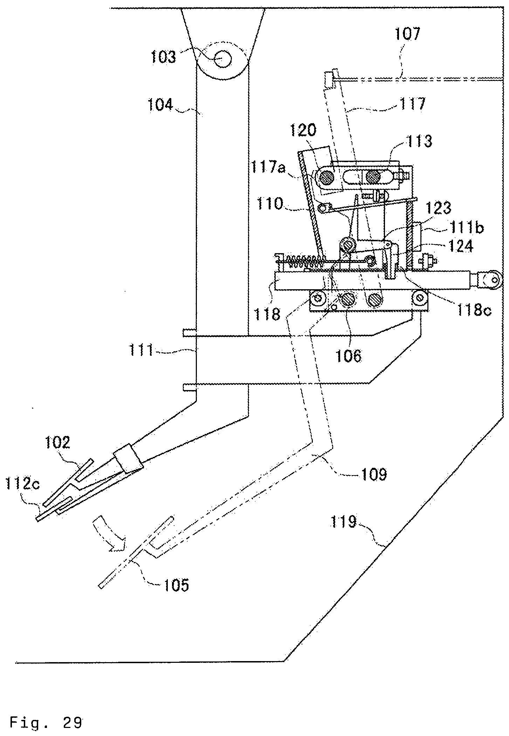

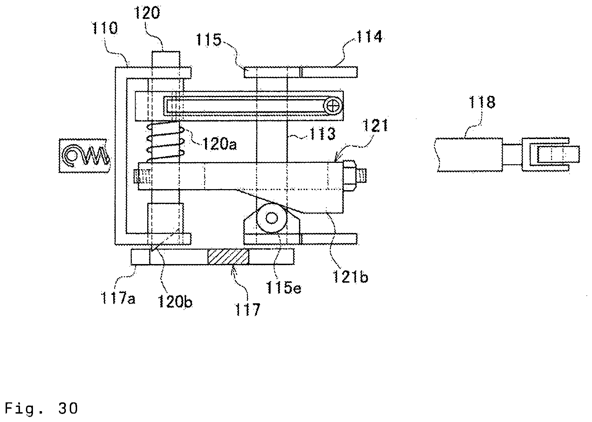

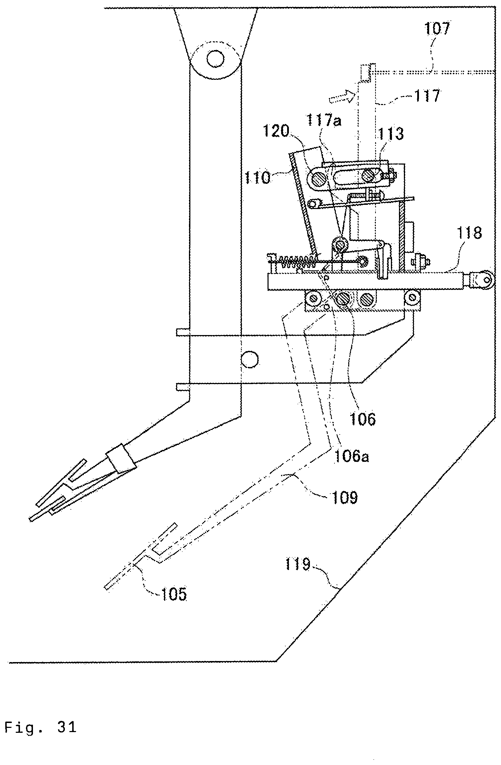

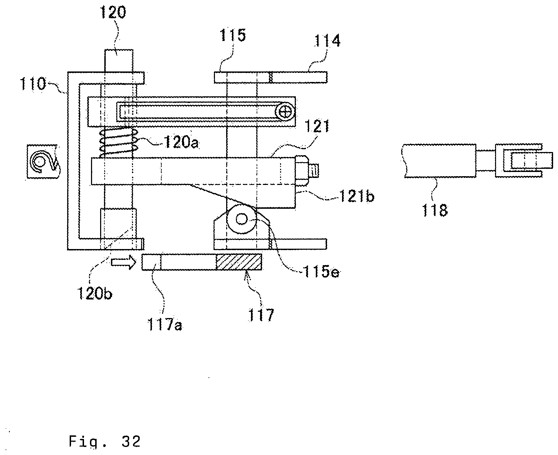

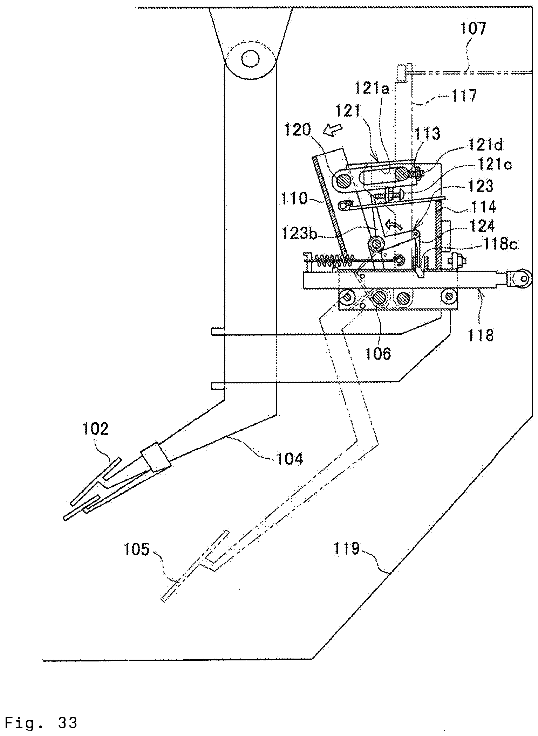

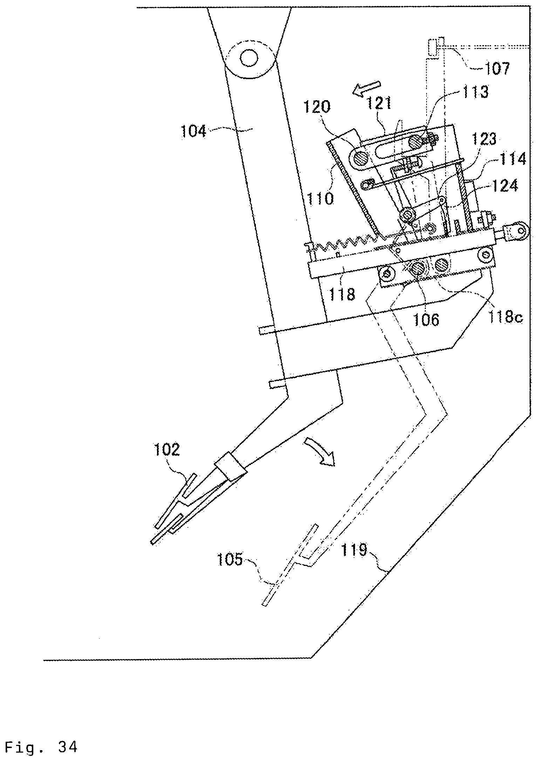

Auf der Grundlage der Figuren 27 bis 34 wird dann die Funktion der Einrichtung zur Lösung einer fehlerhaften Betätigung des Gaspedals 101 beim Treten des Gaspedals erläutert. Figur 27 ist eine schematische Seitenansicht der Einrichtung zur Lösung einer fehlerhaften Betätigung des Gaspedals vor Treten des Gaspedals. Figur 28 ist eine Draufsicht der gleichen Einrichtung zur gleichen Zeit. Figur 29 ist eine schematische Seitenansicht der gleichen Einrichtung mit einem im normalen Bereich getretenen Gaspedal. Figur 30 ist eine Draufsicht der gleichen Einrichtung mit einem im normalen Bereich getretenen Gaspedal, bei der ein Teil weggelassen wird. Figur 31 ist eine schematische Seitenansicht der gleichen Einrichtung, bei der das Treten des Gaspedals den normalen Bereich überschreitet. Figur 32 ist eine Draufsicht der gleichen Einrichtung, bei der das Treten des Gaspedals den normalen Bereich überschreitet und ein Teil weggelassen wird. Figur 33 ist eine schematische Seitenansicht der gleichen Einrichtung, bei der das Gaspedal bis zum übermäßigen Bereich getreten wird. Figur 34 ist eine schematische Seitenansicht der gleichen Einrichtung, bei der das Gaspedal bis zum übermäßigen Bereich getreten und danach mit dem Bremspedal integriert wird.

Mit der Hängestruktur für Umwandlung der Tretkraft 115 sind ein umwandelnder Metallbeschlag 123, ein mit dem umwandelnden Metallbeschlag 123 verbundener verriegelnder Metallbeschlag 124 und ein Führungselement 118 verbunden. Vor dem Treten des Gaspedals greift der untere Klemmabschnitt des verriegelnden Metallbeschlags 124 in den Kerbenabschnitt 118c des Führungselements 118, wie in Figur 27 dargestellt.

Wie in Figur 28 dargestellt, wird das vordere Ende des Stiftes 120b des Verriegelungsstifts 120 am oberen Ende des ersten aufrechten Elements 110 durchgesteckt, unter der Presskraft der Feder 120a steht das vordere Ende des Stiftes 120b zur Seite des zweiten aufrechten Elements 117 vor, so dass das vordere Ende des Stiftes 120b in die Koordinierungsklaue 117a des zweiten aufrechten Elements 117 greift.

Ferner kontaktiert das Plattenelement 121b des von der Feder 120a gepressten ersten ringförmigen Elements 121 die Presswalze 115e, die an der Spitze der Hängestruktur für Umwandlung der Tretkraft 115 angeordnet ist, aber das Plattenelement ist nicht mit dem vorstehenden Abschnitt des Plattenelements 121b berührend verbunden.

Wenn das Gaspedal 105 in diesem Zustand getreten wird, wird die Hängestruktur für Umwandlung der Tretkraft 115 durch den Schwenkpunktstift 106 zur Seite des Fahrwerks 119 geschoben, und die Wandstruktur 115q des an der Hängestruktur für Umwandlung der Tretkraft 115 befestigten Führungskastens 115d ist mit dem hängenden Abschnitt des verriegelnden Metallbeschlags 124 berührend verbunden. Der verriegelnde Metallbeschlags 124 ist von dem Kerbenabschnitt 118c des Führungselements 118 und der Wandstruktur der Hängestruktur für Umwandlung der Tretkraft 115q geklemmt, jetzt wird eine Belastung auf das Führungselement 118 in die Richtung des Fahrwerks 119 ausgeübt, aber weil das vordere Ende des Führungselements berührend mit dem Fahrwerk 119 verbunden ist und sich nicht bewegen kann, wird die Bewegung des verriegelnden Metallbeschlags 124 auch unterdrückt.

Wonach werden die Bewegungen des umwandelnden Metallbeschlags 123, der Hängestruktur für Umwandlung der Tretkraft 115, der Tragstruktur 114 und des Bremsarms 104 unterdrückt, so dass die Position des Schwenkpunktstiftes 106 im unbeweglichen Zustand ist, dadurch wird die Schwenkung des ersten aufrechten Elements 110 um den Schwenkpunktstift106 realisiert wird, wie in Figur 29 dargestellt.

Anschließend greifen die Koordinierungsklaue 117a des zweiten aufrechten Elements 117 und das vordere Ende 120b des Verriegelungsstifts 120 des ersten aufrechten Elements 110 ineinander greifen, so dass das erste aufrechte Element 110 und das zweite aufrechte Element 117 im Laufe des Tretens des Gaspedals 105 drehen.

Wenn das Gaspedal 105 im normalen Bereich getreten wird, wie in Figur 30 dargestellt, weil das vordere Ende des Stiftes 120b immer noch in die Koordinierungsklaue 117a greift, kann das zweite aufrechte Element 117 den Gaspedaldraht 107 ziehen, so dass der Start, der Anlauf, die Beschleunigung und die Fahrt mit konstanter Geschwindigkeit des Autos realisiert werden können.

Weil jetzt der Spalt zwischen den Spitzen des ersten aufrechten Elements 110 und der Hängestruktur für Umwandlung der Tretkraft 115 sich vergrößert, bewegt sich die Presswalze 115e in die Richtung des vorstehenden Abschnittes des Plattenelementes 121b, die elastische Kraft der Feder 120a wird langsam überwunden, so dass das erste ringförmige Element 121 und der Verriegelungsstift 120 sich pressend bewegen.

Wenn die gleitende Verbindung der Presswalze 115e die Nähe zum vorstehenden Abschnitt des Plattenelements 121b erreicht, taucht das vordere Ende des Stiftes 120b des Verriegelungsstiftes 120 im ersten aufrechten Element 110, so dass das Lösen zwischen dem vorderen Ende des Stiftes 120b und der Koordinierungsklaue 117a geschieht.

Auf der Grundlage der Figuren 31 und 32 wird die Situation beim Lösen zwischen den beiden näher erläutert. Wenn das vordere Ende des Stifts 120b des Verriegelungsstiftes 120 und die Koordinierungsklaue 117a voneinander gelöst werden, kehrt das zweite aufrechte Element 117 durch die Zugkraft des Gaspedaldrahts 107 zur Ausgangsposition zurück, und die Zuführung des Brennstoffs hört auf. Ferner im üblichen Tretbereich des Gaspedals werden die beiden nicht voneinander getreten, sondern das Lösen nur im Bereich in der Nähe zum größten Treten erreicht wird.

Wenn das Treten des Gaspedals 105 danach aufhört, dreht das erste aufrechte Element 110 unter der Wirkung der am Schwenkpunktstift 106 gewickelten Rückstellfeder 106a in die Richtung der Ausgangsposition. Wenn der Spalt zwischen den Spitzen des ersten aufrechten Elements 110 und der Hängestruktur für Umwandlung der Tretkraft 115 sich verkleinert, wird die Presswalze 115e der Hängestruktur für Umwandlung der Tretkraft 115 von dem vorstehenden Abschnitt des Plattenelements 121b des ersten ringförmigen Elements 121 gelöst, die Feder 120a übt eine Kraft auf den Verriegelungsstift 120 aus, so dass er wieder bis zur Außenseite des ersten aufrechten Elements 110 vorsteht.

Wenn das vordere Ende des Stiftes 120b und die Koordinierungsklaue 117a sich annähern und die Koordinierungsklaue 117a berührend mit dem konisch verarbeiteten Abschnitt verbunden ist, zieht die Feder 120a wieder zusammen und der Verriegelungsstift 120 sich bewegt, so dass der Verriegelungsstift 120 im ersten aufrechten Element 110 taucht und danach unter der Wirkung der Feder 120a vorsteht, so dass die beiden zum Ausgangszustand zurückkehren.

Wenn ein Notfall beim Autofahren passiert ist, besteht die Situation, statt des Bremspedals 102 das Gaspedals 105 weiter zu treten. Wenn das Gaspedal 105 nach der Lösung zwischen dem ersten aufrechten Element 110 und dem zweiten aufrechten Element 117 weiter getreten wird, schwenkt das erste aufrechte Element 110 weiter um den Schwenkpunktstift 106. Auf der Grundlage der Figuren 33 und 34 wird die Situation näher erläutert.

Wenn beim Treten des Gaspedals 105 die Schwenkung des ersten aufrechten Elements 110 um den Schwenkpunktstift 106 sich vergrößert, ist der am Unterteil des ersten ringförmigen Elements 121 vorstehend angeordnete blattförmige Pressabschnitt 121c als Drehungselement des umwandelnden Metallbeschlags berührend mit dem vorderen Ende des blattförmigen aufrechten Abschnitts 123b des umwandelnden Metallbeschlags 123 verbunden, so dass der umwandelnde Metallbeschlag 123 dreht.

Wenn der umwandelnde Metallbeschlag 123 und das erste aufrechte Element 110 synchron schwenken, fängt der umwandelnde Metallbeschlag 123 damit an, um das Lager 115k der Hängestruktur für Umwandlung der Tretkraft 115 zu drehen, wie in Figur 33 dargestellt, so dass der verriegelnde Metallbeschlag 124 hoch gehoben wird und der untere Klemmabschnitt und der Kerbenabschnitt 118c des Führungselements 118 voneinander gelöst werden, und die Belastung, die auf das Führungselement 118 in die Richtung des Fahrwerks 119 ausgeübt wird, verschwindet.

Jetzt ist eine innere Oberfläche des Langlochs 121a des ersten ringförmigen Elements 121 berührend mit dem hängenden Stift 113 verbunden. Auf einer inneren Innenoberfläche des Langlochs 121a steht das vordere Ende der am hinteren Ende des ersten ringförmigen Elements 121 angeordneten Einstellschraube 121d vor, um beim Drehen des ersten aufrechten Elements 110 und Lösen zwischen dem Koordinierungselement das Gaspedals und dem beweglichen Element die einzuschraubende Menge der Einstellschraube 121d dadurch einzustellen, dass das vordere Ende mit dem hängenden Stift 113 berührend verbunden ist.

Beim Fortsetzen des Zustandes der berührenden Verbindung wirkt der Koordinierungsmechanismus des Pedals, wie in Figur 34 dargestellt, bewegen sich das erste aufrechte Element 110 und die Tragstruktur 114 sowie der Bremsarm 104 auf die integrierte Weise. Nämlich wenn das Gaspedal 105 weiter getreten wird, wird es die Situation, dass das Bremspedal 102 getreten wird, so dass das Bremspedal 102 der Tretkraft des Gaspedals 105 entsprechend getreten wird, somit kann die Bremsung zuverlässig vorgenommen werden.

Den Betätigungen des ersten aufrechten Elements 110 und der Hängestruktur für Umwandlung der Tretkraft115 entsprechend, gleitet jetzt ein Ende des Führungselements 118 auf der Oberfläche des Fahrwerks 119. Eine Walze kann auch am Ende zusätzlich angeordnet werden, so dass das Ende rollen kann.

Beim Aufhören mit dem Treten des Gaspedals 105 und Abrücken des Fußes, kehrt das erste aufrechte Element 110 zur Ausgangsposition zurück, somit wird die Verbindung zwischen dem ersten ringförmigen Element 121 als koordinierendem Verbindungselement und dem hängenden Stift 113 gelöst, der umwandelnde Metallbeschlag 123, die Hängestruktur für Umwandlung der Tretkraft 115, die Tragstruktur 114, der Bremsarm 104 und das Bremspedal 102 kehren zur Ausgangsposition zurück, und die Bremskraft verringert sich und dann verschwindet. Ferner fällt der verriegelnde Metallbeschlags 124 auch ab, so dass der untere Klemmabschnitt und der Kerbenabschnitt 118c des Führungselements 118 miteinander berührend verbunden sind und ein Verriegelungszustand erzeugt wird, so dass die Bewegungen von der Hängestruktur für Umwandlung der Tretkraft 115 usw. unterdrückt werden.

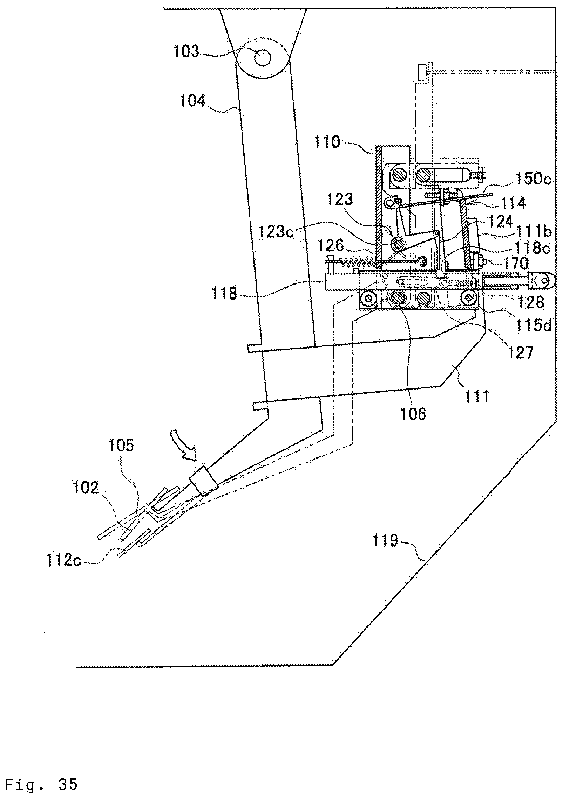

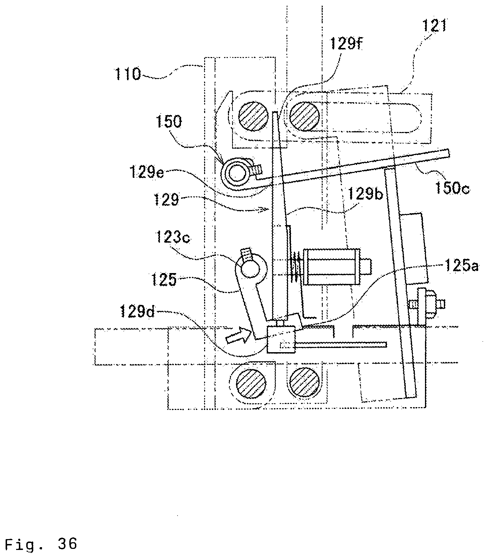

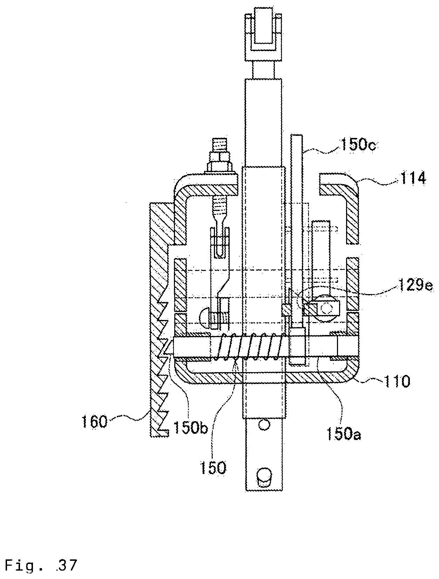

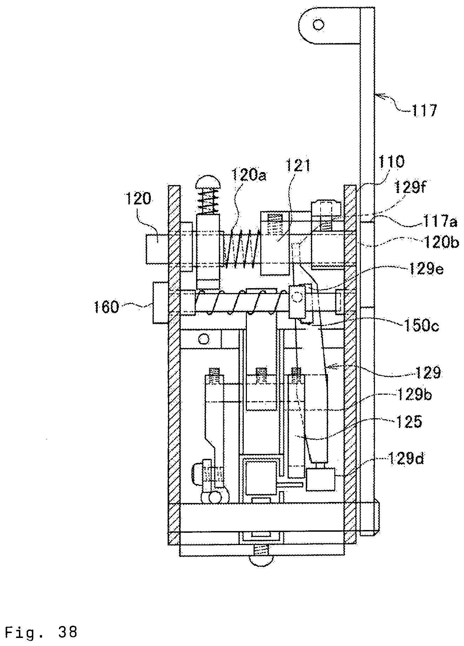

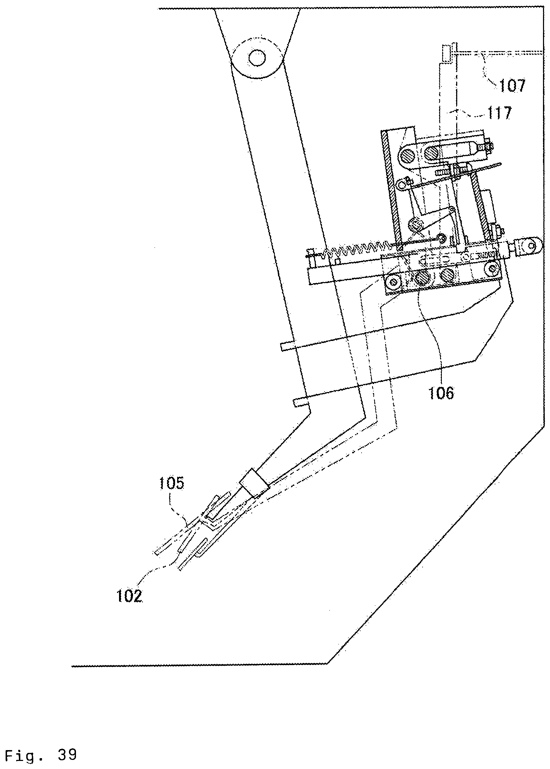

Auf der Grundlage der Figuren 35 und 39 wird die Funktion beim Treten des Bremspedals näher erläutert. Figur 35 ist eine seitliche Schnittansicht des Hauptteils auf der Seite der Übertragungskomponente für Tretkraft des Gaspedals von der Einrichtung zur Lösung einer fehlerhaften Betätigung des Gaspedals genau nach dem Treten des Bremspedals. Figur 36 ist eine Seitenansicht der Konfiguration des inneren Pressabschnittes des Verriegelungsstiftes. Figur 37 ist eine Draufsicht über die Koppelung zwischen dem Stiftstruktur für Pedalkoordinierung und dem vorstehenden Abschnitt der Tragstruktur. Figur 38 ist eine Hauptansicht über die Koppelung zwischen dem inneren Pressabschnitt des Verriegelungsstiftes, der Stiftstruktur für Pedalkoordinierung und dem vorstehenden Abschnitt der Tragstruktur. Figur 39 ist eine seitliche Schnittansicht des Hauptteils auf der Seite der Übertragungskomponente für Tretkraft des Gaspedals von der Einrichtung zur Lösung einer fehlerhaften Betätigung des Gaspedals nach dem Treten des Bremspedals.

Wenn das Bremspedal 102 getreten wird, wie in Figur 35 dargestellt, drehen der Bremsarm 104, der Metallbeschlag für Montage 111 und die an dessen vorstehendem Abschnitt 111b geklebte Tragstruktur 114 um die Achse 103. Ein Verbindungselement 128 ist unter der Tragstruktur 114 montiert, so dass die Tragstruktur 114 im Laufe mit den Bewegungen des Bremsarms 104 dreht und das Verbindungselement 128 und das horizontale Element 127 zieht, wonach dreht die hängende Struktur 126 in die schräg vordere Richtung, so dass der umwandelnde Metallbeschlag 123 dreht.

Wenn der umwandelnde Metallbeschlag 123 dreht, wird der 124 des verriegelnden Metallbeschlags gehoben, der untere Klemmabschnitt wird vom Kerbenabschnitt 118c des Führungselements 118 gelöst, und die Belastung, die auf das Führungselement 118 in die Richtung der Fahrwerks 119 ausgeübt wird, verschwindet. Somit wird die Bewegung des Führungselements 118 frei.

Wenn das Bremspedal 102 weiter getreten wird, ist die untere Rückseite der Tragstruktur 114 berührend mit dem am hinteren Ende des Führungskastens 115d angeordneten Stopper 170 verbunden, so dass die Tragstruktur 114, der umwandelnde Metallbeschlag 123, die Hängestruktur für Umwandlung der Tretkraft 115 mit dem Führungskasten 115d und das erste aufrechte Element 110 gleichzeitig mit dem Treten des Bremspedal 102 drehen.

Beim Treten des Bremspedals 102 wirkt die Drehkraft zuerst auf das Verbindungselement 128, wenn die Tragstruktur 114 durch Bewegung berührend mit dem Stopper 170 verbunden ist, wirkt die Drehkraft des Bremsarms 104 und der Tragstruktur 114 auf die Hängestruktur für Umwandlung der Tretkraft 115, so dass die Zentralisierung der Belastungen auf den umwandelnden Metallbeschlag 123 vermieden werden kann.

Wenn die Welle 123c, an der der umwandelnde Metallbeschlag 123 befestigt ist, dreht, schiebt die konische vorstehende Fläche 125a der L-förmigen Strukturen 125 das rollende Element 129d des inneren Pressabschnittes des Verriegelungsstiftes 129 hoch, wie in Figur 36 dargestellt. Wonach dreht das vordere Ende der Säulenstruktur 129b zur Innenseite.

Wie in Figur 37 dargestellt, wenn das Langloch 129e der Säulenstruktur 129b jetzt die Stabstrukturen 150c schiebt, bewegt sich die Stiftstruktur 150a zur Seite des Zahnstabs 160 mit einem sägezahnförmigen Querschnitt, das vordere Ende des vorderen Endes 150b mit einer Konizität steht zur Außenseite des ersten aufrechten Elements 110 vor, so dass das vordere Ende mit einer Konizität mit dem Zahnstab 160 verbunden ist.

Wegen der Verbindung drehen die Tragstruktur 114 und das erste aufrechte Element 110 synchron, das Bremspedal 102 und das Gaspedal 105 können gleichzeitig drehen. Wenn ferner das vordere Ende der Säulenstruktur 129b zur Innenseite dreht, überwindet der vordere gleitende Verbindungsabschnitt 129f die elastische Kraft der Feder 120a und bewegen das erste ringförmige Element 121 und den Verriegelungsstift 120 pressend. Das vordere Ende des Stiftes 120b des Verriegelungsstiftes 120 taucht im ersten aufrechten Element 110, so dass das vordere Ende des Stiftes 120b und die Koordinierungsklaue 117a voneinander gelöst werden. Wenn das vordere Ende des Stifts 120b und die Koordinierungsklaue 117a voneinander gelöst werden, kehrt das zweite aufrechte Element 117 durch die Zugkraft des Gaspedaldrahts 107 zur Ausgangsposition zurück, und die Zuführung des Brennstoffs hört auf.

In Figur 39 wird der Zustand angezeigt. Das Bremspedal 102 und das Gaspedals 105 drehen synchron, aber nicht um den Schwenkpunktstift 106, und das zweite aufrechte Element 117 kehrt zur Ausgangsposition zurück, ohne den Gaspedaldraht 107 zu ziehen, so dass nur die Bremskraft zur Bremsung wirkt.

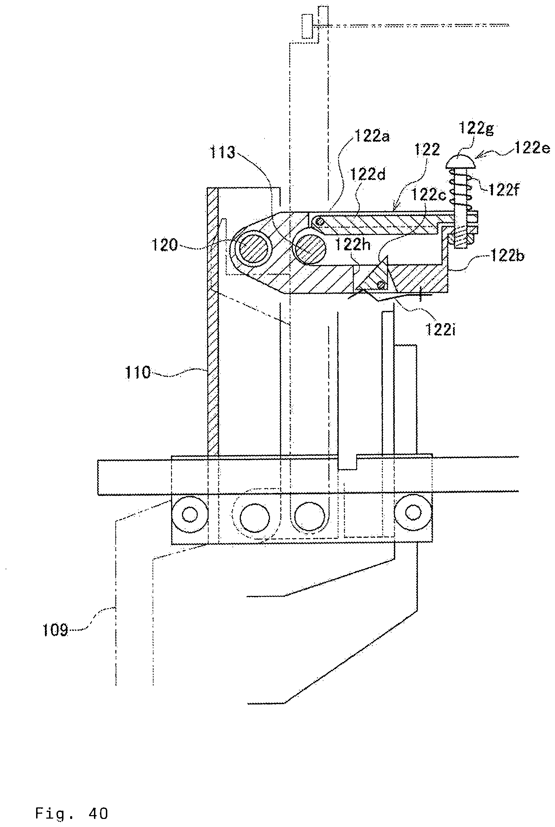

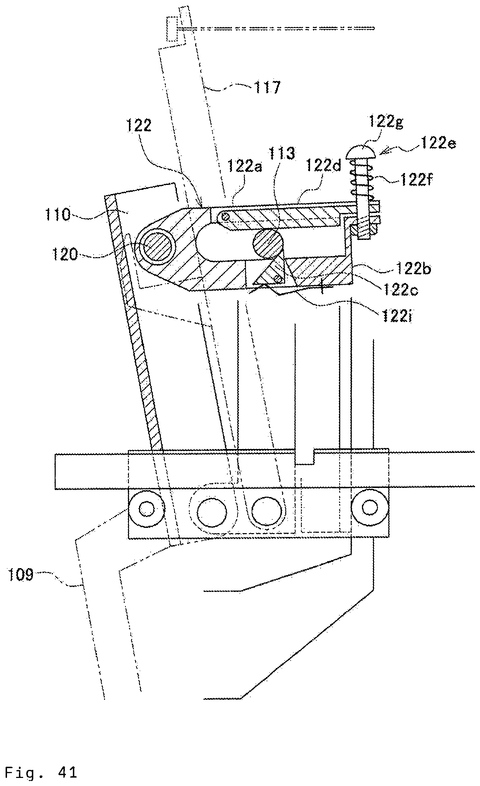

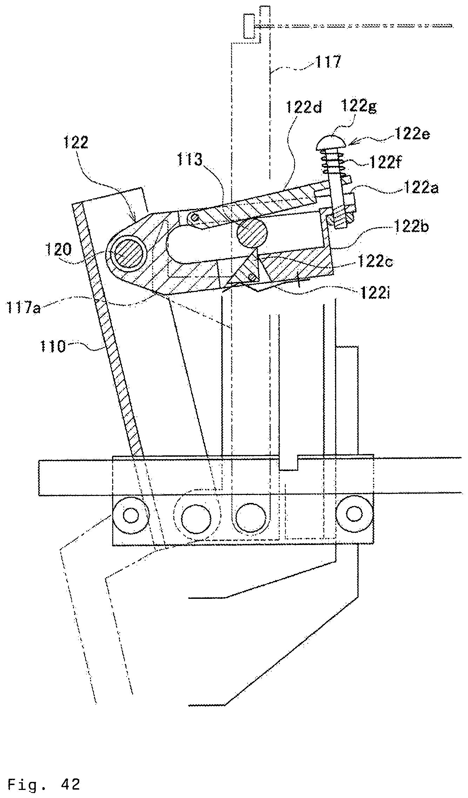

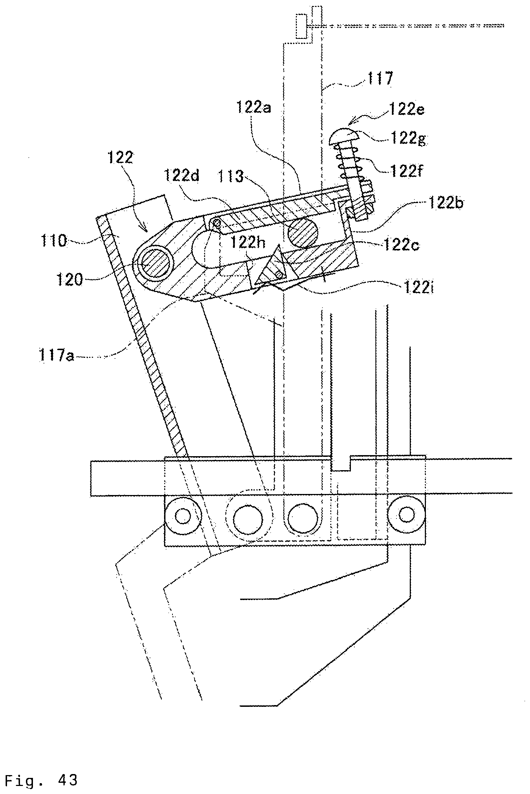

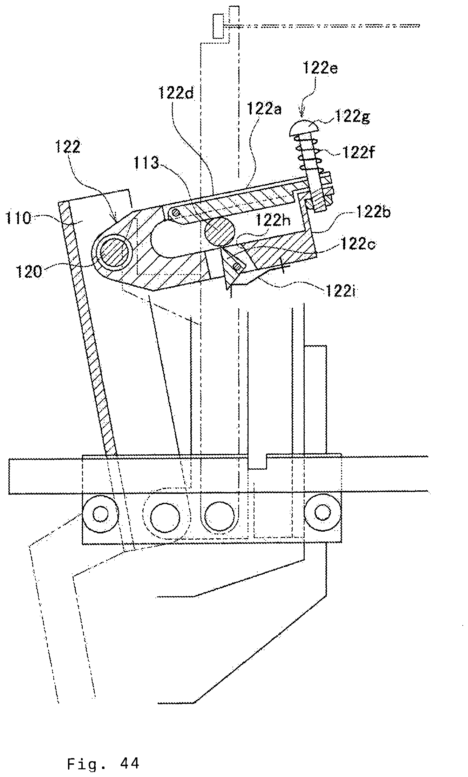

Anschließend wird die Funktion des Stellrings für Tretkraft des Gaspedals auf der Grundlage der Figuren 40 bis 44 beschrieben. Figur 40 ist eine seitliche Schnittansicht des Hauptteils des Stellrings für Tretkraft des Gaspedals vor Treten des Gaspedals. Figur 41 ist eine seitliche Schnittansicht des Hauptteils des Stellrings für Tretkraft des Gaspedals mit einem im normalen Bereich getretenen Gaspedal. Figur 42 ist eine seitliche Schnittansicht, wobei das Treten des Gaspedals den normalen Bereich überschreitet. Figur 43 ist eine seitliche Schnittansicht, wobei das Treten des Gaspedals den normalen Bereich überschreitet und das Gaspedal weiter getreten wird. Figur 44 ist eine seitliche Schnittansicht des Hauptteils des Stellrings für Tretkraft des Gaspedals nach Aufhören des Tretens des Gaspedals.

Die obere vorstehende Platte 122a des Stellrings für Tretkraft des Gaspedals 122 weist zwei gegenüberliegende Plattenelemente auf, an der Innenseite von den zwei Plattenelementen ist die Einstellplatte 122d aufgenommen. An dem äußeren Ende der Einstellplatte 122d ist ein Presselement der Einstellplatte 122e aus den Einstellschraube 122g durchgesteckt, auf der die Spulenfeder 122f gewickelt ist, und das vordere Ende der Einstellschraube 122g ist am hinteren Ende der unteren vorstehenden Platte 122b verschraubt. Durch die Einstellung der einzuschraubenden Höhe der Einstellschraube 122g wird die Hochschiebkraft der Einstellplatte 122d geändert.

Am Mittenabschnitt der unteren vorstehenden Platte 122b ist ein Lochabschnitt 122h angeordnet, wobei ein dreieckiger Rahmen 122c innerhalb des Lochabschnitts 122h aufgenommen ist. Eine Spitze des dreieckigen Rahmens 122c steht vom Lochabschnitt 122h vor, wobei die Seitenspitze am äußeren Ende durch Stifte gestützt ist. Die untere Oberfläche der inneren Seitenspitze ist mit dem die Kraft ausübenden Plattenfederelement 122i berührend verbunden.

Die Außenseite einer aus dem Lochabschnitt 122h vorstehenden Spitze ist mit der Wandfläche des Lochabschnitts berührend verbunden. Wegen des Schwenkwinkels des Schwenkelements 109 ändert sich die relative Position zwischen dem Stellring für Tretkraft des Gaspedals 122 und dem hängenden Stift 113, sie bewegen sich beim Treten des Gaspedals bis zur Position in der Figur 41, so dass der hängende Stift 113 und der dreieckige Rahmen 122c berührend miteinander verbunden sind. Der Kontaktstelle zwischen wird als der kritische Punkt eingestellt, wo der Verriegelungsstift 120 geschoben wird und das erste aufrechte Element 110 und das zweite aufrechte Element 117 voneinander gelöst werden.

Weil der hängende Stift 113 beim weiteren Treten sich nicht zur Außenseite des dreieckigen Rahmens 122c bewegen kann, steigert der hängende Stift 113 auf der Steigung des dreieckigen Rahmens 122c. Jetzt ist der hängende Stift mit der Einstellplatte 122d auf der oberen Oberfläche berührend verbunden, überwindet die elastische Kraft der Spulenfeder 122f und schiebt die Einstellplatte 122d hoch. Der Widerstand beim Hochschieben wird der Widerstand gegen das Gaspedal, wonach kann die übermäßige Tretposition des Gaspedals erkannt werden.

Wenn das Gaspedal zu diesem Zeitpunkt nicht gelöst und weiter getreten wird, bewegt sich das hängende Stift 113 und der Verriegelungsstift 120 wird geschoben, wie in Figur 42 dargestellt, so dass die Verbindung zwischen dem Verriegelungsstift 120 und der 117a Koordinierungsklaue 117a gelöst wird, und das Lösen zwischen dem ersten aufrechten Element 110 und dem zweiten aufrechten Element 117 geschieht. Wie in Figur 43 dargestellt, wenn der hängende Stift 113 den dreieckigen Rahmen 122c quert und sich bis zur Position vor dem Lochabschnitt 122h bewegt, verschwindet das Hochschieben für die Einstellplatte 122d, und sie kehrt zur Ausgangsposition zurück.

Wenn das Gaspedal dann gelöst wird und das erste aufrechte Element 110 somit in die Richtung der Ausgangsposition dreht, wie in Figur 44 dargestellt, wird der hängende Stift 113 rückwärts in den Stellring für Tretkraft des Gaspedals 122 geschoben, dann wird eine Spitze des dreieckigen Rahmens 122c von der Außenseite zur Innenseite gepresst, gleichzeitig wird das Plattenfederelement 122i gepresst. Somit kehrt die relative Position des Stellrings zur Einstellung der Tretkraft des Gaspedals 122 und des hängenden Stiftes 113 zur Ausgangsposition zurück.

Der dreieckige Rahmen 122c, den der hängende Stift 113 durchgeht, durch das mit der inneren Seitenspitze berührend verbundene Plattenfederelement 122i dreht, wobei die Außenseite einer aus dem Lochabschnitt 122h vorstehenden Spitze mit der Wandfläche des Lochabschnitts berührend verbunden ist und dann zur Ausgangsposition zurückkehrt.

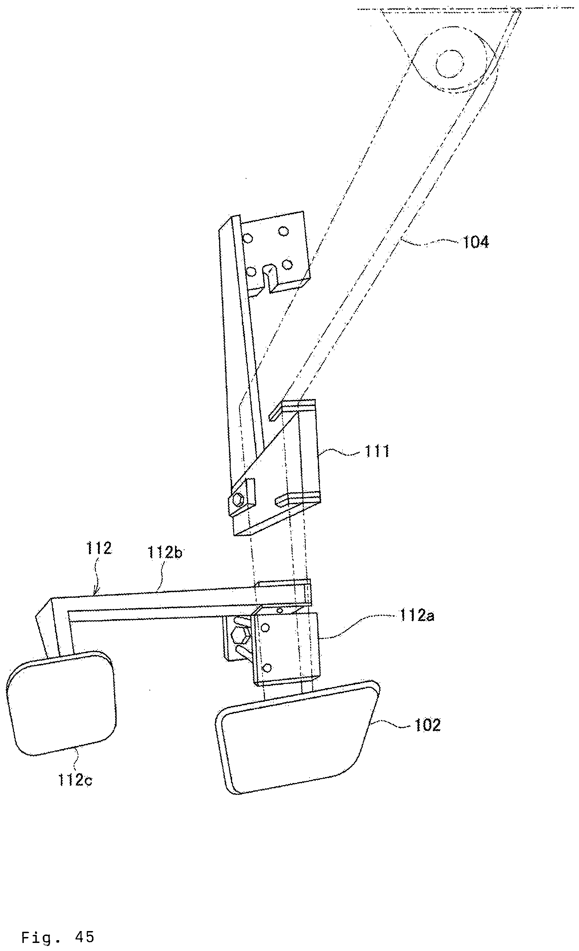

Anschließend wird die Struktur des Hilfsbremsarms auf der Grundlage der Figur 45 erläutert. Figur 45 ist eine perspektivische Ansicht des Abschnittes des Bremspedals. Der zweite Metallbeschlag für Montage 112a, der demontierbar genau oberhalb des Bremspedals 102 befestigt ist, kann die Höhe des Hilfsbremsarms 112b einstellen. Das am vorderen Ende des Hilfsbremsarms 112b geklebte Hilfsbremspedal 112c und das Bremspedal 102 sind nebeneinander angeordnet, so dass das abwechselnde Treten vom Gaspedal zum Bremspedal unnötig ist, wonach wird die Bremsbetätigung durch zwei Füße einfacher.

Als eine optionale Funktion wird ein Hilfsbremspedal für Notfall, das die One-Touch-Demontage realisieren kann, an der Position des nicht bestehenden Kupplungspedal beim automatischen Auto angeordnet, durch das gleichzeitige Treten des Bremspedals und Gaspedals im starren Zustand aus plötzlicher Panik wird das Auto möglichst schnell gehalten, so dass der Unfall minimiert oder verhindert werden kann. Der Grund liegt darin, dass ein Mechanismus zur Lösung des Gaspedalfunktion, mit dem die Tretkraft des Gaspedals beim gleichzeitigen Geschehen der Tretkraft nicht auf den Gaspedaldraht wirken kann.

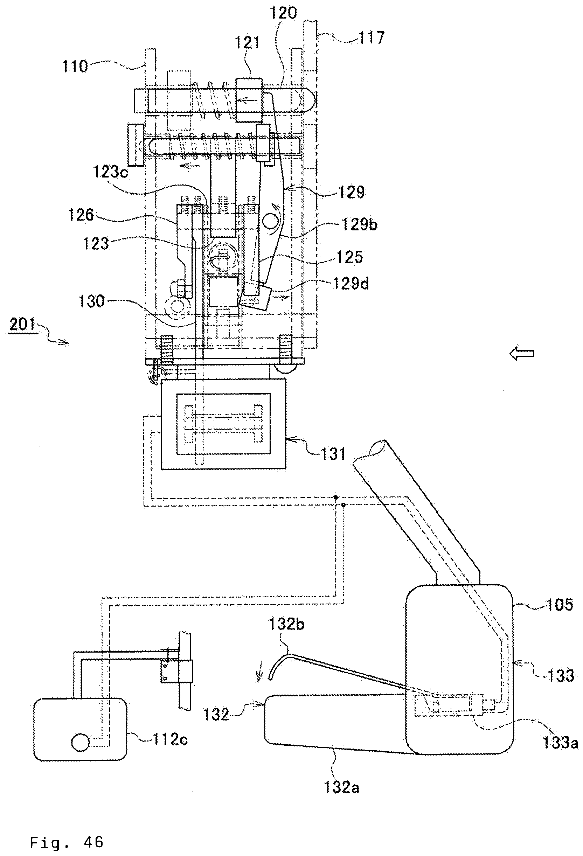

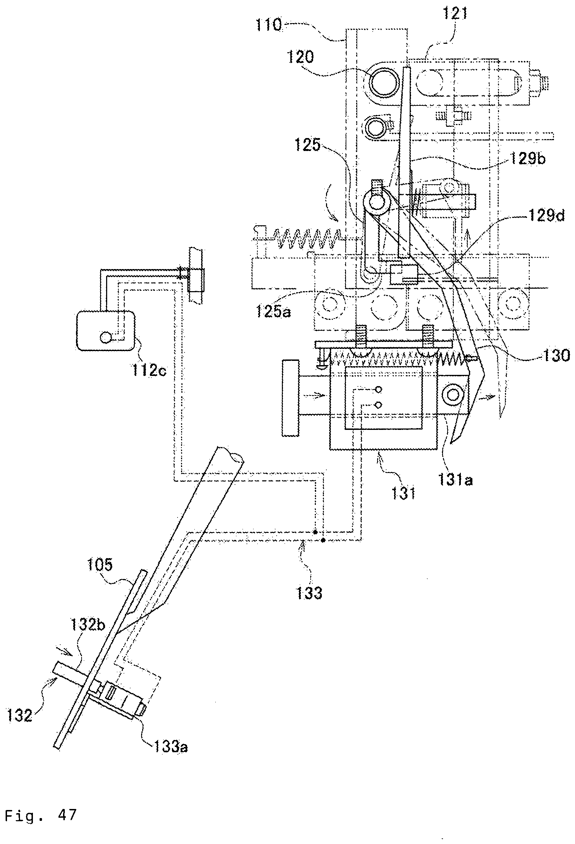

Anschließend werden die Ausführungsformen der elektrisch betätigten Einrichtung zur Lösung einer fehlerhaften Betätigung des Gaspedals in Figuren 46 und 47 angezeigt. Figur 46 ist eine schematische Ansicht des Hauptteils von der Einrichtung zur Lösung einer fehlerhaften Betätigung des Gaspedals, bei der eine Betriebsschaltung des Motors an das Gaspedal und das Hilfsbremspedal angeschlossen ist. Figur 47 ist eine Pfeilansicht, gesehen von der Pfeilrichtung.

In der Einrichtung zur Lösung einer fehlerhaften Betätigung des Gaspedals 201 gemäß der vorliegenden Ausführungsform wird der querende Abschnitt des oberen Endes und des umwandelnden Metallbeschlags 123 angrenzend an der Welle 123c angeordnet, und am unteren Ende sind L-förmige Strukturen 125 mit konischer vorstehender Fläche 125a ausgebildet, und auf der Seite der hängenden Struktur 126 sind bogenförmige Strukturen 130 nebeneinander angeordnet.

Das Oberteil der bogenförmigen Strukturen 130 ist auch an der Welle 123c befestigt, das untere Ende ist mit dem beweglichen Eisenkern 131a des Magnetventils 131 berührend verbunden. Das Magnetventil 131 und die am Seitenabschnitt des Gaspedals 105 angeordnete Bedieneinheit für Treten 132 sind durch die Betriebsschaltung 133 miteinander verbunden. Ferner ist auch eine zweite Bedieneinheit für Treten 134 am Hilfsbremspedal 112c angeordnet und mit der Betriebsschaltung 133 verbunden. Beim Pressen des Hilfsbremspedals 112c ist die zweite Bedieneinheit für Treten 134 in Betrieb, beim Betätigen des Hilfsbremspedals 112c ist das Gaspedal 105 immer nicht in Betrieb.

Die Bedieneinheit für Treten 132 weist einen über das Gaspedal 105 hinausgehenden Fußlegeabschnitt 132a und ein Stangenelement 132b auf, das durch Bewegungen des Fußes betätigt werden kann, durch die Bewegung des Stangenelements 132 wird der Schalter 133a der Betriebsschaltung 133 eingeschaltet, so dass der bewegliche Eisenkern 131a des Magnetventils 131 herausgepresst wird.

Beim Herauspressen des beweglichen Eisenkerns 131a dreht die bogenförmige Struktur 130 den umwandelnden Metallbeschlag 123, so dass die konische vorstehende Fläche 125a der L-förmigen Strukturen 125 berührend mit dem rollenden Element 129d am unteren Ende der Säulenstruktur 129b des inneren Pressabschnitts des Verriegelungsstiftes 129 verbunden ist, dadurch wird das erste aufrechte Element 121 geschoben, durch Schieben des Verriegelungsstiftes 120 geschieht das Lösen zwischen dem ersten aufrechten Element 110 und dem zweiten aufrechten Element 117.

Die obige Einrichtung zur Lösung einer fehlerhaften Betätigung des Gaspedals basiert auf dem Willen des Autofahrers, das Auto zu halten, beim falschen Treten des Gaspedals kann das Auto auch durch abwechselndes Treten des Bremspedals möglichst schnell und zuverlässig gehalten werden, so dass der Unfall wegen falschen Tretens nicht passieren wird.

Im Beschleunigungsprozess durch Treten des Gaspedals kann auch die Gaspedalfunktion durch geringes Treten des Bremspedals mit linkem Fuß gelöst werden, so dass das Gaspedal im Beschleunigungsprozess mit rechtem Fuß automatisch sich automatisch in die Funktion des Bremspedals umwandelt, deshalb ist es unnötig, mit rechtem Fuß das Bremspedal zu treten, sondern das Gaspedal und das Bremspedal gleichzeitig zu treten, um das Auto möglichst schnell zu halten, so dass der Unfall minimiert oder verhindert wird.

Ferner beim passenden Auto kann die Arbeit dadurch gemacht werden, dass das bestehende Gaspedal ausgetauscht wird. Deshalb kann es in Montagezeit von 4 bis 5 Minuten vollendet werden.

### Anwendbarkeit in der Industrie

Die Einrichtung zur Lösung einer fehlerhaften Betätigung des Gaspedals kann einfach im bestehenden üblichen Auto montiert werden, um zur Verhinderung des Autounfalls beizutragen.

**Bezugszeichen**

| | |
|---|---|
| 1 Einrichtung zur Lösung einer fehlerhaften Betätigung des Gaspedals | |
| 2 Bremspedal | |
| 3 Achse | |
| 4 Bremsarm | |
| 6 Schwenkpunktstift | |
| 7 Gaspedaldraht | |
| 5 Gaspedal | |
| 8 Übertragungskomponente für Tretkraft des Gaspedals | |
| 9 Schwenkelement | |
| 10 Erstes aufrechtes Element | |
| 11 Rückstellfeder | |
| 12 Metallbeschlag für Montage | |
| 13 Hängender Stift | |
| 14 Tragstruktur 14c Tragplatte | |
| 15 Hängestruktur für Umwandlung der Tretkraft | |
| 15d Lager 16 Angelpunktstift des Gaspedals | |
| 17 Zweites aufrechtes Element | 17a Koordinierungsklaue |
| 18 Führungselement 18a Kerbenabschnitt | |
| 19 Fahrwerk | 20 Umwandelnder Metallbeschlag |
| 20a Gabelabschnitt | 21 verriegelnder Metallbeschlag |
| 21b Abzweigabschnitt | |
| 22 Verriegelungsstift | |
| 22a Feder | |
| 23 Ringförmiges Element | |

## Patentansprüche

1. Einrichtung zur Lösung einer fehlerhaften Betätigung des Gaspedals, aufweisend:
- einen Bremsarm (brake arm), wobei ein Bremspedal an einem Endabschnitt des Bremsarms geklebt ist, und wobei der andere Endabschnitt an der Achse montiert ist, und wobei der Bremsvorgang durch eine Drehbewegung vorgenommen wird;
- eine Übertragungskomponente für Tretkraft des Gaspedals, wobei das Gaspedal an einem Endabschnitt der Übertragungskomponente geklebt ist, wobei ein Schwenkpunktstift lose in den Mittenabschnitt gesteckt ist, und wobei ein Gaspedaldraht (accelerator wire) am anderen Endabschnitt verriegelt ist;
- einen Koordinierungsmechanismus des Gaspedals (accelerator coordinate mechanism), der einen Teil der Übertragungskomponente für Tretkraft des Gaspedals ausbildet, um die Tretkraft an den Gaspedaldraht zu übertragen oder die Übertragung zu lösen;
- einen Koordinierungsmechanismus des Pedals (pedal coordinate mechanism), der ab der Lösung der Übertragung der Tretkraft die weitere Tretkraft des Gaspedals ins Treten des Bremspedals umwandelt;
- Einrichtung zur Lösung einer fehlerhaften Betätigung des Gaspedals, **dadurch gekennzeichnet, dass** der Bremsarm aufweist:
- einen Metallbeschlag für Montage (mounting hardware), der sich von dem gekrümmten Abschnitt zur Seite der Übertragungskomponente für Tretkraft des Gaspedals erstreckt;
- eine Tragstruktur, die am Metallbeschlag für Montage befestigt ist, und wobei ein hängender Stift querend am Oberteil der Tragstruktur montiert ist;
- eine Hängestruktur für Umwandlung der Tretkraft, die drehbar am hängenden Stift aufgehängt werden kann, wobei ein Schwenkpunktstift am vorstehenden Abschnitt der Pedalseite am unteren Ende der Hängestruktur querend angeordnet ist;
wobei die Übertragungskomponente für Tretkraft des Gaspedals aufweist:
- ein erstes aufrechtes Element, das drehbar am Schwenkpunktstift montiert werden kann, wobei - eine Rückstellfeder am ersten aufrechten Element angeordnet ist, mit der das Gaspedal bei der Befreiung des Gaspedals zurück zur Ausgangsposition zurückkehren kann;
- ein zweites aufrechtes Element, dessen Basisende drehbar auf der zum Pedal gegenteiligen Seite des unteren Endabschnittes der Hängestruktur für Umwandlung der Tretkraft montiert werden kann, wobei das Gaspedaldraht am oberen Ende des zweiten aufrechten Elements verriegelt ist;
und wobei der Koordinierungsmechanismus des Gaspedals aufweist:
- ein Koordinierungselement des Gaspedals, das im Mittenabschnitt des zweiten aufrechten Elements angeordnet ist;
- ein bewegliches Element, das am ersten aufrechten Element angeordnet ist, das dem Drehwinkel des ersten aufrechten Elements entsprechend ins Koordinierungselement des Gaspedals greift oder vom Koordinierungselement gelöst wird:
und wobei der Koordinierungsmechanismus des Pedals aufweist:
- ein Führungselement, das die Hängestruktur für Umwandlung der Tretkraft durchsteckt, wobei ein Ende des Führungselements mit der Wandstruktur berührend verbunden ist;
ein koordinierendes Verbindungselement, das mit dem hängenden Stift und dem Oberteil des ersten aufrechten Elements verbunden ist, damit die beiden dem Drehwinkel des ersten aufrechten Elements entsprechend ineinander greifen;
- einen umwandelnden Metallbeschlag, der auf dem Lager des Mittenabschnittes der Hängestruktur für Umwandlung der Tretkraft stützt;
- ein Drehelement für umwandelnden Metallbeschlag, der berührend bei der Drehung des koordinierenden Verbindungselements mit dem umwandelnden Metallbeschlag verbunden ist, so dass der umwandelnden Metallbeschlag dreht;
- einen verriegelnden Metallbeschlag (lock hardware), der drehbar am Umwandlungsmetallelement aufhängen kann, wobei der untere Klemmabschnitt des verriegelnden Metallbeschlags in den Kerbenabschnitt des Führungselementes greift oder vom Kerbenabschnitt gelöst wird.

2. Einrichtung zur Lösung einer fehlerhaften Betätigung des Gaspedals nach Anspruch 1, **dadurch gekennzeichnet, dass** das Führungselement auf diese Weise, dass es sich gegenüber der Hängestruktur für Umwandlung der Tretkraft bewegt, auf der Hängestruktur für Umwandlung der Tretkraft stützen kann, wobei am Führungselement eine Feder angeordnet ist, die eine Kraft auf die Seite der Wandstruktur ausübt, und wobei das Führungselement einen vorderen Endabschnitt aufweist, der berührend mit der Wandstruktur verbunden ist und gleichzeitig sich bewegt.

3. Einrichtung zur Lösung einer fehlerhaften Betätigung des Gaspedals nach Anspruch 2, **dadurch gekennzeichnet, dass** der Koordinierungsmechanismus des Gaspedals aufweist:
- ein Koordinierungselement des Gaspedals, das eine Koordinierungsklaue aufweist, die zur Seite des ersten aufrechten Elements vorsteht;
- ein bewegliches Element, das einen Verriegelungsstift aufweist, wobei der Verriegelungsstift die in die Richtung der Koordinierungsklaue ausgeübte Kraft aufnimmt und somit der Koordinierungsklaue gegenüber herauskommen und hineingehen kann;
- einen Pressabschnitt des Verriegelungsstiftes, der dem Drehwinkel des ersten aufrechten Elements entsprechend den Verriegelungsstift drücken und bewegen kann.

4. Einrichtung zur Lösung einer fehlerhaften Betätigung des Gaspedals nach Anspruch 3, **dadurch gekennzeichnet, dass** der Koordinierungsmechanismus des Pedals aufweist:
- ein koordinierendes Verbindungselement, das ein ringförmiges Element aufweist, wobei ein Ende des ringförmigen Elements am Verriegelungsstift befestigt ist, und wobei ein Langloch auf der Seite des anderen Endes ausgebildet ist;
- einen umwandelnden Metallbeschlag, an dessen Oberteil ein Gabelabschnitt als Drehstopper (stopper) angeordnet ist, wobei der Gabelabschnitt den hängenden Stift aufnimmt und zur Unterdrückung des Drehung des hängenden Stiftes um das Lager dient;
- ein Drehungselement des umwandelnden Metallbeschlags, mit dem der Bremsstift, der am Mittenabschnitt des umwandelnden Metallbeschlags vorstehend angeordnet ist, durch das Langloch durchgesteckt ist;
und wobei das ringförmige Element den Pressabschnitt des Verriegelungsstiftes ausbildet.

5. Einrichtung zur Lösung einer fehlerhaften Betätigung des Gaspedals nach Anspruch 4, **dadurch gekennzeichnet, dass** der Verrieglungsstift aus einem gekrümmten Abschnitt, der auf der Seite des freien Endes des ringförmigen Elementes ausgebildet ist, und einer oberen Innenoberfläche der Tragstruktur, die mit dem gekrümmten Abschnitt berührend verbunden ist, besteht.

6. Einrichtung zur Lösung einer fehlerhaften Betätigung des Gaspedals nach Anspruch 4, **dadurch gekennzeichnet, dass** unterhalb der Tragstruktur eine Tragplatte vorstehend angeordnet ist, die einen horizontalen Abschnitt und einen schräg aufrechten Abschnitt aufweist; wobei der verriegelnde Metallbeschlag einen Fußabschnitt aufweist, und wobei der Fußabschnitt unterhalb des unteren Klemmabschnittes, der vom Unterteil des umwandelnden Metallbeschlags hängt, auf der Tragplatte rollen kann.

7. Einrichtung zur Lösung einer fehlerhaften Betätigung des Gaspedals nach Anspruch 4, **dadurch gekennzeichnet, dass** der Drehstopper eine Vorsprungsstruktur ist, die auf der Seite der Wandstruktur der Hängestruktur für Umwandlung der Tretkraft vorstehend angeordnet ist und mit der Seite der Wandstruktur des unteren vorstehenden Abschnittes des umwandelnden Metallbeschlags berührend verbunden werden kann.

8. Einrichtung zur Lösung einer fehlerhaften Betätigung des Gaspedals nach Anspruch 3, **dadurch gekennzeichnet, dass** der Koordinierungsmechanismus des Pedals aufweist:
- ein koordinierendes Verbindungselement, das ein erstes ringförmiges Element aufweist, wobei ein Ende des ersten ringförmigen Elements am Verriegelungsstift befestigt ist, und wobei ein Langloch auf der Seite des anderen Endes ausgebildet ist und der hängende Stift somit durchgesteckt ist;
- einen umwandelnden Metallbeschlag, wobei am vorderen Ende dessen horizontalen Abschnittes ein verriegelnder Metallbeschlag gehängt ist, und wobei am hinteren Ende dessen horizontalen Abschnittes ein blattförmiger aufrechter Abschnitt angeordnet ist, und wobei der horizontalen Abschnitt und der querende Abschnitt des blattförmigen aufrechten Abschnittes an der Welle befestigt sind, um eine Kraft in die Richtung des Kerbenabschnittes des Führungselementes in der axialen Richtung auszuüben;
- ein Drehungselement des umwandelnden Metallbeschlags, das ein blattförmiger Pressabschnitt aufweist, der am Unterteil des ersten ringförmigen Elements vorstehend angeordnet ist und mit dem vorderen Ende des blattförmigen aufrechten Abschnittes berührend verbunden werden kann; und wobei ein Pressabschnitt des Verriegelungsstiftes am ersten ringförmigen Element angeordnet ist;

9. Einrichtung zur Lösung einer fehlerhaften Betätigung des Gaspedals nach Anspruch 8, **dadurch gekennzeichnet, dass** der Pressabschnitt des Verriegelungsstiftes einen oberen Pressabschnitt des Verriegelungsstiftes aufweist, der aus einem vorstehenden Abschnitt, der an der Seite des freien Endes des ersten ringförmigen Elements ausgebildet ist, und einer oberen Innenoberfläche der Hängestruktur für Umwandlung der Tretkraft, die mit dem vorstehenden Abschnitt berührend verbunden werden kann; wobei die auf dem Mittenabschnitt der Säulenstruktur vorstehende Wellenstruktur drehbar auf der Hängestruktur für Umwandlung der Tretkraft stützen kann, und wobei das untere Ende der Säulenstruktur auf einer seitlich vorstehenden Platte, die am Führungselement ausgebildet ist, rollen kann, und wobei das obere Ende der Säulenstruktur sich mit dem ersten ringförmigen Element verbindend bewegen kann; und wobei die Wellenstruktur einen inneren Pressabschnitt des Verriegelungsstiftes aufweist, und wobei am inneren Pressabschnitt des Verriegelungsstiftes eine elastische Struktur gewickelt ist, die eine Kraft auf das obere Ende nach Außen neigend ausübt.

10. Einrichtung zur Lösung einer fehlerhaften Betätigung des Gaspedals nach Anspruch 9, **dadurch gekennzeichnet, dass** der innere Pressabschnitt des Verriegelungsstiftes nebeneinander angeordnete L-förmige Strukturen aufweist, wobei das obere Ende der L-förmigen Strukturen und der querende Abschnitt des umwandelnden Metallbeschlags angrenzend an der Welle befestigt sind, und wobei eine konische vorstehende Fläche am unteren Ende ausgebildet ist; und wobei die konische vorstehende Fläche bei der Drehung der Wellen berührend mit dem unteren Ende der Säulenstruktur verbunden ist.

11. Einrichtung zur Lösung einer fehlerhaften Betätigung des Gaspedals nach Ansprüche 8 und 10, **dadurch gekennzeichnet, dass** ein stabförmiges Verbindungselement unterhalb der Tragstruktur angeordnet ist; wobei der umwandelnde Metallbeschlag nebeneinander angeordnete hängende Elemente aufweist, wobei das obere Ende des hängenden Elements und der querende Abschnitt angrenzend an der Welle befestigt sind, und wobei das untere Ende des hängenden Elements und das horizontale Element, das mit dem unteren Ende des hängenden Elements auf die Weise der Bewegung in der horizontalen Richtung verbunden werden kann, durch Stifte kombiniert sind, und wobei das horizontale Element und das Verbindungselement durch Stifte kombiniert sind.

12. Einrichtung zur Lösung einer fehlerhaften Betätigung des Gaspedals nach Ansprüche 8 und 10, **dadurch gekennzeichnet, dass** ein Stopper, der berührend mit der Tragstruktur verbunden ist, auf der Seite der Wandstruktur der Hängestruktur für Umwandlung der Tretkraft angeordnet ist.

13. Einrichtung zur Lösung einer fehlerhaften Betätigung des Gaspedals nach Ansprüche 8 und 10, **dadurch gekennzeichnet, dass** am seitlichen Oberteil der Tragstruktur ein vorstehender Abschnitt mit einem sägezahnförmigen Querschnitt angeordnet ist; wobei eine Stiftstruktur für Pedalkoordinierung querend unterhalb dem Verriegelungsstift des ersten aufrechten Elements axial bewegend angeordnet werden kann; und wobei Stabstrukturen, die an der Außenseite des ersten ringförmigen Elements nebeneinander angeordnet sind, an der Stiftstruktur befestigt sind, und wobei eine elastische Struktur, die eine Kraft auf die Seite des zweiten aufrechten Elements ausübt, an der Stiftstruktur gewickelt ist; und wobei die Stabstrukturen ins Langloch, das in der Säulenstruktur des inneren Pressabschnittes des Verriegelungsstiftes angeordnet ist, durchgesteckt ist; und wobei an der Stiftstruktur ein vorderes Ende mit einer bestimmten Konizität ausgebildet ist, das mit dem vorstehenden Abschnitt mit einem sägezahnförmigen Querschnitt verbunden werden kann, und wobei die Stiftstruktur entlang der sägezahnförmigen Steigung bewegen kann.

14. Einrichtung zur Lösung einer fehlerhaften Betätigung des Gaspedals nach Anspruch 3, **dadurch gekennzeichnet, dass** der Koordinierungsmechanismus des Gaspedals obere vorstehende Abschnitte und untere vorstehende Abschnitte ausbildet, wobei ein Ende von den oberen vorstehenden Abschnitten und den unteren vorstehenden Abschnitten den Verriegelungsstift durchsteckt, und wobei auf der Seite des anderen Endes alle hängenden Stifte auf die Weise der veränderbaren Querungsposition durchgesteckt sind; und wobei ein dreieckiger Rahmen am unteren vorstehenden Abschnitt angeordnet ist, und wobei bei der Trennung und Bewegung der hängenden Stiften vom dem Verriegelungsstift der dreieckige Rahmen die hängenden Stifte stützen kann und gleichzeitig die hängenden Stifte tretend bewegen machen kann, und wobei der dreieckige Rahmen bei der annähernden Bewegung die hängenden Stifte durch Drehung tretend bewegen machen kann; und wobei der obere vorstehende Abschnitt einen Stellring für Tretkraft des Gaspedals aufweist, und wobei der Stellring für Tretkraft des Gaspedals eine Einstellplatte, die auf der Seite des Verriegelungsstiftes durch Stifte kombiniert und bei der tretenden Bewegung der hängenden Stifte durch die Stützung des dreieckigen Rahmens hochgeschoben ist, und eine elastische Struktur, die eine Kraft auf die Seite des unterwärts vorstehenden Abschnittes des äußeren Endes der Einstellplatte ausübt und gleichzeitig das äußere Ende der Einstellplatte hält, aufweist.

15. Einrichtung zur Lösung einer fehlerhaften Betätigung des Gaspedals nach Anspruch 1, **dadurch gekennzeichnet, dass** der Bremsarm aufweist:
- einen Hilfsbremsarm, der genau oberhalb des Bremspedals montiert ist;
- ein Hilfsbremspedal, das am vorderen Ende des Hilfsbremsarms geklebt und neben dem Bremspedal angeordnet ist.

16. Einrichtung zur Lösung einer fehlerhaften Betätigung des Gaspedals nach Anspruch 10, **dadurch gekennzeichnet, dass** sie aufweist:
- eine bogenförmige Struktur, deren Oberteil an der Welle des umwandelnden Metallbeschlags befestigt ist, wobei das Unterteil mit dem beweglichen Eisenkern des Magnetventils berührend verbunden ist;
- eine Bedieneinheit für Treten, die am Seitenabschnitt des Gaspedals angeordnet ist;
- eine Betriebsschaltung, die mit der Bedieneinheit für Treten und dem Magnetventil verbunden ist.

17. Einrichtung zur Lösung einer fehlerhaften Betätigung des Gaspedals nach Anspruch 16, **dadurch gekennzeichnet, dass** der Bremsarm aufweist:
- einen Hilfsbremsarm, der genau oberhalb des Bremspedals montiert ist;
- ein Hilfsbremspedal, das am vorderen Ende des Hilfsbremsarms geklebt und neben dem Bremspedal angeordnet ist, wobei eine zweite Bedieneinheit für Treten angeordnet ist;
und wobei die zweite Bedieneinheit für Treten mit der Betriebsschaltung verbunden ist.

## Claims

1. A device for disengaging an incorrect actuation of the accelerator, comprising:
- a brake arm, wherein a brake pedal is glued to an end section of the brake arm and wherein the other end section is mounted on the axis, wherein the braking process is carried out through a rotational movement;
- a transfer component for the accelerator pedal force, wherein the accelerator is glued to an end section of the transfer component, wherein a pivot point pin is loosely inserted in the middle section, and wherein an accelerator wire is locked to the other end section;
- an accelerator coordination mechanism, which forms a part of the transfer component for the accelerator pedal force, in order to transfer the pedal force to the accelerator wire or to disengage the transfer;
- a pedal coordination mechanism, which, after disengaging the transmission of the pedal force, transforms the continuing pedal force of the accelerator into the actuation of the brake pedal;
the device for disengaging an incorrect actuation of the accelerator being **characterized in that** the brake arm comprises:
- mounting hardware, which extends from the curved section to the side of the transfer component for the accelerator pedal force;
- a support structure, which is fastened to the mounting hardware, and wherein a suspension pin is mounted transversely to the upper part of the support structure;
- a suspended structure for transforming the pedal force, which can be rotationally suspended from the suspension pin, wherein a pivot point pin is transversely arranged at the protruding section of the pedal side at the bottom end of the suspended structure;
wherein the transfer component for the accelerator pedal force comprises:
- a first vertical element, which can be rotationally mounted on the pivot point pin, wherein a return spring, by means of which the gas pedal can return to its initial position when the gas pedal is released, is arranged at the vertical element;
- a second vertical element, the base end of which can be rotatably mounted on the side of the bottom section of the suspended structure for transforming the pedal force that lies opposite to the pedal, wherein the accelerator wire is locked to the upper end of the second vertical element;
and wherein the coordination mechanism of the accelerator comprises:
- an accelerator coordination element, which is disposed in the middle section of the second vertical element;
- a mobile element, which is arranged at the first vertical element and which engages with or disengages from the accelerator coordination element in accordance with the rotational angle of the first vertical element;
and wherein the pedal coordination mechanism comprises:
- a guide element, which is inserted through the suspended structure for transforming the pedal force, wherein one end of the guide element touches and is connected with the wall structure;
a coordinating connection element, which is connected to the suspension pin and the upper part of the first vertical element, so that they mesh with each other in accordance with the rotational angle of the first vertical element;
- transformation metal hardware, which is supported on the bearing of the middle section of the suspended structure for transforming the pedal force;
- a rotation element for the transformation metal hardware, which upon rotation of the coordinating connection element touches and connects with the transformation metal hardware, so that the transformation metal hardware rotates;
- a lock hardware, which can be rotatably suspended from the transformation metal element, wherein the bottom clamping section of the lock hardware engages with the groove section of the guide element or is disengaged from the groove section.

2. The device for disengaging an incorrect actuation of the accelerator according to claim 1, **characterized in that** the guide element can be supported on the suspended structure for transforming the pedal force in such a manner that it moves relative to the suspended structure for transforming the pedal force, wherein a spring, which exerts a force on the side of the wall structure, is disposed on the guide element, and wherein the guide element comprises a front end section, which touches and connects with the wall structure and simultaneously moves.

3. The device for disengaging an incorrect actuation of the accelerator according to claim 2, **characterized in that** the accelerator coordination mechanism comprises:
- an accelerator coordination element, which comprises a coordination catch, which protrudes from the side of the first vertical element;
- a mobile element, which comprises a locking pin, wherein the locking pin receives the force exerted in the direction of the coordination catch and can thus come out of and enter the coordination catch;
- a pressing section of the locking pin, which can press against and move the locking pin in accordance with the rotational angle of the first vertical element.

4. The device for disengaging an incorrect actuation of the accelerator according to claim 3, **characterized in that** the pedal coordination mechanism comprises:
- a coordinating connection element, which comprises an annular element, wherein an end of the annular element is attached to the locking pin, and wherein an oblong hole is formed on the side of the other end;
- transformation metal hardware, at the upper end of which a forked section is disposed as a stopper, wherein the forked section receives the suspension pin and serves to suppress the rotation of the suspension pin around the bearing;
- a rotation element of the transformation metal hardware, with which the braking pin, which is disposed on the middle section of the transformation metal hardware so that it protrudes from it, is inserted through the oblong hole;
and wherein the annular element forms the pressing section of the locking pin.

5. The device for disengaging an incorrect actuation of the accelerator according to claim 4, **characterized in that** the locking pin consists of a curved section, which is formed on the side of the free end of the annular element, and of an upper inner surface of the support structure, which touches and connects with the curved section.

6. The device for disengaging an incorrect actuation of the accelerator according to claim 4, **characterized in that** a protruding support plate is disposed under the support structure, the support plate comprising a horizontal section and an inclined vertical section; wherein the lock hardware comprises a base section and wherein the base section can roll on the support plate underneath the bottom clamping section, which is suspended from the bottom part of the transformation metal hardware.

7. The device for disengaging an incorrect actuation of the accelerator according to claim 4, **characterized in that** the stopper is a protruding structure, which is disposed on the side of the wall structure of the suspended structure for transforming the pedal force, in such a manner that it protrudes from it, and can touch and connect with the side of the wall structure of the bottom protruding section of the transformation metal hardware.

8. The device for disengaging an incorrect actuation of the accelerator according to claim 3, **characterized in that** the pedal coordination mechanism comprises:
- a coordinating connection element, which comprises a first annular element, wherein an end of the first annular element is attached to the locking pin, and wherein an oblong hole is formed on the side of the other end and the suspension pin is inserted through it;
- a transformation metal hardware, wherein a lock hardware is suspended from the front end of its horizontal section, and wherein a leaf-shaped vertical section is disposed at the rear end of its horizontal section, and wherein the horizontal section and the transverse section of the leaf-shaped vertical section are fastened to the shaft, in order to exert a force in the direction of the groove section of the guide element in the axial direction;
- a rotation element of the transformation metal hardware, which comprises a leaf-shaped pressing section, which is disposed at the bottom part of the first annular element, in such a manner that it protrudes from it, and which can touch and connect with the front end of the leaf-shaped vertical section; and wherein a pressing section of the lock pin is disposed at the first annular element.

9. The device for disengaging an incorrect actuation of the accelerator according to claim 8, **characterized in that** the pressing section of the lock pin comprises an upper pressing section of the lock pin, which consists of a protruding section, which is formed on the side of the free end of the first annular element, and of an upper inner surface of the suspended structure for transforming the pedal force, which touches and connects with the protruding section; wherein the shaft structure protruding from the middle section of the pillar structure can be rotatably supported on the suspended structure for transforming the pedal force, and wherein the bottom end of the pillar structure can roll on a laterally protruding plate, which is formed on the guide element, and wherein the upper end of the pillar structure can connect and move along with the first annular element; and wherein the shaft structure comprises an inner pressing section of the lock pin, and wherein an elastic structure, which exerts an outwardly inclining force onto the upper end, is wound at the inner pressing section of the lock pin.

10. The device for disengaging an incorrect actuation of the accelerator according to claim 9, **characterized in that** the inner pressing section of the lock pin comprises adjacently disposed L-shaped structures, wherein the upper end of the L-shaped structures and the transverse section of the transformation metal hardware are contiguously fastened to the shaft, and wherein a conically protruding surface is formed at the bottom end; and wherein the conically protruding surface touches and connects with the bottom end of the pillar structure when the shaft rotates.

11. The device for disengaging an incorrect actuation of the accelerator according to claims 8 and 10, **characterized in that** a rod-shaped connection element is disposed underneath the support structure ; wherein the transformation metal hardware comprises adjacently disposed suspended elements, wherein the upper end of the suspended element and the transverse section are contiguously fastened to the shaft, and wherein the bottom end of the suspended element and the horizontal element, which can be connected with the bottom end of the suspended element as a result of a movement in the horizontal direction, are combined by way of pins, and wherein the horizontal element and the connection element are combined by pins.

12. The device for disengaging an incorrect actuation of the accelerator according to claims 8 and 10, **characterized in that** a stopper, which touches and connects with the support structure, is disposed on the side of the wall structure of the suspended structure for transforming the pedal force.

13. The device for disengaging an incorrect actuation of the accelerator according to claims 8 and 10, **characterized in that** a protruding section with a sawtooth-shaped cross-section is disposed at the lateral upper part of the support structure; wherein a pin structure for coordinating the pedals can be transversely disposed underneath the lock pin of the first vertical element so that it moves axially; and wherein rod structures, which are adjacently disposed at the outer side of the first annular element, are fastened to the pin structure, and wherein an elastic structure, which exerts a force on the side of the second vertical element, is wound at the pin structure; and wherein the rod structures are inserted into the oblong hole, which is arranged in the pillar structure of the inner pressing structure of the lock pin; and wherein a front end with a certain conicity, which can be connected to the protruding section with a sawtooth-shaped cross-section, is formed at the pin structure, and wherein the pin structure can move along the sawtooth-shaped slope.

14. The device for disengaging an incorrect actuation of the accelerator according to claim 3, **characterized in that** the accelerator coordination mechanism forms upper protruding sections and bottom protruding sections, wherein an end of the upper protruding sections and of the bottom protruding sections are inserted in the lock pin, and wherein all the suspended pins are inserted on the side of the other end, in such a manner that their traversing position can be changed; and wherein a triangular frame is disposed at the bottom protruding section, and wherein when the suspended pins are separated and moved away from the lock pin, the triangular frame can support the suspended pins and can simultaneously move the suspended pins in a pedaled manner, and wherein, in the case of an approach movement, the triangular frame can move the suspended pins in a pedaled manner by rotation; and wherein the upper protruding section comprises an adjustment ring for the accelerator pedal force, and wherein the adjustment ring for the accelerator pedal force comprises an adjustment plate, which is connected by pins on the side of the lock pin and, when a pedaling movement of the suspended pins occurs, is moved upwards due to being supported by the triangular frame, and an elastic structure, which exerts a force on the side of the downward protruding section of the outer end of the adjustment plate and simultaneously retains the outer end of the adjustment plate.

15. The device for disengaging an incorrect actuation of the accelerator according to claim 1, **characterized in that** the brake arm comprises:
- an auxiliary brake arm, which is mounted exactly above the brake pedal;
- an auxiliary brake pedal, which is glued at the front end of the auxiliary brake arm and is disposed next to the brake pedal.

16. The device for disengaging an incorrect actuation of the accelerator according to claim 10, **characterized in that** it comprises:
- an arc-shaped structure, the upper part of which is fastened to the shaft of the transformation metal hardware, wherein the bottom part touches and connects with the mobile iron core of the magnetic valve;
- an actuation unit for stepping, which is disposed at the lateral section of the accelerator;
- an operation circuit, which is connected to the actuation unit for stepping and with the magnetic valve.

17. The device for disengaging an incorrect actuation of the accelerator according to claim 16, **characterized in that** the brake arm comprises:
- an auxiliary brake arm, which is mounted exactly above the brake pedal;
- an auxiliary brake pedal, which is glued to the front end of the auxiliary brake arm and is disposed next to the brake pedal, wherein a second actuation unit for stepping is provided;
and wherein the second actuation unit for stepping is connected with the operation circuit.

## Revendications

1. Dispositif pour la libération de la pédale d'accélérateur en cas d'actionnement erroné, comportant :
- un bras de frein, où une pédale de frein est collée à une section d'extrémité du bras de frein, et où l'autre section d'extrémité est montée sur l'axe, et où le processus de freinage est réalisé par le biais d'un mouvement de rotation ;
- un composant de transfert de la force d'appui sur la pédale d'accélérateur, où la pédale d'accélérateur est collée à une section d'extrémité du composant de transfert, où une goupille de point de pivotement est insérée de manière lâche dans la section médiane, et où un fil de pédale d'accélérateur est verrouillé à l'autre section d'extrémité ;
- un mécanisme de coordination de la pédale d'accélérateur qui forme une partie du composant de transfert de la force d'appui sur la pédale d'accélérateur, pour transférer la force d'appui au fil de pédale d'accélérateur ou interrompre le transfert ;
- un mécanisme de coordination de la pédale, qui après l'interruption du transfert de la force d'appui, transforme la force ultérieure d'appui sur la pédale d'accélérateur en un appui sur la pédale de frein ;
le dispositif pour la libération de la pédale d'accélérateur en cas d'actionnement erroné étant **caractérisé en ce que** :
le bras de frein comporte :
- une ferrure de montage qui s'étend de la section courbée au côté du composant de transfert de la force d'appui sur la pédale d'accélérateur ;
- une structure de support qui est fixée à la ferrure de montage et où une goupille suspendue est montée de manière transversale à la partie supérieure de la structure de support ;
- une structure suspendue pour la transformation de la force d'appui, qui est suspendue de manière rotative à la goupille suspendue, où une goupille de point de pivotement au niveau de la section en saillie du côté de la pédale est disposée transversalement à l'extrémité inférieure de la structure suspendue ;
où le composant de transfert de la force d'appui sur la pédale d'accélérateur comporte :
- un premier élément vertical qui peut être monté de manière rotative sur la goupille de point de pivotement, où un ressort de rappel, au moyen duquel la pédale d'accélérateur peut retourner à sa position initiale lors de la libération de la pédale d'accélérateur, est disposé au niveau du premier élément vertical ;
- un second élément vertical dont l'extrémité de base peut être montée de manière rotative sur le côté de la section d'extrémité inférieure de la structure suspendue pour la transformation de la force d'appui qui est opposé à la pédale, où le fil de pédale d'accélérateur est verrouillé à l'extrémité supérieure du second élément vertical ;
et où le mécanisme de coordination de la pédale d'accélérateur comporte :
- un élément de coordination de la pédale d'accélérateur disposé dans la section médiane du second élément vertical ;
- un élément mobile qui est disposé au niveau du premier élément vertical et qui, en fonction de l'angle de rotation du premier élément vertical, vient en prise avec l'élément de coordination de la pédale d'accélérateur ou est détaché de l'élément de coordination ;
et où le mécanisme de coordination de la pédale comporte :
- un élément de guidage qui est inséré à travers la structure suspendue pour la transformation de la force d'appui, où une extrémité de l'élément de guidage est jointe par contact avec la structure de paroi ;
un élément de connexion de coordination qui est joint avec la goupille suspendue et la partie supérieure du premier élément vertical, afin qu'elles viennent en prise l'une avec l'autre en fonction de l'angle de rotation du premier élément vertical ;
- une ferrure de transformation qui s'appuie sur le palier de la section médiane de la structure suspendue pour la transformation de la force d'appui ;
- un élément rotatif pour la ferrure de transformation qui est joint par contact avec la ferrure de transformation lors de la rotation de l'élément de connexion de coordination, de sorte que la ferrure de transformation tourne ;
- une ferrure de verrouillage qui peut être suspendue de manière rotative à l'élément métallique de transformation, où la section de serrage inférieure de la ferrure de verrouillage vient en prise avec la section de rainure de l'élément de guidage ou est détachée de la section de rainure.

2. Dispositif pour la libération de la pédale d'accélérateur en cas d'actionnement erroné selon la revendication 1, **caractérisé en ce que** l'élément de guidage peut s'appuyer sur la structure suspendue pour la transformation de la force d'appui de telle manière qu'il se déplace relativement à la structure suspendue pour la transformation de la force d'appui, où un ressort qui exerce une force sur le côté de la structure de paroi est disposé sur l'élément de guidage, et où l'élément de guidage comporte une section d'extrémité avant qui est jointe par contact à la structure de paroi et se déplace simultanément.

3. Dispositif pour la libération de la pédale d'accélérateur en cas d'actionnement erroné selon la revendication 2, **caractérisé en ce que** le mécanisme de coordination de la pédale d'accélérateur comporte :
- un élément de coordination de la pédale d'accélérateur qui comporte une griffe de coordination qui fait saillie du côté du premier élément vertical ;
- un élément mobile qui comporte une goupille de verrouillage, où la goupille de verrouillage absorbe la force exercée dans la direction de la griffe de coordination et peut ainsi rentrer et sortir de la griffe de coordination ;
- une section de pression de la goupille de verrouillage qui peut appuyer sur la goupille de verrouillage et la déplacer en fonction de l'ange de rotation du premier élément vertical.

4. Dispositif pour la libération de la pédale d'accélérateur en cas d'actionnement erroné selon la revendication 3, **caractérisé en ce que** le mécanisme de coordination de la pédale comporte :
- un élément de connexion de coordination qui comporte un élément annulaire, où une extrémité de l'élément annulaire est fixée à la goupille de verrouillage, et où un trou oblong est formé sur le côté de l'autre extrémité ;
- une ferrure de transformation avec une section en fourche disposée au niveau de sa partie supérieure et servant de butoir d'arrêt de la rotation, où la section en fourche reçoit la goupille suspendue et sert à inhiber la rotation de la goupille suspendue autour du palier ;
- un élément de rotation de la ferrure de transformation avec lequel la goupille de frein, qui est disposée de manière saillante au niveau de la section médiane de la ferrure de transformation, est insérée à travers le trou oblong ;
et où l'élément annulaire forme la section de pression de la goupille de verrouillage.

5. Dispositif pour la libération de la pédale d'accélérateur en cas d'actionnement erroné selon la revendication 4, **caractérisé en ce que** la goupille de verrouillage consiste en une section courbe formée sur le côté de l'extrémité libre de l'élément annulaire, et une surface intérieure supérieure de la structure de support qui est jointe par contact avec la section courbe.

6. Dispositif pour la libération de la pédale d'accélérateur en cas d'actionnement erroné selon la revendication 4, **caractérisé en ce qu'**une plaque de support qui comporte une section horizontale et une section obliquement verticale est disposée de manière saillante sous la structure de support ; où la ferrure de verrouillage comporte une section de base, et où la section de base peut rouler sur la plaque de support sous la section de serrage inférieure qui est suspendue à la partie inférieure de la ferrure de transformation.

7. Dispositif pour la libération de la pédale d'accélérateur en cas d'actionnement erroné selon la revendication 4, **caractérisé en ce que** le butoir d'arrêt de la rotation est une structure en saillie qui est disposée de manière saillante sur le côté de la structure de paroi de la structure suspendue pour la transformation de la force d'appui et peut être jointe par contact avec le côté de la structure de paroi de la section saillante inférieure de la ferrure de transformation.

8. Dispositif pour la libération de la pédale d'accélérateur en cas d'actionnement erroné selon la revendication 3, **caractérisé en ce que** le mécanisme de coordination de la pédale comporte :
- un élément de connexion de coordination qui comporte un premier élément annulaire, où une extrémité du premier élément annulaire est fixée à la goupille de verrouillage, et où un trou oblong est formé sur le côté de l'autre extrémité, dans lequel la goupille suspendue est insérée ;
- une ferrure de transformation, où une ferrure de verrouillage est suspendue à l'extrémité avant de sa section horizontale, et où une section verticale en forme de feuille est disposée au niveau de l'extrémité arrière de sa section horizontale, et où la section horizontale et la section traversante de la section verticale en forme de feuille sont fixées à l'arbre, afin d'exercer une force dans la direction de la section de rainure de l'élément de guidage dans la direction axiale ;
- un élément de rotation de la ferrure de transformation qui comporte une section de pression en forme de feuille qui est disposée de manière saillante au niveau de la partie inférieure du premier élément annulaire et peut être jointe par contact avec l'extrémité avant de la section verticale en forme de feuille ;
et où une section de pression de la goupille de verrouillage est disposée au niveau du premier élément annulaire.

9. Dispositif pour la libération de la pédale d'accélérateur en cas d'actionnement erroné selon la revendication 8, **caractérisé en ce que** la section de pression de la goupille de verrouillage comporte une section de pression supérieure de la goupille de verrouillage, qui se compose d'une section saillante qui est formée au niveau du côté de l'extrémité libre du premier élément annulaire, et d'une surface intérieure supérieure de la structure suspendue pour la transformation de la force d'appui qui peut être jointe par contact avec la section saillante ; où la structure d'arbre faisant saillie au niveau de la section médiane de la structure de colonne peut s'appuyer de manière rotative sur la structure suspendue pour la transformation de la force d'appui, et où l'extrémité inférieure de la structure de colonne peut rouler sur une plaque faisant saillie latéralement formée au niveau de l'élément de guidage, et où l'extrémité supérieure de la structure de colonne peut se déplacer en liaison avec le premier élément annulaire ; et où la structure d'arbre comporte une section de pression intérieure de la goupille de verrouillage, et où une structure élastique, qui exerce une force inclinée vers l'extérieur sur l'extrémité supérieure, est enroulée au niveau de la section de pression intérieure de la goupille de verrouillage.

10. Dispositif pour la libération de la pédale d'accélérateur en cas d'actionnement erroné selon la revendication 9, **caractérisé en ce que** la section de pression intérieure de la goupille de verrouillage comporte des structures en forme de L disposées les unes à côté des autres, où l'extrémité supérieure des structures en forme de L et la section traversante de la ferrure de transformation sont fixées à l'arbre de manière adjacente, et où une surface saillante conique est formée à l'extrémité inférieure ; et où la surface saillante conique est jointe par contact avec l'extrémité inférieure de la structure de colonne lors de la rotation des arbres.

11. Dispositif pour la libération de la pédale d'accélérateur en cas d'actionnement erroné selon les revendications 8 et 10, **caractérisé en ce que** un élément de connexion en forme de tige est disposé sous la structure de support ; où la ferrure de transformation comporte des éléments suspendus disposés les uns à côté des autres, où l'extrémité supérieure de l'élément suspendu et la section traversante sont fixées à l'arbre de manière adjacente, et où l'extrémité inférieure de l'élément suspendu et l'élément horizontal, qui peut être joint avec l'extrémité inférieure de l'élément suspendu par le mouvement dans la direction horizontale, sont combinés par des goupilles, et où l'élément horizontal et l'élément de connexion sont combinés par des goupilles.

12. Dispositif pour la libération de la pédale d'accélérateur en cas d'actionnement erroné selon les revendications 8 et 10, **caractérisé en ce qu'**un butoir, qui est joint par contact à la structure de support, est disposé sur le côté de la structure de paroi de la structure suspendue pour la transformation de la force d'appui.

13. Dispositif pour la libération de la pédale d'accélérateur en cas d'actionnement erroné selon les revendications 8 et 10, **caractérisé en ce qu'**une section saillante avec une section transversale en forme de dents de scie est disposée au niveau du côté supérieur latéral de la structure de support ; où une structure de goupille pour la coordination des pédales peut être disposée de manière traversante sous la goupille de verrouillage du premier élément vertical de manière axialement mobile ; et où des structures de tige, qui sont disposées les unes à côté des autres au niveau du côté extérieur du premier élément annulaire, sont fixées à la structure de goupille, et où une structure élastique, qui exerce une force sur le côté du second élément vertical, est enroulée au niveau de la structure de goupille ; et où les structures de tige sont insérées à travers le trou oblong qui est disposé dans la structure de colonne de la section de pression intérieure de la goupille de verrouillage ; et où une extrémité avant présentant une certaine conicité, qui peut être connectée avec la section saillante de section transversale en forme de dents de scie, est formée au niveau de la structure de goupille, et où la structure de goupille peut se déplacer le long de l'inclinaison en forme de dents de scie.

14. Dispositif pour la libération de la pédale d'accélérateur en cas d'actionnement erroné selon la revendication 3, **caractérisé en ce que** le mécanisme de coordination de la pédale d'accélérateur forme des sections saillantes supérieures et des sections saillantes inférieures, où une extrémité des sections saillantes supérieures et des sections saillantes inférieures est traversée par la goupille de verrouillage, et où toutes les goupilles suspendues sont insérées du côté de l'autre extrémité de telle manière que leur position de traversée est modifiable ; et où un cadre triangulaire est disposé au niveau de la section inférieure, et où lors de la séparation et du déplacement des goupilles suspendues par rapport à la goupille de verrouillage, le cadre triangulaire peut porter les goupilles suspendues et peut simultanément déplacer les goupilles suspendues conformément à l'actionnement de la pédale, et où lors du déplacement en approche des goupilles suspendues, le cadre triangulaire peut déplacer les goupilles suspendues par rotation conformément à l'actionnement de la pédale ; et où la section saillante supérieure comporte un anneau d'ajustement de la force d'appui de la pédale d'accélérateur, et où l'anneau d'ajustement de la force d'appui de la pédale d'accélérateur comporte une plaque d'ajustement combinée par des goupilles avec le côté de la goupille de verrouillage et poussée vers le haut, lors du mouvement des goupilles suspendues conformément à l'actionnement de la pédale, en raison de leur appui sur le cadre triangulaire, ainsi qu'une structure élastique qui exerce une force sur le côté de la section saillante vers le bas de l'extrémité extérieure de la plaque d'ajustement et simultanément maintient l'extrémité extérieure de la plaque d'ajustement.

15. Dispositif pour la libération de la pédale d'accélérateur en cas d'actionnement erroné selon la revendication 1, **caractérisé en ce que** le bras de frein comporte :
- un bras de frein auxiliaire monté juste au-dessus de la pédale de frein ;
- une pédale de frein auxiliaire collée à l'extrémité avant du bras de frein auxiliaire et disposée à côté de la pédale de frein.

16. Dispositif pour la libération de la pédale d'accélérateur en cas d'actionnement erroné selon la revendication 10, **caractérisé en ce qu'**il comporte :
- une structure en forme d'arc dont la partie supérieure est fixée à l'arbre de la ferrure de transformation, où la partie inférieure est jointe au noyau de fer mobile de la vanne magnétique ;
- une unité de commande pour l'appui disposée au niveau de la section latérale de la pédale d'accélérateur ;
- un circuit de fonctionnement connecté à l'unité de commande pour l'appui et la vanne magnétique.

17. Dispositif pour la libération de la pédale d'accélérateur en cas d'actionnement erroné selon la revendication 16, **caractérisé en ce que** le bras de frein comporte :
- un bras de frein auxiliaire monté juste au-dessus de la pédale de frein ;
- une pédale de frein auxiliaire collée à l'extrémité avant du bras de frein auxiliaire et disposée à côté de la pédale de frein, une seconde unité de commande pour l'appui étant prévue ;
et où la seconde unité de commande pour l'appui est connectée au circuit de fonctionnement.
